# EUROPEAN PATENT APPLICATION

(11) **EP 4 565 002 A1**
(43) Date of publication of application: **04.06.2025**
(21) Application number: 23845210.6
(22) Date of filing: 29.06.2023
(51) Int. Cl.: H04W 88/04

(54) **DATA TRANSMISSION METHOD AND APPARATUS IN TERMINAL-TO-TERMINAL RELAY SCENARIO, AND DEVICE AND MEDIUM**

(30) Priority: 29.07.2022 CN 202210908719
(71) Applicant: Datang Mobile Communications Equipment Co., Ltd., Beijing 100085 (CN)
(72) Inventor: ZHAO, Yali, Beijing 100085 (CN); ZHANG, Huiying, Beijing 100085 (CN)
(74) Representative: Cabinet Nony
(86) International application number: PCT/CN2023/104078
(87) International publication number: WO 2024/021997

(57) **Abstract**

Disclosed in the present disclosure are a data transmission method and apparatus in a UE-to-UE relay scenario, and a device and a medium, which are used for realizing the establishment of an end-to-end connection between a first UE and a second UE by means of a relay UE and performing data transmission by means of the end-to-end connection. In the embodiments of the present disclosure, the method comprises: a relay UE supporting a U2U relay function receives an SL-SRB transmitted from a first UE through a first PC5 RLC channel; and in the case that specific indication information associated with the SL-SRB represents that the SL-SRB is an end-to-end SL-SRB, or, in the case that the first PC5 RLC channel is a PC5 RLC channel dedicated to the end-to-end SL-SRB, the relay UE forwardsthe SL-SRB to a second UE by means of a second PC5 RLC channel, wherein the first UE is any one of two UEs which need to establish an end-to-end connection by means of the relay UE, and the second UE is an end-to-end target communication opposite end of the first UE. On this basis, the aims of a first UE and a second UE establishing an end-to-end connection by means of a relay UE, and performing data transmission by means of the end-to-end connection can be realized.

## Description

### CROSS-REFERENCE TO RELATED APPLICATIONS

The present disclosure claims priority to Chinese Patent Application No. 202210908719.X, filed to the China National Intellectual Property Administration on July 29, 2022 and entitled "Data Transmission Method and Apparatus in UE-to-UE Relay Scenario, and Device and medium", the entire content of which is incorporated herein by reference.

### TECHNICAL FIELD

The present disclosure relates to the technical field of wireless communications, in particular to data transmission methods and devices for a user equipment (UE)-to-UE relay scenario, a data transmission apparatus and a medium.

### BACKGROUND

In the technical field of wireless communication, communication methods between terminals generally include cellular network communication and sidelink communication.

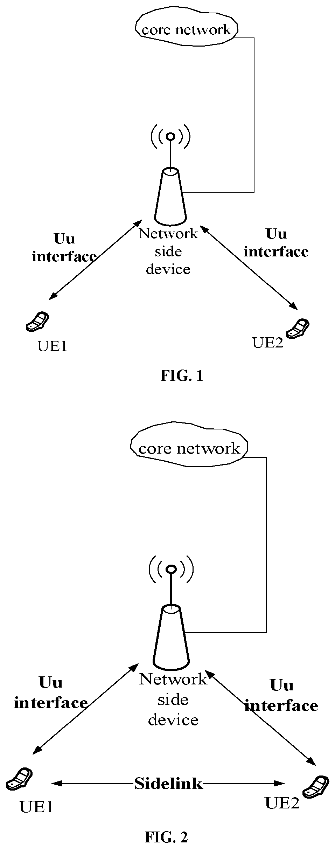

Referring to FIG. 1, in the cellular network communication, the communication between terminals may be implemented through a Uu interface between the terminal and the network side device, wherein the Uu interface is an interface between a user equipment (UE) and a network side device (such as a base station). As shown in FIG. 1, when UE1 communicates with UE2, the UE1 transmits a signal to the network side device through the Uu interface, and the network side device forwards the received signal to the UE2.

Referring to FIG. 2, in sidelink communication, adjacent terminals may transmit data through a sidelink (also referred as to a bypass, a sidelink or a PC5), wherein the wireless interface corresponding to the sidelink is called a sidelink interface (also referred as to a bypass interface, a sidelink interface or a PC5 interface).

However, the sidelink communication method described above may only implement data transmission between adjacent terminals. That is, it is difficult to implement data transmission between two terminals that are far apart from each other since the coverage range of the sidelink interface in sidelink communication is small.

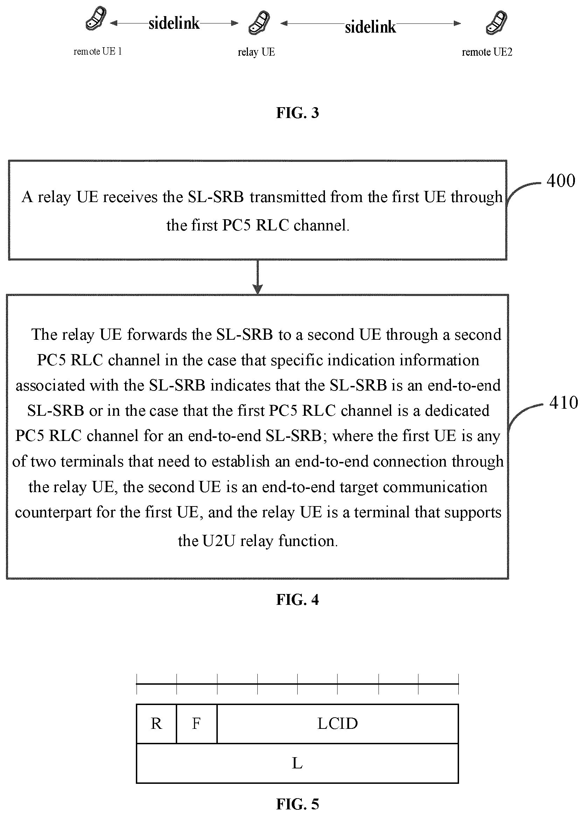

Furthermore, in order to extend the coverage of the sidelink interface for data transmission between two terminals that are far apart from each other, a relay terminal (also referred as to a relay UE or U2U relay) may be introduced in theory. Two terminals that communicate through the relay terminal may be also referred as to remote terminals. As shown in FIG. 3, a terminal (i.e., remote UE1) performs data transmission with a terminal (i.e., remote UE2) through the relay terminal, wherein the sidelink interface may be used both between the remote UE1 and the relay terminal, and between the relay terminal and the remote UE2.

However, there is no specific method for establishing an end-to-end connection between terminals through a relay terminal to implement end-to-end data transmission between terminals.

### SUMMARY

Embodiments of the present disclosure provide data transmission methods and devices for a user equipment (UE)-to-UE relay scenario, a data transmission apparatus and a medium, used for implementing that a first UE and a second UE establish an end-to-end connection through a relay UE, and perform data transmission through the end-to-end connection.

Specific technical solutions provided by the embodiments of the present disclosure are as follows.

In a first aspect, the present disclosure provides a data transmission method for a user equipment (UE)-to-UE relay scenario, including:
receiving a sidelink-signaling radio bearer (SL-SRB) transmitted from a first UE through a first sidelink interface (PC5) radio link control (RLC) channel; and
forwarding the SL-SRB to a second UE through a second PC5 RLC channel in case that specific indication information associated with the SL-SRB indicates that the SL-SRB is an end-to-end SL-SRB or in case that the first PC5 RLC channel is a specified PC5 RLC channel for an end-to-end SL-SRB;
wherein the first UE is any of two terminals that need to establish an end-to-end connection through the relay UE, the second UE is an end-to-end target communication counterpart of the first UE, and the relay UE is a terminal that supports a UE-to-UE relay (U2U relay) function.

Alternatively, the SL-SRB is used for carrying a PC5-signaling (PC5-S) and/or a PC5-radio resource control (RRC) signaling.

Alternatively, the PC5-RRC signaling is an end-to-end signaling transmitted between the first UE and the second UE after the end-to-end connection between the first UE and the second UE is established and before the receiving or transmitting of a PC5-RRC reconfiguration message is completed;
the PC5-RRC reconfiguration message is a PC5-RRC signaling used for configuring a first mapping relationship between a first PC5 RLC channel and a second PC5 RLC channel after the end-to-end connection between the first UE and the second UE is established;
the first PC5 RLC channel comprises a PC5 RLC channel between the relay UE and the first UE, and the second PC5 RLC channel comprises a PC5 RLC channel between the relay UE and the second UE; and
the first mapping relationship includes one-to-one mapping, many-to-one mapping, or many-to-many mapping.

Alternatively, the specific indication information includes any one of the following:
indication information carried in a media access control (MAC) subheader corresponding to a MAC sub-protocol data unit (subPDU) carrying the SL-SRB;
indication information carried in a media access control (MAC) sub-protocol data unit (subPDU) carrying the SL-SRB;
indication information carried in a sidelink shared channel (SL-SCH) subheader corresponding to a media access control (MAC) protocol data unit (PDU) carrying the SL-SRB; or
indication information carried in sidelink control information (SCI) transmitted through a sidelink interface between the relay UE and the first UE, or through a sidelink interface between the relay UE and the second UE.

Alternatively, the indication information includes at least one of the following:
information used to indicate that data corresponding to the SL-SRB needs to be forwarded;
information used to indicate that data corresponding to the SL-SRB is data corresponding to the end-to-end SL-SRB;
information used to indicate that the data corresponding to the SL-SRB needs to be processed by an adaptation layer.

Alternatively, in the case that the first PC5 RLC channel is the dedicated PC5 RLC channel for the end-to-end SL-SRB, the method further includes:
determining, by the relay UE, the dedicated PC5 RLC channel used when the SL-SRB is transmitted at a sidelink interface based on preconfiguration information; or
determining, by the relay UE, the dedicated PC5 RLC channel used when the SL-SRB is transmitted at a sidelink interface based on a protocol agreement; or
determining, by the relay UE itself, and broadcasting the dedicated PC5 RLC channel used when the SL-SRB is transmitted at a sidelink interface;
wherein a number of the dedicated PC5 RLC channels includes one or more.

Alternatively, before forwarding, by the relay UE, the SL-SRB to the second UE through the second PC5 RLC channel, the method further comprises:
performing, by the relay UE, adaptation layer processing on the data corresponding to the SL-SRB.

Alternatively, performing, by the relay UE, adaptation layer processing on the data corresponding to the SL-SRB includes:
after the relay UE receives the data corresponding to the SL-SRB from a RLC layer of a sidelink interface between the relay UE and the first UE, submitting, by the relay UE, the data corresponding to the SL-SRB to an adaptation layer, and after performing at least one of the following processing operations in the adaptation layer, submitting the data corresponding to the SL-SRB to a RLC layer of a sidelink interface between the relay UE and the second UE:
removing, by the relay UE, an original adaptation layer header for the data corresponding to the SL-SRB, and then adding a new adaptation layer header, wherein the new adaptation layer header at least comprises: identifier information of the SL-SRB, and identifier information of the second UE; and
determining, by the relay UE, a second mapping relationship between a first PC5 RLC channel and a second PC5 RLC channel, and in the adaptation layer, performing mapping between the first PC5 RLC channel and the second PC5 RLC channel based on the second mapping relationship for the SL-SRB;
wherein the second mapping relationship is one-to-one mapping, many-to-one mapping, or many-to-many mapping.

Alternatively, before forwarding, by the relay UE, the SL-SRB to the second UE through the second PC5 RLC channel, the method further comprises:
determining, by the relay UE, a second mapping relationship between the first PC5 RLC channel and the second PC5 RLC channel, and in a radio link control (RLC) layer, performing mapping between the first PC5 RLC channel and the second PC5 RLC channel based on the second mapping relationship for the SL-SRB;
wherein the second mapping relationship is one-to-one mapping, many-to-one mapping, or many-to-many mapping.

Alternatively, determining, by the relay UE, the second mapping relationship includes any of the following:
determining the second mapping relationship based on preconfiguration information;
determining the second mapping relationship based on a protocol agreement;
determining the second mapping relationship based on a notification of the first UE, and notifying the second UE of the second mapping relationship;
determining the second mapping relationship based on a notification of the second UE, and notifying the first UE of the second mapping relationship; or
determining, by the relay UE itself, the second mapping relationship, and notifying the first UE and/or the second UE of the second mapping relationship through a sidelink interface.

Alternatively, in the case that the relay UE receives the SL-SRB transmitted from the first UE through the first PC5 RLC channel, the first target layer 2 (L2) destination used by the first UE is a target L2 destination of the relay UE; and
in the case that the relay UE forwards the SL-SRB to the second UE through the second PC5 RLC channel, the second target L2 destination used by the relay UE is a target L2 destination of the second UE.

Alternatively, the target L2 destination of the second UE is obtained by the relay UE by any of the following:
receiving, by a media access control (MAC) layer of the relay UE, indication information transmitted from a higher layer, wherein the indication information carries the target L2 destination of the second UE; or
receiving, by the relay UE, the target L2 destination of the second UE transmitted from the first UE through a sidelink.

Alternatively, receiving, by the relay UE, the target L2 destination of the second UE transmitted from the first UE through the sidelink includes any one of the following:
receiving, by the relay UE, a media access control (MAC) protocol data unit (PDU) transmitted from the first UE through a sidelink interface, and obtaining the target L2 destination of the second UE from a sidelink shared channel (SL-SCH) subheader of the MAC PDU;
receiving, by the relay UE, a media access control (MAC) protocol data unit (PDU) transmitted from the first UE through a sidelink interface, and obtaining the target L2 destination of the second UE from a MAC sub-PDU of the MAC PDU;
receiving, by the relay UE, a PC5-radio resource control (RRC) signaling or a media access control layer (MAC) control element (CE) through a sidelink interface, and obtaining the target L2 destination of the second UE from the PC5-RRC signaling or the MAC CE; or
receiving sidelink control information (SCI) indication through a sidelink, and obtaining the target target L2 destination of the second UE from the SCI.

In a second aspect, the present disclosure further provides a data transmission method for a user equipment (UE)-to-UE relay scenario, including:
determining, by a first UE, a sidelink-signaling radio bearer (SL-SRB) to be transmitted; and
transmitting, by the first UE, the SL-SRB to a relay UE through a first sidelink interface (PC5) radio link control (RLC) channel;
wherein the SL-SRB is associated with specific indication information, the specific indication information is used for indicating that the SL-SRB is forwarded to a second UE through a second PC5 RLC channel in the case that the SL-SRB is an end-to-end SL-SRB, or in the case that the first PC5 RLC channel is a dedicated PC5 RLC channel for an end-to-end SL-SRB, the dedicated PC5 RLC channel for the end-to-end SL-SRB is used for indicating that the SL-SRB is forwarded to a second UE through a second PC5 RLC channel in the case that the SL-SRB is an end-to-end SL-SRB;
wherein the first UE is any of two terminals that need to establish an end-to-end connection through the relay UE, the second UE is an end-to-end target communication counterpart of the first UE, and the relay UE is a terminal that supports a UE-to-UE relay (U2U relay) function.

Alternatively, the SL-SRB is used for carrying a PC5-signaling (PC5-S) and/or a PC5-radio resource control (RRC) signaling.

Alternatively, the PC5-RRC signaling is an end-to-end signaling transmitted between the first UE and the second UE after the end-to-end connection between the first UE and the second UE is established and before the receiving or transmitting of a PC5-RRC reconfiguration message is completed;
the PC5-RRC reconfiguration message is a PC5-RRC signaling used for configuring a first mapping relationship between a first PC5 RLC channel and a second PC5 RLC channel after the end-to-end connection between the first UE and the second UE is established;
the first PC5 RLC channel comprises a PC5 RLC channel between the relay UE and the first UE, and the second PC5 RLC channel comprises a PC5 RLC channel between the relay UE and the second UE; and
the first mapping relationship includes one-to-one mapping, many-to-one mapping, or many-to-many mapping.

Alternatively, the specific indication information includes any one of the following:
indication information carried in a media access control (MAC) subheader corresponding to a MAC sub-protocol data unit (subPDU) carrying the SL-SRB;
indication information carried in a media access control (MAC) sub-protocol data unit (subPDU) carrying the SL-SRB;
indication information carried in a sidelink shared channel (SL-SCH) subheader corresponding to a media access control (MAC) protocol data unit (PDU) carrying the SL-SRB; or
indication information carried in sidelink control information (SCI) transmitted through a sidelink interface between the relay UE and the first UE, or through a sidelink interface between the relay UE and the second UE.

Alternatively, the indication information includes at least one of the following:
information used to indicate that data corresponding to the SL-SRB needs to be forwarded;
information used to indicate that data corresponding to the SL-SRB is data corresponding to the end-to-end SL-SRB;
information used to indicate that the data corresponding to the SL-SRB needs to be processed by an adaptation layer.

Alternatively, in the case that the first PC5 RLC channel is the dedicated PC5 RLC channel for the end-to-end SL-SRB, the method further includes:
determining, by the relay UE, the dedicated PC5 RLC channel used when the SL-SRB is transmitted at a sidelink interface based on preconfiguration information; or
determining, by the relay UE, the dedicated PC5 RLC channel used when the SL-SRB is transmitted at a sidelink interface based on a protocol agreement; or
determining, by the relay UE itself, and broadcasting the dedicated PC5 RLC channel used when the SL-SRB is transmitted at a sidelink interface;
wherein a number of the dedicated PC5 RLC channels includes one or more.

Alternatively, before transmitting, by the first UE, the SL-SRB to the relay UE through the first PC5 RLC channel, the method further comprises:
transmitting, by the first UE, the data corresponding to the SL-SRB from a packet data convergence protocol (PDCP) layer to an adaptation layer, and after performing at least one of the following processing operations in the adaptation layer, transmitting the data corresponding to the SL-SRB from the adaptation layer to a radio link control (RLC) layer:
adding, by the first UE, an adaptation layer header to the data corresponding to the SL-SRB, wherein the adaptation layer header at least comprises: identifier information of the SL-SRB, and identifier information of the second UE; and
determining, by the first UE, a third mapping relationship between a SL-SRB and a PC5 RLC channel, and in the adaptation layer, performing mapping between the SL-SRB and the PC5 RLC channel based on the third mapping relationship for the SL-SRB;
wherein the third mapping relationship comprises one-to-one mapping, many-to-one mapping, or many-to-many mapping.

Alternatively, determining, by the first UE, the third mapping relationship includes any of the following:
determining the third mapping relationship based on preconfiguration information;
determining the third mapping relationship based on a protocol agreement;
determining the third mapping relationship by the first UE itself, and notifying the relay UE of the third mapping relationship, wherein the relay UE notifies the second UE;
receiving the third mapping relationship forwarded from the relay UE, wherein the third mapping relationship is determined by the second UE itself; or
receiving the third mapping relationship determined by the relay UE itself and notified by the relay UE through a sidelink interface.

Alternatively, before transmitting, by the first UE, the SL-SRB to the relay UE through the first PC5 RLC channel, the method further comprises:
receiving, by the first UE, the SL-SRB from a higher layer and determining that the SL-SRB is an end-to-end SL-SRB through at least one of the following:
determining that the SL-SRB is an end-to-end SL-SRB in the case that a PC5-signaling (PC5-S) and/or a PC5-radio resource control (RRC) signaling carries first indication information, wherein the first indication information is used to indicate that the PC5-S or PC5-RRC signaling is an end-to-end signaling between the first UE and the second UE;
determining that the SL-SRB is an end-to-end SL-SRB in the case that a target layer 2 (L2) destination indicated by a PC5-signaling (PC5-S) and/or a PC5-radio resource control (RRC) signaling issued by a higher layer is an end-to-end target L2 destination; or
determining that the SL-SRB is an end-to-end SL-SRB in the case that a PC5-signaling (PC5-S) and/or a PC5-radio resource control (RRC) signaling issued by a higher layer carries two target layer 2 (L2) destinations, one target L2 destination is an end-to-end target L2 destination, and the other target L2 destination is a target L2 destination used when performing data transmission between the first UE and the relay UE.

Alternatively, in the case that the first UE transmits the SL-SRB to a relay UE through a first PC5 RLC channel, the first target layer 2 (L2) destination used by the first UE for performing data transmission through the first PC5 RLC channel is a target L2 destination of the relay UE.

Alternatively, transmitting the target L2 destination of the second UE to the relay UE through a sidelink interface includes any of the following:
transmitting, by the first UE, a media access control (MAC) protocol data unit (PDU) to the relay UE through a sidelink interface, wherein a sidelink shared channel (SL-SCH) subheader of the MAC PDU carries the target L2 destination of the second UE;
transmitting, by the first UE, a media access control (MAC) protocol data unit (PDU) to the relay UE through a sidelink interface, wherein a MAC sub-PDU subheader of the MAC PDU carries the target L2 destination of the second UE;
transmitting, by the first UE, a separate PC5-radio resource control (RRC) signaling or a media access control layer (MAC) control element (CE) to the relay UE through a sidelink interface, wherein the separate PC5-RRC signaling or the MAC CE carries the target L2 destination of the second UE; or
transmitting sidelink control information (SCI) indication through a sidelink, wherein the SCI comprises the target L2 destination of the second UE.

In a third aspect, the present disclosure further provides a data transmission apparatus, including: a processor, a memory, and a transceiver;
the transceiver is used for receiving and transmitting data under control of the processor;
the memory is used for storing a computer instruction; and
the processor is used for reading and executing the computer instruction stored in the memory to perform the following procedures:
   receiving a sidelink-signaling radio bearer (SL-SRB) transmitted from a first user equipment (UE) through a first sidelink interface (PC5) radio link control (RLC) channel;
   forwarding the SL-SRB to a second UE through a second PC5 RLC channel in the case that specific indication information associated with the SL-SRB indicates that the SL-SRB is an end-to-end SL-SRB or in the case that the first PC5 RLC channel is a dedicated PC5 RLC channel for an end-to-end SL-SRB;
   wherein the first UE is any of two terminals that need to establish an end-to-end connection through the relay UE, the second UE is an end-to-end target communication counterpart of the first UE, and the relay UE is a terminal that supports a UE-to-UE relay (U2U relay) function.

Alternatively, the SL-SRB is used for carrying a PC5-signaling (PC5-S) and/or a PC5-radio resource control (RRC) signaling.

Alternatively, the PC5-RRC signaling is an end-to-end signaling transmitted between the first UE and the second UE after the end-to-end connection between the first UE and the second UE is established and before the receiving or transmitting of a PC5-RRC reconfiguration message is completed;
the PC5-RRC reconfiguration message is a PC5-RRC signaling used for configuring a first mapping relationship between a first PC5 RLC channel and a second PC5 RLC channel after the end-to-end connection between the first UE and the second UE is established;
the first PC5 RLC channel comprises a PC5 RLC channel between the relay UE and the first UE, and the second PC5 RLC channel comprises a PC5 RLC channel between the relay UE and the second UE; and
the first mapping relationship includes one-to-one mapping, many-to-one mapping, or many-to-many mapping.

Alternatively, the specific indication information includes any one of the following:
indication information carried in a media access control (MAC) subheader corresponding to a MAC sub-protocol data unit (subPDU) carrying the SL-SRB;
indication information carried in a media access control (MAC) sub-protocol data unit (subPDU) carrying the SL-SRB;
indication information carried in a sidelink shared channel (SL-SCH) subheader corresponding to a media access control (MAC) protocol data unit (PDU) carrying the SL-SRB; or
indication information carried in sidelink control information (SCI) transmitted through a sidelink interface between the relay UE and the first UE, or through a sidelink interface between the relay UE and the second UE.

Alternatively, the indication information includes at least one of the following:
information used to indicate that data corresponding to the SL-SRB needs to be forwarded;
information used to indicate that data corresponding to the SL-SRB is data corresponding to the end-to-end SL-SRB;
information used to indicate that the data corresponding to the SL-SRB needs to be processed by an adaptation layer.

Alternatively, in the case that the first PC5 RLC channel is the dedicated PC5 RLC channel for the end-to-end SL-SRB, the processor is further used for:
determining the dedicated PC5 RLC channel used when the SL-SRB is transmitted at a sidelink interface based on preconfiguration information; or
determining the dedicated PC5 RLC channel used when the SL-SRB is transmitted at a sidelink interface based on a protocol agreement; or
determining by itself and broadcasting the dedicated PC5 RLC channel used when the SL-SRB is transmitted at a sidelink interface;
wherein a number of the dedicated PC5 RLC channels includes one or more.

Alternatively, the processor is further used for:
performing adaptation layer processing on the data corresponding to the SL-SRB.

Alternatively, the processor is used for:
after receiving the data corresponding to the SL-SRB from a RLC layer of a sidelink interface between the relay UE and the first UE, submitting the data corresponding to the SL-SRB to an adaptation layer, and after performing at least one of the following processing operations in the adaptation layer, submitting the data corresponding to the SL-SRB to a RLC layer of a sidelink interface between the relay UE and the second UE:
removing an original adaptation layer header for the data corresponding to the SL-SRB, and then adding a new adaptation layer header, wherein the new adaptation layer header at least comprises: identifier information of the SL-SRB, and identifier information of the second UE; and
determining a second mapping relationship between a first PC5 RLC channel and a second PC5 RLC channel, and in the adaptation layer, performing mapping between the first PC5 RLC channel and the second PC5 RLC channel based on the second mapping relationship for the SL-SRB;
wherein the second mapping relationship includes one-to-one mapping, many-to-one mapping, or many-to-many mapping.

Alternatively, the processor is further used for:
determining a second mapping relationship between the first PC5 RLC channel and the second PC5 RLC channel, and in a radio link control (RLC) layer, performing mapping between the first PC5 RLC channel and the second PC5 RLC channel based on the second mapping relationship for the SL-SRB;
wherein the second mapping relationship includes one-to-one mapping, many-to-one mapping, or many-to-many mapping.

Alternatively, the processor is used for determining, by the relay UE, the second mapping relationship by any of the following:
determining the second mapping relationship based on preconfiguration information;
determining the second mapping relationship based on a protocol agreement;
determining the second mapping relationship based on a notification of the first UE, and notifying the second UE of the second mapping relationship;
determining the second mapping relationship based on a notification of the second UE, and notifying the first UE of the second mapping relationship; or
determining by itself the second mapping relationship, and notifying the first UE and/or the second UE of the second mapping relationship through a sidelink interface.

Alternatively, in the case that the SL-SRB transmitted from the first UE is received through the first PC5 RLC channel, the first target layer 2 (L2) destination used by the first UE is a target L2 destination of the relay UE; and
in the case that the SL-SRB is forwarded to the second UE through the second PC5 RLC channel, the second target L2 destination used by the relay UE is a target L2 destination of the second UE.

Alternatively, the processor is used for obtaining the target L2 destination of the second UE by any of the following:
receiving, by a media access control (MAC) layer of the relay UE, indication information transmitted from a higher layer, wherein the indication information carries the target L2 destination of the second UE; or
receiving the target L2 destination of the second UE transmitted from the first UE through a sidelink interface.

Alternatively, the processor is used for:
receiving the target L2 destination of the second UE transmitted from the first UE through the sidelink comprising any one of the following:
receiving a media access control (MAC) protocol data unit (PDU) transmitted from the first UE through a sidelink interface, and obtaining the target L2 destination of the second UE from a sidelink shared channel (SL-SCH) subheader of the MAC PDU;
receiving a media access control (MAC) protocol data unit (PDU) transmitted from the first UE through a sidelink interface, and obtaining the target L2 destination of the second UE from a MAC sub-PDU of the MAC PDU;
receiving a PC5-radio resource control (RRC) signaling or a media access control layer (MAC) control element (CE) through a sidelink interface, and obtaining the target L2 destination of the second UE from the PC5-RRC signaling or the MAC CE;
receiving sidelink control information (SCI) indication through a sidelink interface, and obtaining the target target L2 destination of the second UE from the SCI.

In a fourth aspect, the present disclosure further provides a data transmission apparatus, including: a processor, a memory, and a transceiver;
the transceiver is used for receiving and transmitting data under control of the processor;
the memory is used for storing a computer instruction; and
the processor is used for reading and executing the computer instruction stored in the memory to perform the following procedures:
   determining a sidelink-signaling radio bearer (SL-SRB) to be transmitted from a first user equipment (UE); and
   transmitting the SL-SRB to a relay UE through a first sidelink interface (PC5) radio link control (RLC) channel;
   wherein the SL-SRB is associated with specific indication information, the specific indication information is used for indicating that the SL-SRB is forwarded to a second UE through a second PC5 RLC channel in the case that the SL-SRB is an end-to-end SL-SRB, or in the case that the first PC5 RLC channel is a dedicated PC5 RLC channel for an end-to-end SL-SRB, the dedicated PC5 RLC channel for the end-to-end SL-SRB is used for indicating that the SL-SRB is forwarded to a second UE through a second PC5 RLC channel in the case that the SL-SRB is an end-to-end SL-SRB;
   wherein the first UE is any of two terminals that need to establish an end-to-end connection through the relay UE, the second UE is an end-to-end target communication counterpart of the first UE, and the relay UE is a terminal that supports a UE-to-UE relay (U2U relay) function.

Alternatively, the SL-SRB is used for carrying a PC5-signaling (PC5-S) and/or a PC5-radio resource control (RRC) signaling.

Alternatively, the PC5-RRC signaling is an end-to-end signaling transmitted between the first UE and the second UE after the end-to-end connection between the first UE and the second UE is established and before the receiving or transmitting of a PC5-RRC reconfiguration message is completed;
the PC5-RRC reconfiguration message is a PC5-RRC signaling used for configuring a first mapping relationship between a first PC5 RLC channel and a second PC5 RLC channel after the end-to-end connection between the first UE and the second UE is established;
the first PC5 RLC channel comprises a PC5 RLC channel between the relay UE and the first UE, and the second PC5 RLC channel comprises a PC5 RLC channel between the relay UE and the second UE; and
the first mapping relationship includes one-to-one mapping, many-to-one mapping, or many-to-many mapping.

Alternatively, the specific indication information includes any one of the following:
indication information carried in a media access control (MAC) subheader corresponding to a MAC sub-protocol data unit (subPDU) carrying the SL-SRB;
indication information carried in a media access control (MAC) sub-protocol data unit (subPDU) carrying the SL-SRB;
indication information carried in a sidelink shared channel (SL-SCH) subheader corresponding to a media access control (MAC) protocol data unit (PDU) carrying the SL-SRB; or
indication information carried in sidelink control information (SCI) transmitted through a sidelink interface between the relay UE and the first UE, or through a sidelink interface between the relay UE and the second UE.

Alternatively, the indication information includes at least one of the following:
information used to indicate that data corresponding to the SL-SRB needs to be forwarded;
information used to indicate that data corresponding to the SL-SRB is data corresponding to the end-to-end SL-SRB;
information used to indicate that the data corresponding to the SL-SRB needs to be processed by an adaptation layer.

Alternatively, in the case that the first PC5 RLC channel is the dedicated PC5 RLC channel for the end-to-end SL-SRB, the processor is further used for:
determining the dedicated PC5 RLC channel used when the SL-SRB is transmitted at a sidelink interface based on preconfiguration information; or
determining the dedicated PC5 RLC channel used when the SL-SRB is transmitted at a sidelink interface based on a protocol agreement; or
determining by itself and broadcasting the dedicated PC5 RLC channel used when the SL-SRB is transmitted at a sidelink interface;
wherein a number of the dedicated PC5 RLC channels includes one or more.

Alternatively, the processor is further used for:
transmitting the data corresponding to the SL-SRB from a packet data convergence protocol (PDCP) layer to an adaptation layer, and after performing at least one of the following processing operations in the adaptation layer, transmitting the data corresponding to the SL-SRB from the adaptation layer to a radio link control (RLC) layer:
adding an adaptation layer header to the data corresponding to the SL-SRB, wherein the adaptation layer header at least comprises: identifier information of the SL-SRB, and identifier information of the second UE; and
determining a third mapping relationship between a SL-SRB and a PC5 RLC channel, and in the adaptation layer, performing mapping between the SL-SRB and the PC5 RLC channel based on the third mapping relationship for the SL-SRB;
wherein the third mapping relationship comprises one-to-one mapping, many-to-one mapping, or many-to-many mapping.

Alternatively, the processor is used for:
determining the third mapping relationship by any of the following:
determining the third mapping relationship based on preconfiguration information;
determining the third mapping relationship based on a protocol agreement;
determining the third mapping relationship by itself, and notifying the relay UE of the third mapping relationship, wherein the relay UE notifies the second UE;
receiving the third mapping relationship forwarded from the relay UE, wherein the third mapping relationship is determined by the second UE itself; or
receiving the third mapping relationship determined by the relay UE itself and notified by the relay UE through a sidelink interface.

Alternatively, the processor is further used for:
receiving the SL-SRB from a higher layer and determining that the SL-SRB is an end-to-end SL-SRB through at least one of the following:
determining that the SL-SRB is an end-to-end SL-SRB in the case that a PC5-signaling (PC5-S) and/or a PC5-radio resource control (RRC) signaling carries first indication information, wherein the first indication information is used to indicate that the PC5-S or PC5-RRC signaling is an end-to-end signaling between the first UE and the second UE;
determining that the SL-SRB is an end-to-end SL-SRB in the case that a target layer 2 (L2) destination indicated by a PC5-signaling (PC5-S) and/or a PC5-radio resource control (RRC) signaling issued by a higher layer is an end-to-end target L2 destination; or
determining that the SL-SRB is an end-to-end SL-SRB in the case that a PC5-signaling (PC5-S) and/or a PC5-radio resource control (RRC) signaling issued by a higher layer carries two target layer 2 (L2) destinations, one target L2 destination is an end-to-end target L2 destination, and the other target L2 destination is a target L2 destination used when performing data transmission between the first UE and the relay UE.

Alternatively, the processor is used for:
determining that the first target layer 2 (L2) destination used by the first UE for data transmission is performed through the first PC5 RLC channel is a target L2 destination of the relay UE.

Alternatively, the processor is used for:
transmitting the target L2 destination of the second UE to the relay UE through a sidelink interface by any of the following:
transmitting a media access control (MAC) protocol data unit (PDU) to the relay UE through a sidelink interface, wherein a sidelink shared channel (SL-SCH) subheader of the MAC PDU carries the target L2 destination of the second UE;
transmitting a media access control (MAC) protocol data unit (PDU) to the relay UE through a sidelink interface, wherein a MAC sub-PDU subheader of the MAC PDU carries the target L2 destination of the second UE;
transmitting a separate PC5-radio resource control (RRC) signaling or a media access control layer (MAC) control element (CE) to the relay UE through a sidelink interface, wherein the separate PC5-RRC signaling or the MAC CE carries the target L2 destination of the second UE; or
transmitting sidelink control information (SCI) indication to the relay UE through a sidelink interface, wherein the SCI comprises the target L2 destination of the second UE.

In a fifth aspect, the present disclosure further provides a data transmission device for a user equipment (UE)-to-UE relay scenario, including:
a receiving unit, used for receiving a sidelink-signaling radio bearer (SL-SRB) transmitted from a first user equipment (UE) through a first sidelink interface (PC5) radio link control (RLC) channel;
an obtaining unit, used for obtaining specific indication information associated with the SL-SRB; and
a forwarding unit, used for forwarding the SL-SRB to a second UE through a second PC5 RLC channel in the case that the specific indication information associated with the SL-SRB indicates that the SL-SRB is an end-to-end SL-SRB or in the case that the first PC5 RLC channel is a dedicated PC5 RLC channel for an end-to-end SL-SRB;
wherein the first UE is any of two terminals that need to establish an end-to-end connection through the relay UE, the second UE is an end-to-end target communication counterpart of the first UE, and the relay UE is a terminal that supports a UE-to-UE relay (U2U relay) function.

Alternatively, the SL-SRB is used for carrying a PC5-signaling (PC5-S) and/or a PC5-radio resource control (RRC) signaling.

Alternatively, the PC5-RRC signaling is an end-to-end signaling transmitted between the first UE and the second UE after the end-to-end connection between the first UE and the second UE is established and before the receiving or transmitting of a PC5-RRC reconfiguration message is completed;
the PC5-RRC reconfiguration message is a PC5-RRC signaling used for configuring a first mapping relationship between a first PC5 RLC channel and a second PC5 RLC channel after the end-to-end connection between the first UE and the second UE is established;
the first PC5 RLC channel comprises a PC5 RLC channel between the relay UE and the first UE, and the second PC5 RLC channel comprises a PC5 RLC channel between the relay UE and the second UE; and
the first mapping relationship includes one-to-one mapping, many-to-one mapping, or many-to-many mapping.

Alternatively, the specific indication information includes any one of the following:
indication information carried in a media access control (MAC) subheader corresponding to a MAC sub-protocol data unit (subPDU) carrying the SL-SRB;
indication information carried in a media access control (MAC) sub-protocol data unit (subPDU) carrying the SL-SRB;
indication information carried in a sidelink shared channel (SL-SCH) subheader corresponding to a media access control (MAC) protocol data unit (PDU) carrying the SL-SRB; or
indication information carried in sidelink control information (SCI) transmitted through a sidelink interface between the relay UE and the first UE, or through a sidelink interface between the relay UE and the second UE.

Alternatively, the indication information includes at least one of the following:
information used to indicate that data corresponding to the SL-SRB needs to be forwarded;
information used to indicate that data corresponding to the SL-SRB is data corresponding to the end-to-end SL-SRB;
information used to indicate that the data corresponding to the SL-SRB needs to be processed by an adaptation layer.

Alternatively, in the case that the first PC5 RLC channel is the dedicated PC5 RLC channel for the end-to-end SL-SRB, the obtaining unit is further used for:
determining the dedicated PC5 RLC channel used when the SL-SRB is transmitted at a sidelink interface based on preconfiguration information; or
determining the dedicated PC5 RLC channel used when the SL-SRB is transmitted at a sidelink interface based on a protocol agreement; or
determining by itself and broadcasting the dedicated PC5 RLC channel used when the SL-SRB is transmitted at a sidelink interface;
wherein a number of the dedicated PC5 RLC channels includes one or more.

Alternatively, the forwarding unit is further used for:
performing adaptation layer processing on the data corresponding to the SL-SRB.

Alternatively, the forwarding unit is specifically used for:
after receiving the data corresponding to the SL-SRB from a RLC layer of a sidelink interface between the relay UE and the first UE, submitting the data corresponding to the SL-SRB to an adaptation layer, and after performing at least one of the following processing operations in the adaptation layer, submitting the data corresponding to the SL-SRB to a RLC layer of a sidelink interface between the relay UE and the second UE:
removing an original adaptation layer header for the data corresponding to the SL-SRB, and then adding a new adaptation layer header, wherein the new adaptation layer header at least comprises: identifier information of the SL-SRB, and identifier information of the second UE; and
determining a second mapping relationship between a first PC5 RLC channel and a second PC5 RLC channel, and in the adaptation layer, performing mapping between the first PC5 RLC channel and the second PC5 RLC channel based on the second mapping relationship for the SL-SRB;
wherein the second mapping relationship includes one-to-one mapping, many-to-one mapping, or many-to-many mapping.

Alternatively, the forwarding unit is further used for:
determining a second mapping relationship between the first PC5 RLC channel and the second PC5 RLC channel, and in a radio link control (RLC) layer, performing mapping between the first PC5 RLC channel and the second PC5 RLC channel based on the second mapping relationship for the SL-SRB;
wherein the second mapping relationship includes one-to-one mapping, many-to-one mapping, or many-to-many mapping.

Alternatively, the forwarding unit is specifically used for:
determining the second mapping relationship by any of the following:
determining the second mapping relationship based on preconfiguration information;
determining the second mapping relationship based on a protocol agreement;
determining the second mapping relationship based on a notification of the first UE, and notifying the second UE of the second mapping relationship;
determining the second mapping relationship based on a notification of the second UE, and notifying the first UE of the second mapping relationship; or
determining by itself the second mapping relationship, and notifying the first UE and/or the second UE of the second mapping relationship through a sidelink interface.

Alternatively, in the case that the SL-SRB transmitted from the first UE is received through the first PC5 RLC channel, the first target layer 2 (L2) destination used by the first UE is a target L2 destination of the relay UE; and
in the case that the SL-SRB is forwarded to the second UE through the second PC5 RLC channel, the second target L2 destination used by the relay UE is a target L2 destination of the second UE.

Alternatively, the forwarding unit is specifically used for:
obtaining the target L2 destination of the second UE by any of the following:
receiving, by a media access control (MAC) layer of the relay UE, indication information transmitted from a higher layer, wherein the indication information carries the target L2 destination of the second UE; or
receiving the target L2 destination of the second UE transmitted from the first UE through a sidelink interface.

Alternatively, the forwarding unit is specifically used for:
receiving the target L2 destination of the second UE transmitted from the first UE through the sidelink comprising any one of the following:
receiving a media access control (MAC) protocol data unit (PDU) transmitted from the first UE through a sidelink interface, and obtaining the target L2 destination of the second UE from a sidelink shared channel (SL-SCH) subheader of the MAC PDU;
receiving a media access control (MAC) protocol data unit (PDU) transmitted from the first UE through a sidelink interface, and obtaining the target L2 destination of the second UE from a MAC sub-PDU of the MAC PDU;
receiving a PC5-radio resource control (RRC) signaling or a media access control layer (MAC) control element (CE) through a sidelink interface, and obtaining the target L2 destination of the second UE from the PC5-RRC signaling or the MAC CE;
receiving sidelink control information (SCI) indication through a sidelink interface, and obtaining the target target L2 destination of the second UE from the SCI.

In a sixth aspect, the present disclosure further provides a data transmission device for a user equipment (UE)-to-UE relay scenario, including:
a determining unit, used for determining a sidelink-signaling radio bearer (SL-SRB) to be transmitted by a first UE; and
a transmitting unit, used for transmitting the SL-SRB to a relay UE through a first sidelink interface (PC5) radio link control (RLC) channel;
wherein the SL-SRB is associated with specific indication information, the specific indication information is used for indicating that the SL-SRB is forwarded to a second UE through a second PC5 RLC channel in the case that the SL-SRB is an end-to-end SL-SRB, or in the case that the first PC5 RLC channel is a dedicated PC5 RLC channel for an end-to-end SL-SRB, the dedicated PC5 RLC channel for the end-to-end SL-SRB is used for indicating that the SL-SRB is forwarded to a second UE through a second PC5 RLC channel in the case that the SL-SRB is an end-to-end SL-SRB;
wherein the first UE is any of two terminals that need to establish an end-to-end connection through the relay UE, the second UE is an end-to-end target communication counterpart of the first UE, and the relay UE is a terminal that supports a UE-to-UE relay (U2U relay) function.

Alternatively, the SL-SRB is used for carrying a PC5-signaling (PC5-S) and/or a PC5-radio resource control (RRC) signaling.

Alternatively, the PC5-RRC signaling is an end-to-end signaling transmitted between the first UE and the second UE after the end-to-end connection between the first UE and the second UE is established and before the receiving or transmitting of a PC5-RRC reconfiguration message is completed;
the PC5-RRC reconfiguration message is a PC5-RRC signaling used for configuring a first mapping relationship between a first PC5 RLC channel and a second PC5 RLC channel after the end-to-end connection between the first UE and the second UE is established;
the first PC5 RLC channel comprises a PC5 RLC channel between the relay UE and the first UE, and the second PC5 RLC channel comprises a PC5 RLC channel between the relay UE and the second UE; and
the first mapping relationship includes one-to-one mapping, many-to-one mapping, or many-to-many mapping.

Alternatively, the specific indication information includes any one of the following:
indication information carried in a media access control (MAC) subheader corresponding to a MAC sub-protocol data unit (subPDU) carrying the SL-SRB;
indication information carried in a media access control (MAC) sub-protocol data unit (subPDU) carrying the SL-SRB;
indication information carried in a sidelink shared channel (SL-SCH) subheader corresponding to a media access control (MAC) protocol data unit (PDU) carrying the SL-SRB; or
indication information carried in sidelink control information (SCI) transmitted through a sidelink interface between the relay UE and the first UE, or through a sidelink interface between the relay UE and the second UE.

Alternatively, the indication information includes at least one of the following:
information used to indicate that data corresponding to the SL-SRB needs to be forwarded;
information used to indicate that data corresponding to the SL-SRB is data corresponding to the end-to-end SL-SRB;
information used to indicate that the data corresponding to the SL-SRB needs to be processed by an adaptation layer.

Alternatively, in the case that the first PC5 RLC channel is the dedicated PC5 RLC channel for the end-to-end SL-SRB, the transmitting unit is further used for:
determining the dedicated PC5 RLC channel used when the SL-SRB is transmitted at a sidelink interface based on preconfiguration information; or
determining the dedicated PC5 RLC channel used when the SL-SRB is transmitted at a sidelink interface based on a protocol agreement; or
determining by itself and broadcasting the dedicated PC5 RLC channel used when the SL-SRB is transmitted at a sidelink interface;
wherein a number of the dedicated PC5 RLC channels includes one or more.

Alternatively, the transmitting unit is further used for:
transmitting the data corresponding to the SL-SRB from a packet data convergence protocol (PDCP) layer to an adaptation layer, and after performing at least one of the following processing operations in the adaptation layer, transmitting the data corresponding to the SL-SRB from the adaptation layer to a radio link control (RLC) layer:
adding an adaptation layer header to the data corresponding to the SL-SRB, wherein the adaptation layer header at least comprises: identifier information of the SL-SRB, and identifier information of the second UE; and
determining a third mapping relationship between a SL-SRB and a PC5 RLC channel, and in the adaptation layer, performing mapping between the SL-SRB and the PC5 RLC channel based on the third mapping relationship for the SL-SRB;
wherein the third mapping relationship includes one-to-one mapping, many-to-one mapping, or many-to-many mapping.

Alternatively, the transmitting unit is specifically used for:
determining the third mapping relationship by any of the following:
determining the third mapping relationship based on preconfiguration information;
determining the third mapping relationship based on a protocol agreement;
determining the third mapping relationship by itself, and notifying the relay UE of the third mapping relationship, wherein the relay UE notifies the second UE;
receiving the third mapping relationship forwarded from the relay UE, wherein the third mapping relationship is determined by the second UE itself; or
receiving the third mapping relationship determined by the relay UE itself and notified by the relay UE through a sidelink interface.

Alternatively, the transmitting unit is further used for:
receiving the SL-SRB from a higher layer and determining that the SL-SRB is an end-to-end SL-SRB through at least one of the following:
determining that the SL-SRB is an end-to-end SL-SRB in the case that a PC5-signaling (PC5-S) and/or a PC5-radio resource control (RRC) signaling carries first indication information, wherein the first indication information is used to indicate that the PC5-S or PC5-RRC signaling is an end-to-end signaling between the first UE and the second UE;
determining that the SL-SRB is an end-to-end SL-SRB in the case that a target layer 2 (L2) destination indicated by a PC5-signaling (PC5-S) and/or a PC5-radio resource control (RRC) signaling issued by a higher layer is an end-to-end target L2 destination; or
determining that the SL-SRB is an end-to-end SL-SRB in the case that a PC5-signaling (PC5-S) and/or a PC5-radio resource control (RRC) signaling issued by a higher layer carries two target layer 2 (L2) destinations, one target L2 destination is an end-to-end target L2 destination, and the other target L2 destination is a target L2 destination used when performing data transmission between the first UE and the relay UE.

Alternatively, in the case that the SL-SRB is transmitted to the relay UE through a first PC5 RLC channel, the first target layer 2 (L2) destination used for performing data transmission through the first PC5 RLC channel is a target L2 destination of the relay UE.

Alternatively, the transmitting unit is specifically used for:
transmitting the target L2 destination of the second UE to the relay UE through a sidelink interface by any of the following:
transmitting a media access control (MAC) protocol data unit (PDU) to the relay UE through a sidelink interface, wherein a sidelink shared channel (SL-SCH) subheader of the MAC PDU carries the target L2 destination of the second UE;
transmitting a media access control (MAC) protocol data unit (PDU) to the relay UE through a sidelink interface, wherein a MAC sub-PDU subheader of the MAC PDU carries the target L2 destination of the second UE;
transmitting a separate PC5-radio resource control (RRC) signaling or a media access control layer (MAC) control element (CE) to the relay UE through a sidelink interface, wherein the separate PC5-RRC signaling or the MAC CE carries the target L2 destination of the second UE; or
transmitting sidelink control information (SCI) indication to the relay UE through a sidelink interface, wherein the SCI comprises the target L2 destination of the second UE.

In a seventh aspect, the present disclosure further provides a computer-readable storage medium storing a computer-executable instruction, the computer-executable instruction is used to cause a computer to perform the method described in the first aspect and second aspect.

In an eighth aspect, the present disclosure further provides a computer program product, wherein the computer program product, when called by a computer, causes the computer to perform the method described in the first aspect and second aspect.

In the embodiments of the present disclosure, the relay UE supporting the U2U relay function receives the SL-SRB transmitted from a first UE through the PC5 RLC channel; and forwards the SL-SRB to a second UE through the second PC5 RLC channel in the case that specific indication information associated with the SL-SRB indicates that the SL-SRB is an end-to-end SL-SRB or in the case that the first PC5 RLC channel is a dedicated PC5 RLC channel for an end-to-end SL-SRB; wherein the first UE is any of two terminals that need to establish an end-to-end connection through the relay UE, the second UE is an end-to-end target communication counterpart of the first UE. On this basis, an end-to-end connection is established between the first UE and the second UE by the relay UE, and data transmission may be performed by the end-to-end connection.

### BRIEF DESCRIPTION OF DRAWINGS

To more clearly illustrate solutions in embodiments of the present disclosure, the accompanying drawings needed in the embodiments of the present disclosure will be briefly introduced below. Apparently, the accompanying drawings in the following description are only some embodiments of the present disclosure. Those skilled in the art may also obtain other accompanying drawings according to these accompanying drawings without making creative work.
FIG. 1 exemplarily shows a schematic diagram of cellular network communication according to some embodiments of the present disclosure;
FIG. 2 exemplarily shows a schematic diagram of direct communication according to some embodiments of the present disclosure;
FIG. 3 exemplarily shows a schematic diagram of establishing an end-to-end connection through a relay user equipment (UE) according to some embodiments of the present disclosure;
FIG. 4 exemplarily shows a specific flow chart of data transmission in a UE-to-UE relay scenario according to some embodiments of the present disclosure;
FIG. 5 exemplarily shows a schematic diagram of a media access control (MAC) subheader format according to some embodiments of the present disclosure;
FIG. 6 exemplarily shows a schematic diagram of an sidelink shared channel (SL-SCH) subheader format according to some embodiments of the present disclosure;
FIG. 7 exemplarily shows a specific flow chart of another data transmission in a UE-to-UE relay scenario according to some embodiments of the present disclosure;
FIG. 8 exemplarily shows a specific flow chart of an application scenario 1 according to some embodiments of the present disclosure;
FIG. 9 exemplarily shows a specific flow chart of an application scenario 2 according to some embodiments of the present disclosure;
FIG. 10 exemplarily shows a specific flow chart of an application scenario 3 according to some embodiments of the present disclosure;
FIG. 11 exemplarily shows a specific flow chart of an application scenario 4 according to some embodiments of the present disclosure;
FIG. 12 exemplarily shows a schematic diagram of a data transmission device according to some embodiments of the present disclosure;
FIG. 13 exemplarily shows a schematic diagram of another data transmission device according to some embodiments of the present disclosure; and
FIG. 14 exemplarily shows a schematic structural diagram of a data transmission apparatus according to some embodiments of the present disclosure.

### DETAILED DESCRIPTION

To make the objectives, technical solutions and advantages of the present disclosure more clearly, the present disclosure is clearly described below in conjunction with reference to the accompanying drawings. Apparently, the accompanying drawings in the following description are only some embodiments of the present disclosure and not all of the embodiments. All other embodiments obtained by those skilled in the art based on the embodiments of the present disclosure without any creative work belong to the scope of the present disclosure.

Some of the terms in the embodiments of the present disclosure is explained below to facilitate the understanding of those skilled in the art.
(1) the term "multiple" in the embodiments of the present disclosure refers to two or more than two, and other quantifiers are similar.
(2) "and/or" describes an association relationship between associated objects and represents that there may be three relationships, for example, A and/or B, which represents that merely A exists, both A and B exist, and merely B exists. Character "/" generally indicates that the associated objects have an "or" relationship.

In order to establish an end-to-end connection between a first UE and a second UE through the relay UE and transmit data through the end-to-end connection, in some embodiments of the present disclosure, when the relay UE receives a sidelink-signaling radio bearer (SL-SRB) transmitted from the first UE through a sidelink interface radio link control (PC5 RLC) channel, the relay UE obtains specific indication information associated with the SL-SRB; in the case that the relay UE determines the SL-SRB being end-to-end SL-SRB based on the specific indication information, the relay UE may forwards the SL-SRB to a second UE through the second PC5 RLC channel, wherein the first UE is any one of two terminals that need to establish an end-to-end connection through the relay UE, the second UE is an end-to-end target communication counterpart of the first UE and the relay UE is a terminal supporting UE-to-UE relay (U2U relay) function. Based on this, the purpose of enabling the first UE and the second UE to establish an end-to-end connection through the relay UE and performing data transmission via the end-to-end connection may be achieved.

Embodiments of the present disclosure will be further described in detail below with reference to the accompanying drawings.

In some embodiments of the present disclosure, Exemplarily, FIG. 4 shows a specific flow chart of data transmission in a UE-to-UE relay scenario according to the embodiments of the present disclosure. As shown in FIG. 4, the process includes the following steps:
Step 400: A relay UE receives the SL-SRB transmitted from the first UE through the first PC5 RLC channel.

For the convenience of description, any one of the two terminals that need to establish an end-to-end connection through the relay UE is referred to as the first UE, and the end-to-end target communication counterpart of the first UE is referred to as the second UE.

In a possible implementation, there may be several PC5 RLC channels between the first UE and the relay UE, wherein PC5 RLC channel(s) between the first UE and the relay UE is referred to as a first PC5 RLC channel for the convenience of description. When the first UE transmits an SL-SRB to the relay UE, it may select one of the first PC5 RLC channels among the PC5 RLC channels between the first UE and the relay UE as a PC5 RLC channel carrying the SL-SRB, and the SL-SRB may be transmitted to the relay UE based on the selected first PC5 RLC channel, and the relay UE may receive the SL-SRB transmitted from the first UE through the first PC5 RLC channel.

In a possible implementation, the SL-SRB may be used for carrying a PC5-signaling (PC5-S) and/or used for carrying a PC5-radio resource control (RRC) signaling. That is, the SL-SRB may be used for carrying only PC5-S, the SL-SRB may also be used for carrying only PC5-RRC signaling, and the SL-SRB may also be used for carrying both PC5-S and PC5-RRC signaling.

In a possible implementation, the relay UE may be a terminal that supports a UE-to-UE relay (U2U relay) function.

Step 410: The relay UE forwards the SL-SRB to a second UE through a second PC5 RLC channel in the case that specific indication information associated with the SL-SRB indicates that the SL-SRB is an end-to-end SL-SRB or in the case that the first PC5 RLC channel is a dedicated PC5 RLC channel for an end-to-end SL-SRB; wherein the first UE is any one of two terminals that need to establish an end-to-end connection through the relay UE, the second UE is an end-to-end target communication counterpart of the first UE, and the relay UE is a terminal that supports the U2U relay function.

In a possible implementation, considering that the SL-SRB transmitted from the first UE to the relay UE may need to be forwarded by the relay UE to the second UE, or may be transmitted directly to the relay UE (i.e., without forwarding to the second UE), the SL-SRB transmitted from the first UE to the relay UE may be associated with specific indication information in order to enable the relay UE to learn whether it is necessary to forward the received SL-SRB to the second UE. Alternatively, after receiving the SL-SRB transmitted from the first UE, the relay UE may obtain the specific indication information associated with the SL-SRB, and learn whether it is necessary to forward the SL-SRB to the second UE based on the specific indication information.

In a possible implementation, in the case that the specific indication information associated with the SL-SRB is any of the following specific indication information, the SL-SRB may be regarded as an end-to-end SL-SRB, and it is necessary to forward the SL-SRB to the second UE.

First specific indication information is indication information carried in a media access control (MAC) subheader corresponding to a MAC sub-protocol data unit (subPDU) carrying the SL-SRB.

Second specific indication information is indication information carried in the MAC subPDU carrying the SL-SRB.

Third specific indication information is indication information carried in a sidelink shared channel (SL-SCH) subheader corresponding to a MAC PDU carrying the SL-SRB.

Fourth specific indication information is indication information carried in sidelink control information (SCI) transmitted through a sidelink interface between the relay UE and the first UE, or through a sidelink interface between the relay UE and the second UE.

Alternatively, in the case that the first PC5 RLC channel is a dedicated PC5 RLC channel for an end-to-end SL-SRB, the SL-SRB may be regarded as an end-to-end SL-SRB, and the relay UE may forward the SL-SRB to the second UE through the second PC5 RLC channel in the case that the relay UE receives the SL-SRB transmitted from the first UE through the dedicated PC5 RLC channel.

Alternatively, the second PC5 RLC channel may be a dedicated PC5 RLC channel or may not be a dedicated PC5 RLC channel. In a possible implementation, the relay UE may determine the dedicated PC5 RLC channel by any of the following ways.

The relay UE determines the dedicated PC5 RLC channel used when the SL-SRB is transmitted at a sidelink interface based on preconfiguration information; or
the relay UE determines the dedicated PC5 RLC channel used when the SL-SRB is transmitted at a sidelink interface based on a protocol agreement; or
the relay UE determines independently and broadcasts the dedicated PC5 RLC channel used when the SL-SRB is transmitted at a sidelink interface;
the present disclosure does not specifically limit the dedicated PC5 RLC channel, and it may be flexibly set according to requirements. In addition, the present disclosure does not specifically limit the number of dedicated PC5 RLC channels, and the number of dedicated PC5 RLC channels may be one or more.

The relay UE may determine whether the first PC5 RLC channel and the second PC5 RLC channel are the dedicated PC5 RLC channels for the end-to-end SL-SRB based on the dedicated PC5 RLC channels for the end-to-end SL-SRB since the relay UE may determine the dedicated PC5 RLC channel for the end-to-end SL-SRB by any of the above ways. Alternatively, it may be considered that the received SL-SRB needs to be forwarded to the second UE when the relay UE identifies that the first PC5 RLC channel and/or the second PC5 RLC channel carrying the SL-SRB are dedicated PC5 RLC channels for the end-to-end SL-SRB.

Alternatively, the indication information among the above-mentioned first to fourth specific indication information includes at least one of the following.
(1) The indication information may be used to indicate that the data corresponding to the SL-SRB needs to be forwarded;
(2) The indication information may be used to indicate that the data corresponding to the SL-SRB is data corresponding to the end-to-end SL-SRB; and
(3) The indication information may be used to indicate the data corresponding to the SL-SRB needs to be processed by an adaptation layer.

For the convenience of understanding, the first to fourth specific indication information are introduced below.

For the first specific indication information, when the specific indication information is the indication information carried in the MAC subheader corresponding to the MAC subPDU carrying the SL-SRB, referring to FIG. 5, FIG. 5 exemplarily shows a schematic diagram of a MAC subheader format according to some embodiments of the present disclosure. As shown in FIG. 5, the MAC subheader may include an R field, an F field, a logical channel identity (LCID) field, and an L field. In a possible implementation, the R field in the MAC subheader may be used for carrying the indication information, that is, the specific indication information may be indication information carried in the R field of the MAC subheader corresponding to the MAC subPDU carrying the SL-SRB. The indication information may indicate that the data corresponding to the SL-SRB needs to be forwarded, or indicate that the data corresponding to the SL-SRB is data corresponding to the end-to-end SL-SRB, or indicate that the data corresponding to the SL-SRB needs to be processed by the adaptation layer. Alternatively, after obtaining the specific indication information associated with the SL-SRB, the relay UE may learn that the SL-SRB needs to be forwarded to the second UE based on the indication information.

For the second specific indication information, when the specific indication information is the indication information carried in the MAC subPDU carrying the SL-SRB itself, a first bit or a last bit in the MAC subPDU may be used for carrying the indication information, that is, the specific indication information may be the indication information carried in the first bit or the last bit in the MAC subPDU carrying the SL-SRB. The indication information may indicate that the data corresponding to the SL-SRB needs to be forwarded, or indicate that the data corresponding to the SL-SRB is data corresponding to the end-to-end SL-SRB, or indicate that the data corresponding to the SL-SRB needs to be processed by the adaptation layer. Alternatively, after obtaining the specific indication information associated with the SL-SRB, the relay UE may learn that the SL-SRB needs to be forwarded to the second UE based on the indication information.

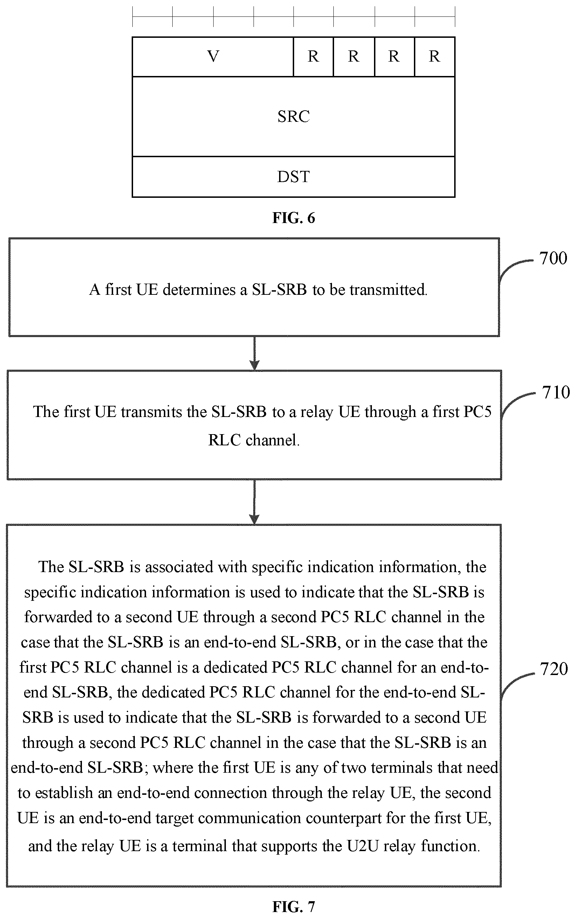

For the third specific indication information, iwhen the specific indication information is indication information carried in a sidelink shared channel (SL-SCH) subheader corresponding to a MAC PDU carrying the SL-SRB, referring to FIG. 6. FIG. 6 exemplarily shows a schematic diagram of an SL-SCH subheader format according to some embodiments of the present disclosure. As shown in FIG. 6, the SL-SCH subheader may include an R field, a V field, a source (SRC) field, and a destination (DST) field. Alternatively, the R field in the SL-SCH subheader may be used for carrying the indication information, that is, the specific indication information may be indication information carried in the R field of the SL-SCH subheader corresponding to the MAC PDU carrying the SL-SRB. The indication information may indicate that the data corresponding to the SL-SRB needs to be forwarded, or indicate that the data corresponding to the SL-SRB is data corresponding to the end-to-end SL-SRB, or indicate that the data corresponding to the SL-SRB needs to be processed by the adaptation layer. Alternatively, after obtaining the specific indication information associated with the SL-SRB, the relay UE may learn that the SL-SRB needs to be forwarded to the second UE based on the indication information.

For the fourth specific indication information, when the specific indication information is the indication information carried in the SCI, one bit may be added to the SCI to carry the indication information, that is, the specific indication information may be the indication information carried in one bit added in the SCI. The indication information may indicate that the data corresponding to the SL-SRB needs to be forwarded, or indicate that the data corresponding to the SL-SRB is data corresponding to the end-to-end SL-SRB, or indicate that the data corresponding to the SL-SRB needs to be processed by the adaptation layer. Alternatively, after obtaining the specific indication information associated with the SL-SRB, the relay UE may learn that the SL-SRB needs to be forwarded to the second UE based on the indication information.

In a possible implementation, there may be several PC5 RLC channels between the second UE and the relay UE, wherein PC5 RLC channel(s) between the second UE and the relay UE is referred to as a second PC5 RLC channel for the convenience of description. When the relay UE forwards an SL-SRB to the second UE, one of the second PC5 RLC channels between the relay UE and the second UE may be selected as a PC5 RLC channel carrying the SL-SRB, and the SL-SRB may be forwarded to the relay UE based on the selected second PC5 RLC channel, and the second UE may receive the SL-SRB forwarded from the relay UE through the second PC5 RLC channel.

In a possible implementation, a PC5-RRC signaling carried in the SL-SRB may be an end-to-end signaling transmitted between the first UE and the second UE after the end-to-end connection between the first UE and the second UE is established and before the receiving or transmitting of a PC5-RRC reconfiguration message is completed. In some embodiments, the PC5-RRC reconfiguration message may be a PC5-RRC signaling used for configuring a first mapping relationship between a first PC5 RLC channel and a second PC5 RLC channel after the end-to-end connection between the first UE and the second UE is established (for the convenience of description, a mapping relationship between the first PC5 RLC channel and the second PC5 RLC channel configured after the end-to-end connection between the first UE and the second UE is established is referred to as the first mapping relationship). In some embodiments, the first PC5 RLC channel in the first mapping relationship includes a PC5 RLC channel (i.e., PC5 RLC channel(s)) between the relay UE and the first UE, and the second PC5 RLC channel in the first mapping relationship includes a PC5 RLC channel (i.e., PC5 RLC channel(s)) between the relay UE and the second UE. Alternatively, the first mapping relationship may be any one of one-to-one mapping, many-to-one mapping, or many-to-many mapping.

Exemplarily, when the first mapping relationship is the one-to-one mapping, a ratio of the number of the first PC5 RLC channels to the number of the second PC5 RLC channels in the first mapping relationship is 1:1. When the first mapping relationship is the many-to-one mapping, a ratio of the number of the first PC5 RLC channels to the number of the second PC5 RLC channels in the first mapping relationship is M:1. When the first mapping relationship is the many-to-many mapping, a ratio of the number of the first PC5 RLC channels to the number of the second PC5 RLC channels in the first mapping relationship is M:N. M may be any positive integer greater than 1, N may also be any positive integer greater than 1, and M may be different from N.

In a possible implementation, before forwarding the SL-SRB to the second UE through the second PC5 RLC channel, the relay UE may further perform adaptation layer processing on the data corresponding to the SL-SRB. Alternatively, a procedure of performing, by the relay UE, adaptation layer processing on the data corresponding to the SL-SRB includes:
after the relay UE receives the data corresponding to the SL-SRB from a radio link control (RLC) layer of a sidelink interface between the relay UE and the first UE, the relay UE may submit the data corresponding to the SL-SRB to an adaptation layer. After performing at least one of the following processing operations in the adaptation layer, the relay UE may submit the data corresponding to the SL-SRB to a RLC layer of a sidelink interface between the relay UE and the second UE.

A first processing operation includes: removing, by the relay UE, an original adaptation layer header for the data corresponding to the SL-SRB, and then adding a new adaptation layer header, wherein the new adaptation layer header at least comprises: identifier information of the SL-SRB, and identifier information of the second UE; and
a second processing operation includes: determining, by the relay UE, a second mapping relationship between the first PC5 RLC channel and the second PC5 RLC channel (for the convenience of description, the mapping relationship between the first PC5 RLC channel and the second PC5 RLC channel determined before the end-to-end connection between the first UE and the second UE is established is referred to as the second mapping relationship), and in the adaptation layer, performing mapping between the first PC5 RLC channel and the second PC5 RLC channel based on the second mapping relationship for the SL-SRB, wherein the second mapping relationship may be one-to-one mapping, many-to-one mapping, or many-to-many mapping.

The first mapping relationship may be the same as or different from the second mapping relationship, and the present disclosure does not specifically limit this.

In a possible implementation, the relay UE may determine the second mapping relationship by any of the following ways.
(1) The relay UE determines the second mapping relationship based on preconfiguration information (i.e., preconfiguration);
(2) the relay UE determines the second mapping relationship based on a protocol agreement;
(3) the relay UE determines the second mapping relationship based on a notification of the first UE (i.e., the second mapping relationship is determined by the first UE), and notifies the second UE of the second mapping relationship;
(4) the relay UE determines the second mapping relationship based on a notification of the second UE (i.e., the second mapping relationship is determined by the second UE), and notifies the first UE of the second mapping relationship; and
(5) the relay UE determines the second mapping relationship by itself, and notifies the first UE and/or the second UE of the second mapping relationship through a sidelink interface. That is, the relay UE may only notify the first UE, the relay UE may only notify the second UE, or the relay UE may notify the first UE and the second UE respectively.

It should be noted that the relay UE does not necessarily need to perform the above adaptation layer processing on the data corresponding to the SL-SRB. In addition to performing the adaptation layer processing on the data corresponding to the SL-SRB, in a possible implementation, before the relay UE forwards the SL-SRB to the second UE through the second PC5 RLC channel, the relay UE may further determine the second mapping relationship between the first PC5 RLC channel and the second PC5 RLC channel. At the RLC layer, the relay UE performs the mapping between the first PC5 RLC channel and the second PC5 RLC channel based on the second mapping relationship for the SL-SRB, wherein the second mapping relationship may be any one of one-to-one mapping, many-to-one mapping, or many-to-many mapping. In other words, the relay UE may perform the mapping between the first PC5 RLC channel and the second PC5 RLC channel based on the second mapping relationship at the RLC layer, determine the second PC5 RLC channel corresponding (i.e., mapped) to the first PC5 RLC channel, and thus forward the SL-SRB to the second UE through the mapped second PC5 RLC channel.

In a possible implementation, when the relay UE receives the SL-SRB transmitted from the first UE through the first PC5 RLC channel, a first target layer 2 (L2) destination used by the first UE (for the convenience of description, the target L2 destination used when the relay UE receives the SL-SRB transmitted from the first UE through the first PC5 RLC channel is referred to as the first target L2 destination) may be a target L2 destination of the relay UE. In addition, when the relay UE forwards the SL-SRB to the second UE through the second PC5 RLC channel, a second target L2 destination used by the relay UE (for the convenience of description, the target L2 destination used in the case that the relay UE forwards the SL-SRB to the second UE through the second PC5 RLC channel is referred to as the second target L2 destination) is a target L2 destination of the second UE.

In a possible implementation, the relay UE may obtain the target L2 destination of the second UE by any of the following ways.
(1) A media access control (MAC) layer of the relay UE receives indication information transmitted from a higher layer, wherein the indication information carries the target L2 destination of the second UE.
(2) The relay UE receives the target L2 destination of the second UE transmitted from the first UE through a sidelink interface.

In a possible implementation, the relay UE may receive the target L2 destination of the second UE transmitted from the first UE through the sidelink interface by any of the following ways.
(1) The relay UE receives a MAC PDU transmitted from the first UE through the sidelink interface, and obtains the target L2 destination of the second UE from the SL-SCH subheader of the MAC PDU.
(2) The relay UE receives a MAC PDU transmitted from the first UE through the sidelink interface, and obtains the target L2 destination of the second UE from the MAC subPDU subheader of the MAC PDU.
(3) The relay UE receives a PC5-RRC signaling or a media access control control element (MAC CE) through the sidelink interface, and obtains the target L2 destination of the second UE from the PC5-RRC signaling or the MAC CE.
(4) The relay UE receives SCI through the sidelink interface, and obtains the target target L2 destination of the second UE from the SCI.

It may be understood that in a possible implementation, when the SL-SRB received by the relay UE is not associated with specific indication information, it may be considered that the SL-SRB is transmitted from the first UE to the relay UE itself, and the relay UE does not need to forward the SL-SRB to the second UE.

In order to enable the first UE and the second UE to establish an end-to-end connection through the relay UE and perform data transmission through the end-to-end connection in the present disclosure, in the embodiments of the present disclosure, the relay UE supporting the U2U relay function receives the SL-SRB transmitted from a first UE through the PC5 RLC channel. The relay UE may forward the SL-SRB to a second UE through the second PC5 RLC channel in the case that specific indication information associated with the SL-SRB indicates that the SL-SRB is an end-to-end SL-SRB or in the case that the first PC5 RLC channel is a dedicated PC5 RLC channel for an end-to-end SL-SRB; wherein the first UE is any of two terminals that need to establish an end-to-end connection through the relay UE, the second UE is an end-to-end target communication counterpart of the first UE. Thus, the 1 end-to-end connection is established between the first UE and the second UE by the relay UE, and data transmission may be performed by the end-to-end connection.

Based on the same technical concept, the present disclosure provides another data transmission method for a UE-to-UE relay scenario. Referring to FIG. 7, FIG. 7 exemplarily shows a specific flow chart of another data transmission in the UE-to-UE relay scenario according to the embodiments of the present disclosure. As shown in FIG. 7, the procedure includes the following steps.

Step 700: A first UE determines a SL-SRB to be transmitted.

The present disclosure does not specifically limit the SL-SRB to be transmitted determined by the first UE.

Step 710: The first UE transmits the SL-SRB to a relay UE through a first PC5 RLC channel.

Step 720: The SL-SRB is associated with specific indication information, the specific indication information is used to indicate that the SL-SRB is forwarded to a second UE through a second PC5 RLC channel in the case that the SL-SRB is an end-to-end SL-SRB, or in the case that the first PC5 RLC channel is a dedicated PC5 RLC channel for an end-to-end SL-SRB. The dedicated PC5 RLC channel for the end-to-end SL-SRB is used to indicate that the SL-SRB is forwarded to a second UE through a second PC5 RLC channel in the case that the SL-SRB is an end-to-end SL-SRB; wherein the first UE is any of two terminals that need to establish an end-to-end connection through the relay UE, the second UE is an end-to-end target communication counterpart of the first UE, and the relay UE is a terminal that supports the U2U relay function.

Similar to the above embodiment, in a possible implementation, the SL-SRB may be used for carrying the PC5-S and/or PC5-RRC signaling. Alternatively, the SL-SRB may be used for carrying only PC5-S, the SL-SRB may also be used for carrying only PC5-RRC signaling, and the SL-SRB may also be used for carrying both PC5-S and PC5-RRC signaling.

In a possible implementation, a PC5-RRC signaling carried in the SL-SRB may be an end-to-end signaling transmitted between the first UE and the second UE after the end-to-end connection between the first UE and the second UE is established and before the receiving or transmitting of a PC5-RRC reconfiguration message is completed. In some embodiments, the PC5-RRC reconfiguration message may be a PC5-RRC signaling used for configuring a first mapping relationship between a first PC5 RLC channel and a second PC5 RLC channel after the end-to-end connection between the first UE and the second UE is established. The first PC5 RLC channel includes a PC5 RLC channel between the relay UE and the first UE, and the second PC5 RLC channel includes a PC5 RLC channel between the relay UE and the second UE; the first mapping relationship may be one-to-one mapping, many-to-one mapping, or many-to-many mapping.

In a possible implementation, the specific indication information associated with the SL-SRB may include any one of the following.

First specific indication information is indication information carried in a MAC subheader corresponding to a MAC subPDU carrying the SL-SRB.

Second specific indication information is indication information carried in the MAC subPDU carrying the SL-SRB.

Third specific indication information is indication information carried in a SL-SCH subheader corresponding to a MAC PDU carrying the SL-SRB.

Fourth specific indication information is indication information carried in SCI transmitted through a sidelink interface between the relay UE and the first UE, or through a sidelink interface between the relay UE and the second UE.

In a possible implementation, the indication information among the above-mentioned first to fourth specific indication information includes at least one of the following.
(1) The indication information may be used to indicate that the data corresponding to the SL-SRB needs to be forwarded;
(2) The indication information may be used to indicate that the data corresponding to the SL-SRB is data corresponding to the end-to-end SL-SRB; and
(3) The indication information may be used to indicate the data corresponding to the SL-SRB needs to be processed by an adaptation layer.

In a possible implementation, in the case that the first PC5 RLC channel is a dedicated PC5 RLC channel for end-to-end SL-SRB, the relay UE may forward the SL-SRB to the second UE through the second PC5 RLC channel.

In a possible implementation, the relay UE may determine the dedicated PC5 RLC channel by any of the following ways.

The relay UE determines the dedicated PC5 RLC channel used when the SL-SRB is transmitted at a sidelink interface based on preconfiguration information (i.e., preconfiguration); or
the relay UE determines the dedicated PC5 RLC channel used when the SL-SRB is transmitted at a sidelink interface based on a protocol agreement; or
the relay UE determines itself and broadcasts the dedicated PC5 RLC channel used when the SL-SRB is transmitted at a sidelink.

The present disclosure does not specifically limit the dedicated PC5 RLC channel, and it may be flexibly set according to requirements. In addition, the present disclosure does not specifically limit the number of dedicated PC5 RLC channels, and the number of dedicated PC5 RLC channels may be one or more.

In a possible implementation, before the first UE transmits the SL-SRB to the relay UE through the first PC5 RLC channel, the first UE transmits the data corresponding to the SL-SRB from a packet data convergence protocol (PDCP) layer to an adaptation layer. After performing at least one of the following processing operations in the adaptation layer, the data may be transmitted from the adaptation layer to a RLC layer.

A first operation: adding, by the first UE, an adaptation layer header to the data corresponding to the SL-SRB, wherein the adaptation layer header at least comprises: identifier information of the SL-SRB, and identifier information of the second UE; and
a second operation: determining, by the first UE, a third mapping relationship between a SL-SRB and a PC5 RLC channel, and in the adaptation layer, performing mapping between the SL-SRB and the PC5 RLC channel based on the third mapping relationship for the SL-SRB; wherein the third mapping relationship includes one-to-one mapping, many-to-one mapping, or many-to-many mapping.

It should be noted that, compared with the relay UE does not necessarily need to perform adaptation layer processing on the data corresponding to the SL-SRB, the first UE usually needs to perform the above adaptation layer processing on the data corresponding to the SL-SRB.

Exemplarily, when the third mapping relationship is the one-to-one mapping, a ratio of the number of the SL-SRBs to the number of the second PC5 RLC channels in the third mapping relationship is 1:1. When the third mapping relationship is the many-to-one mapping, a ratio of the number of the SL-SRBs to the number of the second PC5 RLC channels in the third mapping relationship is P:1. When the third mapping relationship is the many-to-many mapping, a ratio of the number of the SL-SRBs to the number of the second PC5 RLC channels in the third mapping relationship is P:Q. P may be any positive integer greater than 1, Q may also be any positive integer greater than 1, and P may be different from Q.

In a possible implementation, the first UE may determine the third mapping relationship by any of the following ways.
(1) The first UE determines the third mapping relationship based on preconfiguration information;
(2) the first UE determines the third mapping relationship based on a protocol agreement;
(3) the first UE determines the third mapping relationship by itself, and notifies the relay UE of the third mapping relationship, and then the relay UE notifies the second UE;
(4) the first UE receives the third mapping relationship forwarded from the relay UE, wherein the third mapping relationship is determined by the second UE itself; or
(5) the first UE receives the third mapping relationship determined by the relay UE itself and notified by the relay UE through a sidelink interface.

In a possible implementation, the first UE receives the SL-SRB from the higher layer and may determines that the SL-SRB is an end-to-end SL-SRB by at least one of the following ways before transmitting the SL-SRB to the relay UE through the first PC5 RLC.
(1) The SL-SRB is determined to be an end-to-end SL-SRB when a PC5-S and/or PC5-RRC signaling carries first indication information, wherein the first indication information is used to indicate that the PC5-S or PC5-RRC signaling is an end-to-end signaling between the first UE and the second UE;
(2) the SL-SRB is determined to be an end-to-end SL-SRB in the case that a target L2 destination indicated by a PC5-S and/or PC5-RRC signaling issued by a higher layer is an end-to-end target L2 destination; or
(3) the SL-SRB is determined to be an end-to-end SL-SRB in the case that a PC5-S and/or PC5-RRC signaling issued by a higher layer carries two target L2 destinations, one target L2 destination is an end-to-end target L2 destination, and the other target L2 destination is a target L2 destination used when performing data transmission between the first UE and the relay UE.

In a possible implementation, when the first UE transmits the SL-SRB to the relay UE through the first PC5 RLC channel for enabling the relay UE to determine the SL-SRB being an end-to-end SL-SRB based on the specific indication information associated with the SL-SRB and forward the SL-SRB to the second UE through the second PC5 RLC channel, the first target L2 destination used by the first UE for performing data transmission through the first PC5 RLC channel is a target L2 destination of the relay UE.

In a possible implementation, the first UE may transmit the target L2 destination of the second UE to the relay UE through a sidelink interface by any of the following ways.
(1) The first UE transmits a MAC PDU to the relay UE through a sidelink interface, wherein a SL-SCH subheader of the MAC PDU carries the target L2 destination of the second UE;
(2) the first UE transmits a MAC PDU to the relay UE through a sidelink interface, wherein a MAC sub-PDU subheader of the MAC PDU carries the target L2 destination of the second UE;
(3) the first UE transmits a separate PC5-RRC signaling or a MAC CE to the relay UE through a sidelink interface, wherein the separate PC5-RRC signaling or the MAC CE carries the target L2 destination of the second UE; or
(4) the first UE transmits SCI through a sidelink, wherein the SCI includes the target L2 destination of the second UE.

For the convenience of understanding, the above embodiments is further described in detail below through specific application scenarios.

Application scenario 1: Assuming that the specific indication information obtained by the relay UE is the first PC5 RLC channel and/or the second PC5 RLC channel carrying the SL-SRB, a dedicated PC5 RLC channel needs to be introduced for the SL-SRB, and the relay UE needs to perform adaptation layer processing on the data corresponding to the SL-SRB.

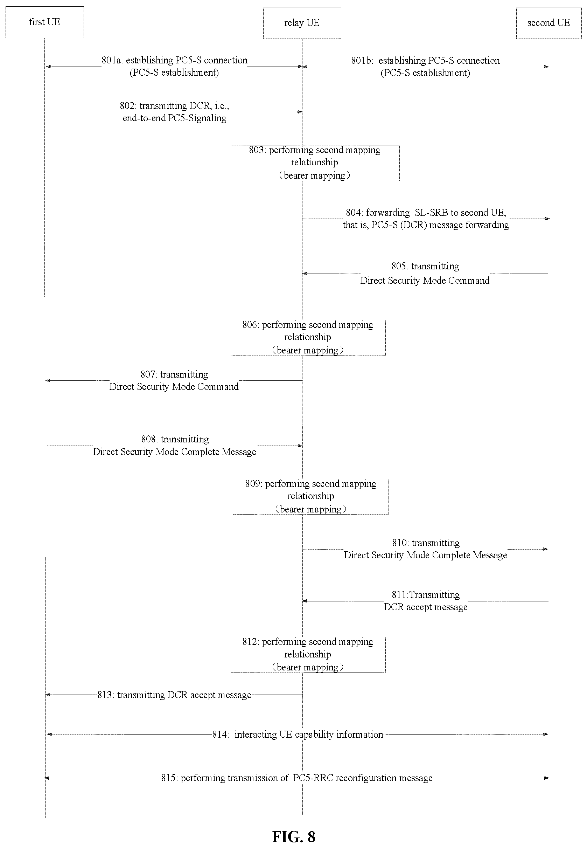

Referring to FIG. 8, FIG. 8 exemplarily shows a specific flow diagram of application scenario 1 according to some embodiments of the present disclosure. In the application scenario 1, the first UE and the second UE establish an end-to-end connection through the relay UE, and the detailed procedure of data transmission through the end-to-end connection is as follows.

Step 801a: A PC5-S connection is established between the relay UE and the first UE, that is, PC5-S establishment.

Step 801b: A PC5-S connection is established between the relay UE and the second UE, that is, PC5-S establishment.

The present disclosure does not specifically limit the order between step 801a and step 801b, that is, a PC5-S connection may be established between the relay UE and the first UE first, or a PC5-S connection may be established between the relay UE and the second UE first, or a PC5-S connection may be established between the relay UE and the first UE and between the relay UE and the second UE simultaneously.

Step 802: The first UE transmits a direct communication request (DCR) message (also called an end-to-end connection establishment request message) to the relay UE, that is, end-to-end PC5-Signaling.

When performing step 802, DCR may be PC5-S signaling. After receiving the PC5-S signaling from the higher layer, the first UE needs to first determine whether the received SL-SRB is an end-to-end SL-SRB.

Exemplarily, after receiving PC5-S signaling from the higher layer, that is, receiving SL-SRB, the first UE may determine whether the received SL-SRB is an end-to-end SL-SRB in at least one of the following ways.

Way 1: The SL-SRB is determined to be an end-to-end SL-SRB when it is determined that the PC5-S or PC5-RRC signaling issued by the higher layer carries first indication information, wherein the first indication information is used to indicate that the PC5-S or PC5-RRC signaling is an end-to-end signaling between the first UE and the second UE.

Way 2: The SL-SRB is determined to be an end-to-end SL-SRB when it is determined that a target L2 destination indicated by the PC5-S and/or PC5-RRC signaling issued by the higher layer is an end-to-end target L2 destination.

Way 3: The SL-SRB is determined to be an end-to-end SL-SRB when it is determined that the PC5-S and/or PC5-RRC signaling issued by the higher layer carries two target L2 destinations, one target L2 destination is an end-to-end target L2 destination, and the other target L2 destination is a target L2 destination used when performing data transmission between the first UE and the relay UE.

Alternatively, in the case that the SL-SRB is an end-to-end SL-SRB, when the first UE transfers the data corresponding to the SL-SRB from the PDCP layer to the RLC layer, the first UE may first transmit the data corresponding to the SL-SRB from the PDCP layer to the adaptation layer, and then transmit the data corresponding to the SL-SRB from the adaptation layer to the RLC layer after at least one of the following processing operations is performed in the adaptation layer.

A first operation: adding, by the first UE, an adaptation layer header to the data corresponding to the SL-SRB, wherein the adaptation layer header at least comprises: identifier information of the SL-SRB, and identifier information of the second UE; and
a second operation: determining, by the first UE, a third mapping relationship between a SL-SRB and a PC5 RLC channel, and in the adaptation layer, performing mapping between the SL-SRB and the PC5 RLC channel based on the third mapping relationship for the SL-SRB; wherein the third mapping relationship may be any one of one-to-one mapping, many-to-one mapping, or many-to-many mapping. Exemplarily, the first UE may map the SL-SRB to the corresponding first PC5 RLC channel in the adaptation layer based on the third mapping relationship. The first PC5 RLC channel may be a dedicated PC5 RLC channel.

In a possible implementation, the first UE may determine the third mapping relationship by any of the following ways.
(1) The first UE determines the third mapping relationship based on preconfiguration information.
(2) The first UE determines the third mapping relationship based on a protocol agreement.
(3) The first UE determines the third mapping relationship by itself, and notifies the relay UE of the third mapping relationship, and then the relay UE notifies the second UE.
(4) The first UE receives the third mapping relationship forwarded from the relay UE, wherein the third mapping relationship is determined by the second UE itself.
(5) The first UE receives the third mapping relationship determined by the relay UE itself and notified by the relay UE through a sidelink interface.

Alternatively, when the first UE transmits the SL-SRB to the relay UE through the first PC5 RLC channel, the first target L2 destination used by the first UE may be a target L2 destination of the relay UE.

Step 803: The relay UE performs the second mapping relationship (bearer mapping).

When performing step 803, in order to ensure end-to-end SL-SRB transmission, after receiving the DCR message, the relay UE performs adaptation layer processing on the data corresponding to the SL-SRB. Specifically, the procedure of performing adaptation layer processing on the data corresponding to the SL-SRB by the relay UE is as follows.

After receiving the data corresponding to the SL-SRB from a RLC layer of a sidelink interface between the relay UE and the first UE, the relay UE submits the data corresponding to the SL-SRB to the adaptation layer. And after performing at least one of the following processing operations in the adaptation layer, the relay UE may transmit the data corresponding to the SL-SRB after processed to a RLC layer of a sidelink interface between the relay UE and the second UE.

A first processing operation includes: removing, by the relay UE, an original adaptation layer header for the data corresponding to the SL-SRB, and then adding a new adaptation layer header, wherein the new adaptation layer header at least includes: identifier information of the SL-SRB, and identifier information of the second UE; and
a second processing operation includes: determining, by the relay UE, a second mapping relationship between the first PC5 RLC channel and the second PC5 RLC channel, and in the adaptation layer, performing mapping between the first PC5 RLC channel and the second PC5 RLC channel based on the second mapping relationship for the SL-SRB, and mapping the first PC5 RLC channel carrying the SL-SRB to the corresponding second PC5 RLC channel. The second mapping relationship may be any one of one-to-one mapping, many-to-one mapping, or many-to-many mapping.

Alternatively, the relay UE determines the second mapping relationship by any of the following ways.
(1) The relay UE determines the second mapping relationship based on preconfiguration information (i.e., preconfiguration).
(2) The relay UE determines the second mapping relationship based on a protocol agreement.
(3) The relay UE determines the second mapping relationship based on a notification of the first UE (i.e., the second mapping relationship is determined by the first UE), and notifies the second UE of the second mapping relationship.
(4) The relay UE determines the second mapping relationship based on a notification of the second UE (i.e., the second mapping relationship is determined by the second UE), and notifies the first UE of the second mapping relationship.
(5) The relay UE determines the second mapping relationship by itself, and notifies the first UE and/or the second UE of the second mapping relationship through a sidelink interface. That is, the relay UE may only notify the first UE, the relay UE may only notify the second UE, or the relay UE may notify the first UE and the second UE separately.

Step 804: The relay UE forwards the SL-SRB to the second UE based on the second PC5 RLC channel selected in step 803, that is, PC5-S (DCR) message forwarding.

Alternatively, after receiving the SL-SRB based on the second PC5 RLC channel selected in step 803, the second UE may determine whether the second PC5 RLC channel is a dedicated PC5 RLC channel specifically used for carrying end-to-end data. In the case that the second PC5 RLC channel is a dedicated PC5 RLC channel specifically used for carrying end-to-end data, the second UE may transmit the SL-SRB to the adaptation layer. The adaptation layer determines a PDCP entity corresponding to the SL-SRB based on the identifier information of the SL-SRB and the identifier information of the second UE included in the adaptation layer header, and transmits the SL-SRB to the corresponding PDCP entity.

Alternatively, when the relay UE forwards the SL-SRB to the corresponding second UE through the second PC5 RLC channel, the second target L2 destination used by the relay UE may be a target L2 destination of the second UE.

In some embodiments, the relay UE may obtain the target L2 destination of the second UE by any of the following ways.
(1) A MAC layer of the relay UE receives indication information transmitted from a higher layer, wherein the indication information carries the target L2 destination of the second UE.
(2) The relay UE receives the target L2 destination of the second UE transmitted from the first UE through a sidelink interface.

In some embodiments, the relay UE may receive the target L2 destination of the second UE transmitted from the first UE through the sidelink interface by any of the following ways.
(1) The relay UE receives a MAC PDU transmitted from the first UE through a sidelink interface, and obtains the target L2 destination of the second UE from the SL-SCH subheader of the MAC PDU.
(2) The relay UE receives a MAC PDU transmitted from the first UE through a sidelink interface, and obtains the target L2 destination of the second UE from the MAC subPDU subheader of the MAC PDU.
(3) The relay UE receives a PC5-RRC signaling or a media access control layer (MAC) control element (CE) through a sidelink interface, and obtaining the target L2 destination of the second UE from the PC5-RRC signaling or the MAC CE; or
(4) The relay UE receives SCI through a sidelink interface, and obtains the target target L2 destination of the second UE from the SCI.

Step 805: The second UE transmits a Direct Security Mode Command to the relay UE.

Step 806: The relay UE performs the second mapping relationship (bearer mapping).

When performing the step 806, in order to ensure the transmission of the Direct Security Mode Command, after receiving the Direct Security Mode Command, the relay UE may map the second PC5 RLC channel carrying the Direct Security Mode Command to the corresponding first PC5 RLC channel based on the second mapping relationship.

Step 807: The relay UE transmits the Direct Security Mode Command to the first UE.

When performing the step 807, the relay UE may transmit the Direct Security Mode Command to the first UE through the first PC5 RLC channel selected based on the second mapping relationship.

Step 808: The first UE transmits a Direct Security Mode Complete Message to the relay UE.

After receiving the Direct Security Mode Command forwarded by the relay UE, the first UE may transmit the Direct Security Mode Complete Message to the relay UE.

Step 809: The relay UE performs the second mapping relationship (bearer mapping).

When performing the step 809, in order to ensure the transmission of the Direct Security Mode Complete Message, after receiving the Direct Security Mode Complete Message, the relay UE may map the first PC5 RLC channel carrying the Direct Security Mode Complete Message to the corresponding second PC5 RLC channel based on the second mapping relationship.

Step 810: The relay UE transmits the Direct Security Mode Complete Message to the second UE.

After receiving the Direct Security Mode Complete Message, the relay UE may transmit the Direct Security Mode Complete Message to the second UE.

When performing the step 810, the relay UE may transmit the Direct Security Mode Complete Message to the second UE through the second PC5 RLC channel selected based on the second mapping relationship.

Step 811: The second UE transmits a DCR accept message to the relay UE.

After receiving the Direct Security Mode Complete Message, the second UE may transmit the DCR accept message to the relay UE.

Step 812: The relay UE performs the second mapping relationship (bearer mapping).

When performing the step 812, in order to ensure the transmission of the DCR accept message, after receiving the DCR accept message, the relay UE may map the second PC5 RLC channel carrying the DCR accept message to the corresponding first PC5 RLC channel based on the second mapping relationship.

Step 813: The relay UE transmits the DCR accept message to the first UE.

When performing the step 813, the relay UE may transmit the DCR accept message to the first UE through the first PC5 RLC channel selected based on the second mapping relationship.

Step 814: The first UE and the second UE interact UE capability information.

Step 815: Transmission of a PC5-RRC reconfiguration message is performed between the first UE and the second UE, and the PC5-RRC reconfiguration message may be used for configuring the mapping relationship between the first PC5 RLC channel and the second PC5 RLC channel.

Application scenario 2: Assuming that the specific indication information obtained by the relay UE is the first PC5 RLC channel and/or the second PC5 RLC channel carrying the SL-SRB, a dedicated PC5 RLC channel needs to be introduced for the SL-SRB, and the relay UE does not need to perform adaptation layer processing on the data corresponding to the SL-SRB.

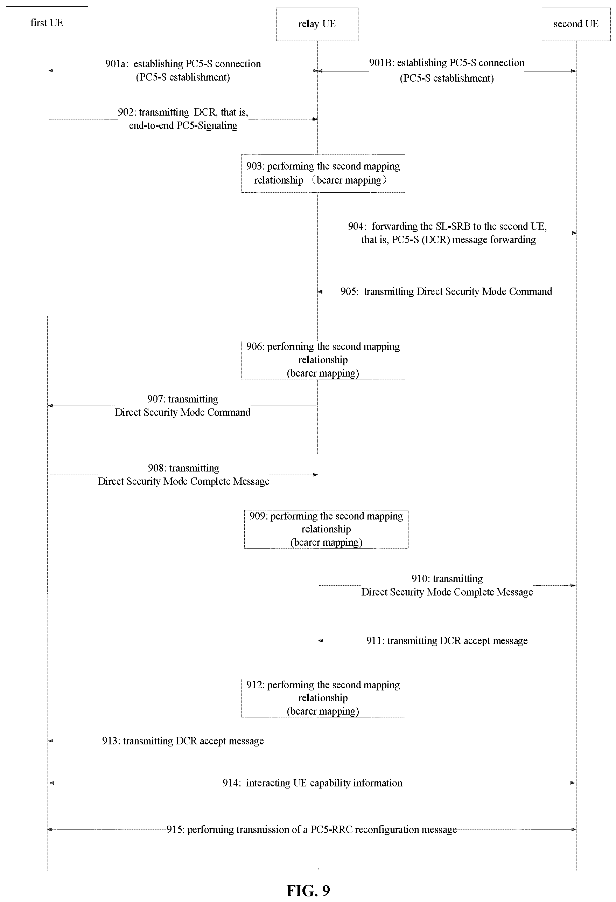

Referring to FIG. 9, FIG. 9 exemplarily shows a specific flow diagram of application scenario 2 according to some embodiments of the present disclosure. In the application scenario 2, the first UE and the second UE establish an end-to-end connection through the relay UE, and the detailed procedure of data transmission through the end-to-end connection is as follows.

Step 901a: A PC5-S connection is established between the relay UE and the first UE, that is, PC5-S establishment.

Step 901b: A PC5-S connection is established between the relay UE and the second UE, that is, PC5-S establishment.

The present disclosure does not specifically limit the order between step 901a and step 901b, that is, a PC5-S connection may be established between the relay UE and the first UE first, or a PC5-S connection may be established between the relay UE and the second UE first, or a PC5-S connection may be established between the relay UE and the first UE and between the relay UE and the second UE simultaneously.

Step 902: The first UE transmits a direct communication request message (also called an end-to-end connection establishment request message, DCR) to the relay UE, that is, end-to-end PC5-Signaling.

When performing the step 902, DCR may be PC5-S signaling. After receiving the PC5-S signaling from the higher layer, the first UE needs to first determine whether the received SL-SRB is an end-to-end SL-SRB.

Exemplarily, after receiving PC5-S signaling from the higher layer, that is, after receiving SL-SRB, the first UE may determine whether the received SL-SRB is an end-to-end SL-SRB in at least one of the following ways.

Way 1: The SL-SRB is determined to be an end-to-end SL-SRB when it is determined that the PC5-S or PC5-RRC signaling issued by the higher layer carries the first indication information, wherein the first indication information is used to indicate that the PC5-S or PC5-RRC signaling is an end-to-end signaling between the first UE and the second UE.

Way 2: The SL-SRB is determined to be an end-to-end SL-SRB when it is determined that a target layer 2 (L2) destination indicated by a PC5-S and/or PC5-RRC signaling issued by the higher layer is an end-to-end target L2 destination.

Way 3: The SL-SRB is determined to be an end-to-end SL-SRB when it is determined that a PC5-S and/or PC5-RRC signaling issued by a higher layer carries two target L2 destinations, one target L2 destination is an end-to-end target L2 destination, and the other target L2 destination is a target L2 destination used when performing data transmission between the first UE and the relay UE.

Alternatively, in the case that the SL-SRB is an end-to-end SL-SRB, in the case that the first UE transfers the data corresponding to the SL-SRB from the PDCP layer to the RLC layer, the first UE may first transmit the data corresponding to the SL-SRB from the PDCP layer to the adaptation layer, and then transmit the data corresponding to the SL-SRB from the adaptation layer to the RLC layer after at least one of the following processing operations is performed in the adaptation layer.

A first operation: adding, by the first UE, an adaptation layer header to the data corresponding to the SL-SRB, wherein the adaptation layer header at least comprises: identifier information of the SL-SRB, and identifier information of the second UE; and
a second operation: determining, by the first UE, a third mapping relationship between a SL-SRB and a PC5 RLC channel, and in the adaptation layer, performing mapping between the SL-SRB and the PC5 RLC channel based on the third mapping relationship for the SL-SRB; wherein the third mapping relationship may be any one of one-to-one mapping, many-to-one mapping, or many-to-many mapping. Exemplarily, the first UE may map the SL-SRB to the corresponding first PC5 RLC channel in the adaptation layer based on the third mapping relationship. The first PC5 RLC channel may be a dedicated PC5 RLC channel.

In a possible implementation, the first UE may determine the third mapping relationship by any of the following ways.
(1) The first UE determines the third mapping relationship based on preconfiguration information.
(2) The first UE determines the third mapping relationship based on a protocol agreement.
(3) The first UE determines the third mapping relationship by itself, and notifies the relay UE of the third mapping relationship, wherein the relay UE notifies the second UE.
(4) The first UE receives the third mapping relationship forwarded from the relay UE. wherein the third mapping relationship is determined by the second UE itself; or
(5) The first UE receives the third mapping relationship determined by the relay UE itself and notified by the relay UE through a sidelink interface.

Alternatively, when the first UE transmits the SL-SRB to the relay UE through a first PC5 RLC channel, the first target L2 destination used by the first UE may be a target L2 destination of the relay UE.

Step 903: The relay UE performs the second mapping relationship (bearer mapping).

IWhen performing the step 903, in order to ensure transmission of the end-to-end SL-SRB, after receiving the DCR message, the relay UE determines the second mapping relationship between the first PC5 RLC channel and the second PC5 RLC channel, and at the RLC layer, performs mapping between the first PC5 RLC channel and the second PC5 RLC channel based on the second mapping relationship for the SL-SRB; wherein the second mapping relationship may be any one of one-to-one mapping, many-to-one mapping, or many-to-many mapping.

Alternatively, the relay UE determines the second mapping relationship by any of the following ways.
(1) The relay UE determines the second mapping relationship based on preconfiguration information (i.e., preconfiguration).
(2) The relay UE determines the second mapping relationship based on a protocol agreement.
(3) The relay UE determines the second mapping relationship based on a notification of the first UE (i.e., the second mapping relationship is determined by the first UE), and notifies the second UE of the second mapping relationship.
(4) The relay UE determines the second mapping relationship based on a notification of the second UE (i.e., the second mapping relationship is determined by the second UE), and notifies the first UE of the second mapping relationship.
(5) The relay UE determines the second mapping relationship by itself, and notifies the first UE and/or the second UE of the second mapping relationship through a sidelink interface. That is, the relay UE may only notify the first UE, the relay UE may only notify the second UE, or the relay UE may notify the first UE and the second UE separately.

Step 904: The relay UE forwards the SL-SRB to the second UE based on the second PC5 RLC channel selected in step 903, that is, PC5-S (DCR) message forwarding.

Alternatively, when the relay UE forwards the SL-SRB to the corresponding second UE through the second PC5 RLC channel, the second target L2 destination used by the relay UE may be a target L2 destination of the second UE.

In some embodiments, the relay UE may obtain the target L2 destination of the second UE by any of the following ways.
(1) A media access control (MAC) layer of the relay UE receives indication information transmitted from a higher layer, wherein the indication information carries the target L2 destination of the second UE.
(2) The relay UE receives the target L2 destination of the second UE transmitted from the first UE through a sidelink interface.

In some embodiments, the relay UE may receive the target L2 destination of the second UE transmitted from the first UE through the sidelink interface by any of the following ways.
(1) The relay UE receives a MAC PDU transmitted from the first UE through a sidelink interface, and obtains the target L2 destination of the second UE from the SL-SCH subheader of the MAC PDU.
(2) The relay UE receives a MAC PDU transmitted from the first UE through a sidelink interface, and obtains the target L2 destination of the second UE from the MAC subPDU subheader of the MAC PDU.
(3) The relay UE receives a PC5-RRC signaling or a media access control layer (MAC) control element (CE) through a sidelink interface, and obtaining the target L2 destination of the second UE from the PC5-RRC signaling or the MAC CE; or
(4) The relay UE receives SCI through a sidelink interface, and obtains the target target L2 destination of the second UE from the SCI.

Step 905: The second UE transmits a Direct Security Mode Command to the relay UE.

Step 906: The relay UE performs the second mapping relationship (bearer mapping).

When performing the step 906, in order to ensure the transmission of the Direct Security Mode Command, after receiving the Direct Security Mode Command, the relay UE may map the second PC5 RLC channel carrying the Direct Security Mode Command to the corresponding first PC5 RLC channel based on the second mapping relationship.

Step 907: The relay UE transmits the Direct Security Mode Command to the first UE.

When performing the step 907, the relay UE may transmit the Direct Security Mode Command to the first UE through the first PC5 RLC channel selected based on the second mapping relationship.

Step 908: The first UE transmits a Direct Security Mode Complete Message to the relay UE.

After receiving the Direct Security Mode Command forwarded by the relay UE, the first UE may transmit the Direct Security Mode Complete Message to the relay UE.

Step 909: The relay UE performs the second mapping relationship (bearer mapping).

When performing the step 909, in order to ensure the transmission of the Direct Security Mode Complete Message, after receiving the Direct Security Mode Complete Message, the relay UE may map the first PC5 RLC channel carrying the Direct Security Mode Complete Message to the corresponding second PC5 RLC channel based on the second mapping relationship.

Step 910: The relay UE transmits the Direct Security Mode Complete Message to the second UE.

After receiving the Direct Security Mode Complete Message, the relay UE may transmit the Direct Security Mode Complete Message to the second UE.

When performing the step 910, the relay UE may transmit the Direct Security Mode Complete Message to the second UE through the second PC5 RLC channel selected based on the second mapping relationship.

Step 911: The second UE transmits a DCR accept message to the relay UE.

After receiving the Direct Security Mode Complete Message, the second UE may transmit the DCR accept message to the relay UE.

Step 912: The relay UE performs the second mapping relationship (bearer mapping).

When performing the step 912, in order to ensure the transmission of the DCR accept message, after receiving the DCR accept message, the relay UE may map the second PC5 RLC channel carrying the DCR accept message to the corresponding first PC5 RLC channel based on the second mapping relationship.

Step 913: The relay UE transmits the DCR accept message to the first UE.

When performing the step 913, the relay UE may transmit the DCR accept message to the first UE through the first PC5 RLC channel selected based on the second mapping relationship.

Step 914: The first UE and the second UE interact UE capability information.

Step 915: Transmission of a PC5-RRC reconfiguration message is performed between the first UE and the second UE, and the PC5-RRC reconfiguration message may be used for configuring the mapping relationship between the first PC5 RLC channel and the second PC5 RLC channel.

Application scenario 3: Assuming that the relay UE needs to perform adaptation layer processing on the data corresponding to the SL-SRB, the specific indication information obtained by the relay UE is the first to fourth specific indication information mentioned above. A dedicated PC5 RLC channel does not need to be introduced for the SL-SRB. That is to say, the specific indication information obtained by the relay UE includes any of the following.

First specific indication information is indication information carried in a MAC subheader corresponding to a MAC subPDU carrying the SL-SRB.

Second specific indication information is indication information carried in the MAC subPDU carrying the SL-SRB.

Third specific indication information is indication information carried in a SL-SCH subheader corresponding to a MAC PDU carrying the SL-SRB.

Fourth specific indication information is indication information carried in SCI transmitted through a sidelink interface between the relay UE and the first UE, or through a sidelink interface between the relay UE and the second UE.

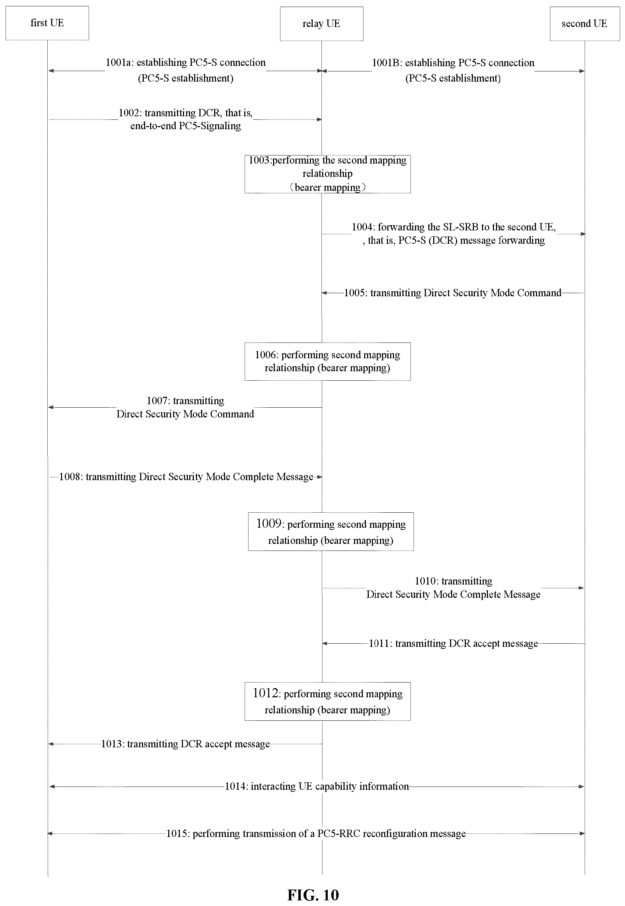

Referring to FIG. 10, FIG. 10 exemplarily shows a specific flow diagram of application scenario 3 according to some embodiments of the present disclosure. In the application scenario 3, the first UE and the second UE establish an end-to-end connection through the relay UE, and the detailed procedure of data transmission through the end-to-end connection is as follows.

Step 1001a: A PC5-S connection is established between the relay UE and the first UE, that is, PC5-S establishment.

Step 1001b: A PC5-S connection is established between the relay UE and the second UE, that is, PC5-S establishment.

The present disclosure does not specifically limit the order between step 1001a and step 1001b, that is, a PC5-S connection may be established between the relay UE and the first UE first, or a PC5-S connection may be established between the relay UE and the second UE first, or a PC5-S connection may be established between the relay UE and the first UE and between the relay UE and the second UE simultaneously.

Step 1002: The first UE transmits a direct communication request message (also called an end-to-end connection establishment request message, DCR) to the relay UE, that is, end-to-end PC5-Signaling.

When performing the step 1002 is performed, DCR may be PC5-S signaling. After receiving the PC5-S signaling from the higher layer, the first UE needs to first determine whether the received SL-SRB is an end-to-end SL-SRB.

Exemplarily, after receiving PC5-S signaling from the higher layer, that is, receiving SL-SRB, the first UE may determine whether the received SL-SRB is an end-to-end SL-SRB in at least one of the following ways.

Way 1: The SL-SRB is determined to be an end-to-end SL-SRB when it is determined that the PC5-S or PC5-RRC signaling issued by the higher layer carries the first indication information, wherein the first indication information is used to indicate that the PC5-S or PC5-RRC signaling is an end-to-end signaling between the first UE and the second UE.

Way 2: The SL-SRB is determined to be an end-to-end SL-SRB when it is determined that a target L2 destination indicated by a PC5-S and/or PC5-RRC signaling issued by the higher layer is an end-to-end target L2 destination.

Way 3: The SL-SRB is determined to be an end-to-end SL-SRB when it is determined that a PC5-S and/or PC5-RRC signaling issued by a higher layer carries two target L2 destinations, one target L2 destination is an end-to-end target L2 destination, and the other target L2 destination is a target L2 destination used when performing data transmission between the first UE and the relay UE.

Alternatively, in the case that the SL-SRB is an end-to-end SL-SRB, in the case that the first UE transfers the data corresponding to the SL-SRB from the PDCP layer to the RLC layer, the first UE may first transmit the data corresponding to the SL-SRB from the PDCP layer to the adaptation layer, and then transmit the data corresponding to the SL-SRB from the adaptation layer to the RLC layer after at least one of the following processing operations is performed in the adaptation layer.

A first operation: adding, by the first UE, an adaptation layer header to the data corresponding to the SL-SRB, wherein the adaptation layer header at least comprises: identifier information of the SL-SRB, and identifier information of the second UE; and
a second operation: determining, by the first UE, the third mapping relationship between the SL-SRB and a PC5 RLC channel, and in the adaptation layer, performing mapping between the SL-SRB and the PC5 RLC channel based on the third mapping relationship for the SL-SRB, and mapping the first PC5 RLC channel carrying the SL-SRB to the corresponding second PC5 RLC channel. In some embodiments, the third mapping relationship may be the one-to-one mapping. Exemplarily, for the DCR message, in the case that the logical channel ID (LCID) of the first PC5 RLC channel carrying the SL-SRB between the first UE and the relay UE is 1, that is, LCID=1, the SL-SRB may also be forwarded through the second PC5 RLC channel between the relay UE and the second UE with the LCID of 1.

In a possible implementation, the first UE may determine the third mapping relationship by any of the following ways.
(1) The first UE determines the third mapping relationship based on preconfiguration information.
(2) The first UE determines the third mapping relationship based on a protocol agreement.
(3) The first UE determines the third mapping relationship by itself, and notifies the relay UE of the third mapping relationship, wherein the relay UE notifies the second UE.
(4) The first UE receives the third mapping relationship forwarded from the relay UE, wherein the third mapping relationship is determined by the second UE itself.
(5) The first UE receives the third mapping relationship determined by the relay UE itself and notified by the relay UE through a sidelink interface.

Alternatively, in the case that the SL-SRB is an end-to-end SL-SRB between the first UE and the second UE, any one of the following operations may be performed in the MAC layer to determine the specific indication information associated with the SL-SRB.
(1) A method for determining the first specific indication information includes carrying the indication information in the MAC subheader corresponding to the MAC subPDU carrying the SL-SRB.
(2) A method for determining the second specific indication information includes carrying the indication information in the MAC subPDU carrying the SL-SRB.
(3) A method for determining the third specific indication information includes carrying the indication information in the SL-SCH subheader corresponding to the MAC PDU carrying the SL-SRB.
(4) A method for determining the fourth specific indication information includes carrying the indication information in SCI transmitted through a sidelink interface between the relay UE and the first UE, or through a sidelink interface between the relay UE and the second UE.

In some embodiments, for the first specific indication information, when the specific indication information is the indication information carried in the MAC subheader corresponding to the MAC subPDU carrying the SL-SRB, referring again to FIG. 5, the MAC subheader may include an R field, an F field, a LCID field, and an L field. In a possible implementation, the R field in the MAC subheader may be used for carrying the indication information, that is, the specific indication information may be indication information carried in the R field of the MAC subheader corresponding to the MAC subPDU carrying the SL-SRB. The indication information may indicate that the data corresponding to the SL-SRB needs to be forwarded, or indicate that the data corresponding to the SL-SRB is data corresponding to the end-to-end SL-SRB, or indicate that the data corresponding to the SL-SRB needs to be processed by the adaptation layer. Alternatively, after obtaining the specific indication information associated with the SL-SRB, the relay UE may learn that the SL-SRB needs to be forwarded to the second UE based on the indication information.

For the second specific indication information, when the specific indication information is the indication information carried in the MAC subPDU carrying the SL-SRB itself, a first bit or a last bit in the MAC subPDU may be used for carrying the indication information, that is, the specific indication information may be the indication information carried in the first bit or the last bit in the MAC subPDU carrying the SL-SRB. The indication information may indicate that the data corresponding to the SL-SRB needs to be forwarded, or indicate that the data corresponding to the SL-SRB is data corresponding to the end-to-end SL-SRB, or indicate that the data corresponding to the SL-SRB needs to be processed by the adaptation layer. Alternatively, after obtaining the specific indication information associated with the SL-SRB, the relay UE may learn that the SL-SRB needs to be forwarded to the second UE based on the indication information.

In some embodiments, for the third specific indication information, when the specific indication information is the indication information carried in the SL-SCH subheader corresponding to the MAC PDU carrying the SL-SRB, referring again to FIG. 6, the SL-SCH subheader may include an R field, a V field, an SRC field, and a DST field. In a possible implementation, the R field in the SL-SCH subheader may be used for carrying the indication information, that is, the specific indication information may be indication information carried in the R field of the SL-SCH subheader corresponding to the MAC PDU carrying the SL-SRB. The indication information may indicate that the data corresponding to the SL-SRB needs to be forwarded, or indicate that the data corresponding to the SL-SRB is data corresponding to the end-to-end SL-SRB, or indicate that the data corresponding to the SL-SRB needs to be processed by the adaptation layer. Alternatively, after obtaining the specific indication information associated with the SL-SRB, the relay UE may learn that the SL-SRB needs to be forwarded to the second UE based on the indication information.

For the fourth specific indication information, when the specific indication information is the indication information carried in the SCI, one bit may be added to the SCI to carry the indication information, that is, the specific indication information may be the indication information carried in one bit added in the SCI. The indication information may indicate that the data corresponding to the SL-SRB needs to be forwarded, or indicate that the data corresponding to the SL-SRB is data corresponding to the end-to-end SL-SRB, or indicate that the data corresponding to the SL-SRB needs to be processed by the adaptation layer. Alternatively, after obtaining the specific indication information associated with the SL-SRB, the relay UE may learn that the SL-SRB needs to be forwarded to the second UE based on the indication information.

Alternatively, when the first UE transmits the SL-SRB to the relay UE through a first PC5 RLC channel, the first target L2 destination used by the first UE may be a target L2 destination of the relay UE.

Step 1003: The relay UE performs the second mapping relationship (bearer mapping).

When performing the step 1003, after receiving the SL-SRB from the first UE, the relay UE may determine that the data corresponding to the SL-SRB needs to be submitted to the adaptation layer based on the indication information carried in the MAC subheader of the above-mentioned MAC subPDU, or the indication information carried in the MAC subPDU, or the indication information carried in the SL-SCH subheader, or the indication information carried in the SCI, that is, the relay UE performs adaptation layer processing on the data corresponding to the SL-SRB.

In order to ensure end-to-end SL-SRB transmission, the relay UE may perform, in the adaptation layer, mapping between the first PC5 RLC channel and the second PC5 RLC channel based on the second mapping relationship, and map the first PC5 RLC channel carrying the SL-SRB to the corresponding second PC5 RLC channel. In some embodiments, the second mapping relationship may be the one-to-one mapping. Exemplarily, for the DCR message, in the case that the first UE transmits the SL-SRB to the relay UE based on the first PC5 RLC channel with LCID of 1, the relay UE may also forward the SL-SRB to the second UE based on the second PC5 RLC channel with LCID of 1 when forwarding the SL-SRB to the second UE.

Step 1004: The relay UE forwards the SL-SRB to the second UE based on the second PC5 RLC channel selected in step 1003, that is, PC5-S (DCR) message forwarding.

Alternatively, when the relay UE forwards the SL-SRB to the corresponding second UE through the second PC5 RLC channel, the second target L2 destination used by the relay UE may be a target L2 destination of the second UE.

In some embodiments, the relay UE may obtain the target L2 destination of the second UE by any of the following ways.
(1) A media access control (MAC) layer of the relay UE receives indication information transmitted from a higher layer, wherein the indication information carries the target L2 destination of the second UE.
(2) The relay UE receives the target L2 destination of the second UE transmitted from the first UE through a sidelink interface.

In some embodiments, the relay UE may receive the target L2 destination of the second UE transmitted from the first UE through the sidelink interface by any of the following ways.
(1) The relay UE receives a MAC PDU transmitted from the first UE through a sidelink interface, and obtains the target L2 destination of the second UE from the SL-SCH subheader of the MAC PDU.
(2) The relay UE receives a MAC PDU transmitted from the first UE through a sidelink interface, and obtains the target L2 destination of the second UE from the MAC subPDU subheader of the MAC PDU.
(3) The relay UE receives a PC5-RRC signaling or a media access control layer (MAC) control element (CE) through a sidelink interface, and obtaining the target L2 destination of the second UE from the PC5-RRC signaling or the MAC CE; or
(4) The relay UE receives SCI through a sidelink interface, and obtains the target target L2 destination of the second UE from the SCI.

Step 1005: The second UE transmits a Direct Security Mode Command to the relay UE.

Step 1006: The relay UE performs the second mapping relationship (bearer mapping).

When performing the step 1006, in order to ensure the transmission of the Direct Security Mode Command, after receiving the Direct Security Mode Command, the relay UE may map the second PC5 RLC channel carrying the Direct Security Mode Command to the corresponding first PC5 RLC channel based on the second mapping relationship.

Step 1007: The relay UE transmits the Direct Security Mode Command to the first UE.

When performing the step 1007, the relay UE may transmit the Direct Security Mode Command to the first UE through the first PC5 RLC channel selected based on the second mapping relationship.

Step 1008: The first UE transmits a Direct Security Mode Complete Message to the relay UE.

After receiving the Direct Security Mode Command forwarded by the relay UE, the first UE may transmit the Direct Security Mode Complete Message to the relay UE.

Step 1009: The relay UE performs the second mapping relationship (bearer mapping).

When performing the step 1009, in order to ensure the transmission of the Direct Security Mode Complete Message, after receiving the Direct Security Mode Complete Message, the relay UE may map the first PC5 RLC channel carrying the Direct Security Mode Complete Message to the corresponding second PC5 RLC channel based on the second mapping relationship.

Step 1010: The relay UE transmits the Direct Security Mode Complete Message to the second UE.

After receiving the Direct Security Mode Complete Message, the relay UE may transmit the Direct Security Mode Complete Message to the second UE.

When performing the step 1010, the relay UE may transmit the Direct Security Mode Complete Message to the second UE through the second PC5 RLC channel selected based on the second mapping relationship.

Step 1011: The second UE transmits a DCR accept message to the relay UE.

After receiving the Direct Security Mode Complete Message, the second UE may transmit the DCR accept message to the relay UE.

Step 1012: The relay UE performs the second mapping relationship (bearer mapping).

When performing the step 1012, in order to ensure the transmission of the DCR accept message, after receiving the DCR accept message, the relay UE may map the second PC5 RLC channel carrying the DCR accept message to the corresponding first PC5 RLC channel based on the second mapping relationship.

Step 1013: The relay UE transmits the DCR accept message to the first UE.

When performing the step 1013, the relay UE may transmit the DCR accept message to the first UE through the first PC5 RLC channel selected based on the second mapping relationship.

Step 1014: The first UE and the second UE interact UE capability information.

Step 1015: Transmission of a PC5-RRC reconfiguration message is performed between the first UE and the second UE, and the PC5-RRC reconfiguration message may be used for configuring the mapping relationship between the first PC5 RLC channel and the second PC5 RLC channel.

Application scenario 4: Assuming that the relay UE does not need to perform adaptation layer processing on the data corresponding to the SL-SRB, the specific indication information obtained by the relay UE is the first to fourth specific indication information mentioned above. A dedicated PC5 RLC channel does not need to be introduced for the SL-SRB. That is to say, the specific indication information obtained by the relay UE includes any of the following.

First specific indication information is indication information carried in a MAC subheader corresponding to a MAC subPDU carrying the SL-SRB.

Second specific indication information is indication information carried in the MAC subPDU carrying the SL-SRB.

Third specific indication information is indication information carried in a SL-SCH subheader corresponding to a MAC PDU carrying the SL-SRB.

Fourth specific indication information is indication information carried in SCI transmitted through a sidelink interface between the relay UE and the first UE, or through a sidelink interface between the relay UE and the second UE.

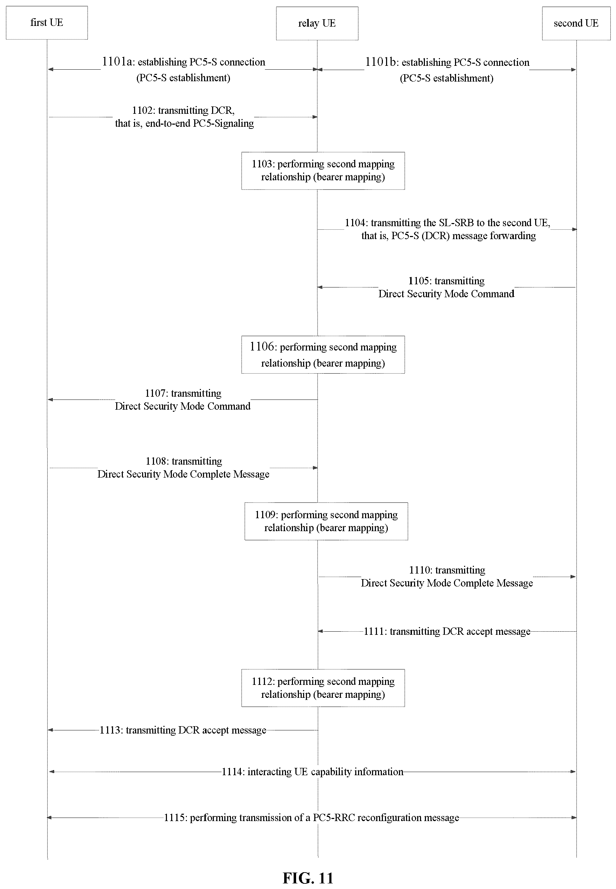

Referring to FIG. 11, FIG. 11 exemplarily shows a specific flow diagram of application scenario 4 according to some embodiments of the present disclosure. In the application scenario 4, the first UE and the second UE establish an end-to-end connection through the relay UE, and the detailed procedure of data transmission through the end-to-end connection is as follows.

Step 1101a: A PC5-S connection is established between the relay UE and the first UE, that is, PC5-S establishment.

Step 1101b: A PC5-S connection is established between the relay UE and the second UE, that is, PC5-S establishment.

The present disclosure does not specifically limit the order between step 1101a and step 1101b, that is, a PC5-S connection may be established between the relay UE and the first UE first, or a PC5-S connection may be established between the relay UE and the second UE first, or a PC5-S connection may be established between the relay UE and the first UE and between the relay UE and the second UE simultaneously.

Step 1102: The first UE transmits a direct communication request message (also called an end-to-end connection establishment request message, DCR) to the relay UE, that is, end-to-end PC5-Signaling.

When performing the step 1102, DCR may be PC5-S signaling. After receiving the PC5-S signaling from the higher layer, the first UE needs to first determine whether the received SL-SRB is an end-to-end SL-SRB.

Exemplarily, after receiving PC5-S signaling from the higher layer, that is, receiving SL-SRB, the first UE may determine whether the received SL-SRB is an end-to-end SL-SRB in at least one of the following ways.

Way 1: The SL-SRB is determined to be an end-to-end SL-SRB when it is determined that the PC5-S or PC5-RRC signaling issued by the higher layer carries the first indication information, wherein the first indication information is used to indicate that the PC5-S or PC5-RRC signaling is an end-to-end signaling between the first UE and the second UE.

Way 2: The SL-SRB is determined to be an end-to-end SL-SRB when it is determined that a target layer 2 (L2) destination indicated by a PC5-S and/or PC5-RRC signaling issued by the higher layer is an end-to-end target L2 destination.

Way 3: The SL-SRB is determined to be an end-to-end SL-SRB when it is determined that a PC5-S and/or PC5-RRC signaling issued by a higher layer carries two target L2 destinations, one target L2 destination is an end-to-end target L2 destination, and the other target L2 destination is a target L2 destination used when performing data transmission between the first UE and the relay UE.

When the first UE transfers the data corresponding to the SL-SRB from the PDCP layer to the RLC layer, the first UE may first transmit the data corresponding to the SL-SRB from the PDCP layer to the adaptation layer, and then transmit the data corresponding to the SL-SRB from the adaptation layer to the RLC layer after at least one of the following processing operations is performed in the adaptation layer.

A first operation: adding, by the first UE, an adaptation layer header to the data corresponding to the SL-SRB, wherein the adaptation layer header at least comprises: identifier information of the SL-SRB, and identifier information of the second UE; and
a second operation: determining, by the first UE, the third mapping relationship between the SL-SRB and a PC5 RLC channel, and in the adaptation layer, performing mapping between the SL-SRB and the PC5 RLC channel based on the third mapping relationship for the SL-SRB, and mapping the first PC5 RLC channel carrying the SL-SRB to the corresponding second PC5 RLC channel. In some embodiments, the third mapping relationship may be the one-to-one mapping. Exemplarily, for the DCR message, in the case that the LCID of the first PC5 RLC channel carrying the SL-SRB between the first UE and the relay UE is 1, that is, LCID=1, the SL-SRB may also be forwarded through the second PC5 RLC channel between the relay UE and the second UE with the LCID of 1.

In a possible implementation, the first UE may determine the third mapping relationship by any of the following ways.
(1) The first UE determines the third mapping relationship based on preconfiguration information.
(2) The first UE determines the third mapping relationship based on a protocol agreement.
(3) The first UE determines the third mapping relationship by itself, and notifies the relay UE of the third mapping relationship, wherein the relay UE notifies the second UE.
(4) The first UE receives the third mapping relationship forwarded from the relay UE, wherein the third mapping relationship is determined by the second UE itself.
(5) The first UE receives the third mapping relationship determined by the relay UE itself and notified by the relay UE through a sidelink interface.

Alternatively, in the case that the SL-SRB is an end-to-end SL-SRB between the first UE and the second UE, any one of the following operations may be performed in the MAC layer to determine the specific indication information associated with the SL-SRB.
(1) A method for determining the first specific indication information includes carrying the indication information in the MAC subheader corresponding to the MAC subPDU carrying the SL-SRB.
(2) A method for determining the second specific indication information includes carrying the indication information in the MAC subPDU carrying the SL-SRB.
(3) A method for determining the third specific indication information includes carrying the indication information in the SL-SCH subheader corresponding to the MAC PDU carrying the SL-SRB.
(4) A method for determining the fourth specific indication information includes carrying the indication information in SCI transmitted through a sidelink interface between the relay UE and the first UE, or through a sidelink interface between the relay UE and the second UE.

In some embodiments, for the first specific indication information, when the specific indication information is the indication information carried in the MAC subheader corresponding to the MAC subPDU carrying the SL-SRB, referring again to FIG. 5, the MAC subheader may include an R field, an F field, a logical channel identity (LCID) field, and an L field. In a possible implementation, the R field in the MAC subheader may be used for carrying the indication information, that is, the specific indication information may be indication information carried in the R field of the MAC subheader corresponding to the MAC subPDU carrying the SL-SRB. The indication information may indicate that the data corresponding to the SL-SRB needs to be forwarded, or indicate that the data corresponding to the SL-SRB is data corresponding to the end-to-end SL-SRB, or indicate that the data corresponding to the SL-SRB needs to be processed by the adaptation layer. Alternatively, after obtaining the specific indication information associated with the SL-SRB, the relay UE may learn that the SL-SRB needs to be forwarded to the second UE based on the indication information.

For the second specific indication information, when the specific indication information is the indication information carried in the MAC subPDU carrying the SL-SRB itself, a first bit or a last bit in the MAC subPDU may be used for carrying the indication information, that is, the specific indication information may be the indication information carried in the first bit or the last bit in the MAC subPDU carrying the SL-SRB. The indication information may indicate that the data corresponding to the SL-SRB needs to be forwarded, or indicate that the data corresponding to the SL-SRB is data corresponding to the end-to-end SL-SRB, or indicate that the data corresponding to the SL-SRB needs to be processed by the adaptation layer. Alternatively, after obtaining the specific indication information associated with the SL-SRB, the relay UE may learn that the SL-SRB needs to be forwarded to the second UE based on the indication information.

In some embodiments, for the third specific indication information, in the case that the specific indication information is the indication information carried in the SL-SCH subheader corresponding to the MAC PDU carrying the SL-SRB, referring again to FIG. 6, the SL-SCH subheader may include an R field, a V field, an SRC field, and a DST field. In a possible implementation, the R field in the SL-SCH subheader may be used for carrying the indication information, that is, the specific indication information may be indication information carried in the R field of the SL-SCH subheader corresponding to the MAC PDU carrying the SL-SRB. The indication information may indicate that the data corresponding to the SL-SRB needs to be forwarded, or indicate that the data corresponding to the SL-SRB is data corresponding to the end-to-end SL-SRB, or indicate that the data corresponding to the SL-SRB needs to be processed by the adaptation layer. Alternatively, after obtaining the specific indication information associated with the SL-SRB, the relay UE may learn that the SL-SRB needs to be forwarded to the second UE based on the indication information.

For the fourth specific indication information, in the case that the specific indication information is the indication information carried in the SCI, one bit may be added to the SCI to carry the indication information, that is, the specific indication information may be the indication information carried in one bit added in the SCI. The indication information may indicate that the data corresponding to the SL-SRB needs to be forwarded, or indicate that the data corresponding to the SL-SRB is data corresponding to the end-to-end SL-SRB, or indicate that the data corresponding to the SL-SRB needs to be processed by the adaptation layer. Alternatively, after obtaining the specific indication information associated with the SL-SRB, the relay UE may learn that the SL-SRB needs to be forwarded to the second UE based on the indication information.

Alternatively, when the first UE transmits the SL-SRB to the relay UE through a first PC5 RLC channel, the first target L2 destination used by the first UE may be a target L2 destination of the relay UE.

Step 1103: The relay UE performs the second mapping relationship (bearer mapping).

When performing the step 1103, after receiving the SL-SRB from the first UE, the relay UE may determine that the second mapping relationship needs to be performed based on the indication information carried in the MAC subheader of the above-mentioned MAC subPDU, or the indication information carried in the MAC subPDU, or the indication information carried in the SL-SCH subheader, or the indication information carried in the SCI. Specifically, in order to ensure end-to-end SL-SRB transmission, the relay UE may determine the second mapping relationship between a first PC5 RLC channel and a second PC5 RLC channel, and in the RLC layer, perform mapping between the first PC5 RLC channel and the second PC5 RLC channel based on the second mapping relationship for the SL-SRB, and map the first PC5 RLC channel carrying the SL-SRB to the corresponding second PC5 RLC channel. In some embodiments, the second mapping relationship may be the one-to-one mapping. Exemplarily, for the DCR message, in the case that the first UE transmits the SL-SRB to the relay UE based on the first PC5 RLC channel with LCID of 1, the relay UE may also forward the SL-SRB to the second UE based on the second PC5 RLC channel with LCID of 1 upon forwarding the SL-SRB to the second UE.

Step 1104: The relay UE transmits the SL-SRB to the second UE based on the second PC5 RLC channel selected in step 1103, that is, PC5-S (DCR) message forwarding.

Alternatively, when the relay UE forwards the SL-SRB to the corresponding second UE through the second PC5 RLC channel, the second target L2 destination used by the relay UE may be a target L2 destination of the second UE.

In some embodiments, the relay UE may obtain the target L2 destination of the second UE by any of the following ways.
(1) A media access control (MAC) layer of the relay UE receives indication information transmitted from a higher layer, wherein the indication information carries the target L2 destination of the second UE.
(2) The relay UE receives the target L2 destination of the second UE transmitted from the first UE through a sidelink interface.

In some embodiments, the relay UE may receive the target L2 destination of the second UE transmitted from the first UE through the sidelink interface by any of the following ways.
(1) The relay UE receives a MAC PDU transmitted from the first UE through a sidelink interface, and obtains the target L2 destination of the second UE from the SL-SCH subheader of the MAC PDU.
(2) The relay UE receives a MAC PDU transmitted from the first UE through a sidelink interface, and obtains the target L2 destination of the second UE from the MAC subPDU subheader of the MAC PDU.
(3) The relay UE receives a PC5-RRC signaling or a MAC CE through a sidelink interface, and obtaining the target L2 destination of the second UE from the PC5-RRC signaling or the MAC CE; or
(4) The relay UE receives SCI through a sidelink interface, and obtains the target target L2 destination of the second UE from the SCI.

Step 1105: The second UE transmits a Direct Security Mode Command to the relay UE.

Step 1106: The relay UE performs the second mapping relationship (bearer mapping).

When performing the step 1106, in order to ensure the transmission of the Direct Security Mode Command, after receiving the Direct Security Mode Command, the relay UE may map the second PC5 RLC channel carrying the Direct Security Mode Command to the corresponding first PC5 RLC channel based on the second mapping relationship.

Step 1107: The relay UE transmits the Direct Security Mode Command to the first UE.

When performing the step 1107, the relay UE may transmit the Direct Security Mode Command to the first UE through the first PC5 RLC channel selected based on the second mapping relationship.

Step 1108: The first UE transmits a Direct Security Mode Complete Message to the relay UE.

After receiving the Direct Security Mode Command forwarded by the relay UE, the first UE may transmit the Direct Security Mode Complete Message to the relay UE.

Step 1109: The relay UE performs the second mapping relationship (bearer mapping).

When performing the step 1109, in order to ensure the transmission of the Direct Security Mode Complete Message, after receiving the Direct Security Mode Complete Message, the relay UE may map the first PC5 RLC channel carrying the Direct Security Mode Complete Message to the corresponding second PC5 RLC channel based on the second mapping relationship.

Step 1110: The relay UE transmits the Direct Security Mode Complete Message to the second UE.

After receiving the Direct Security Mode Complete Message, the relay UE may transmit the Direct Security Mode Complete Message to the second UE.

When performing the step 1110, the relay UE may transmit the Direct Security Mode Complete Message to the second UE through the second PC5 RLC channel selected based on the second mapping relationship.

Step 1111: The second UE transmits a DCR accept message to the relay UE.

After receiving the Direct Security Mode Complete Message, the second UE may transmit the DCR accept message to the relay UE.

Step 1112: The relay UE performs the second mapping relationship (bearer mapping).

When performing the step 1112, in order to ensure the transmission of the DCR accept message, after receiving the DCR accept message, the relay UE may map the second PC5 RLC channel carrying the DCR accept message to the corresponding first PC5 RLC channel based on the second mapping relationship.

Step 1113: The relay UE transmits the DCR accept message to the first UE.

When performing the step 1113, the relay UE may transmit the DCR accept message to the first UE through the first PC5 RLC channel selected based on the second mapping relationship.

Step 1114: The first UE and the second UE interact UE capability information.

Step 1115: Transmission of a PC5-RRC reconfiguration message is performed between the first UE and the second UE, and the PC5-RRC reconfiguration message may be used for configuring the mapping relationship between the first PC5 RLC channel and the second PC5 RLC channel.

Based on the same technical concept, the present disclosure further provides a data transmission device for a UE-to-UE relay scenario. The data transmission device may be the relay UE in the above embodiment.

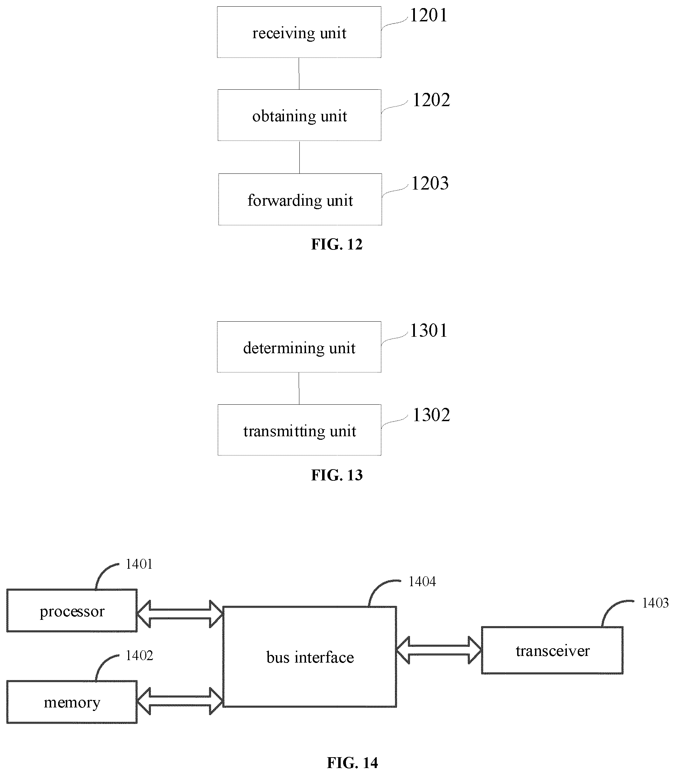

FIG. 12 exemplarily shows a schematic diagram of a data transmission device according to some embodiments of the present disclosure, and the data transmission device may include: a receiving unit 1201, an obtaining unit 1202, and a forwarding unit 1203, wherein:
the receiving unit 1201 is used for receiving, by a relay UE, a sidelink-signaling radio bearer (SL-SRB) transmitted from a first UE through a first sidelink interface (PC5) radio link control (RLC) channel; and
the obtaining unit 1202 is used for obtaining specific indication information associated with the SL-SRB; and
the forwarding unit 1203 is used for forwarding the SL-SRB to a second UE through a second PC5 RLC channel in the case that the specific indication information associated with the SL-SRB indicates that the SL-SRB is an end-to-end SL-SRB or in the case that the first PC5 RLC channel is a dedicated PC5 RLC channel for an end-to-end SL-SRB;
wherein the first UE is any of two terminals that need to establish an end-to-end connection through the relay UE, the second UE is an end-to-end target communication counterpart of the first UE, and the relay UE is a terminal that supports a UE-to-UE relay (U2U relay) function.

In a possible implementation, the SL-SRB may be used for carrying a PC5-signaling (PC5-S) and/or a PC5-RRC signaling.

In a possible implementation, the PC5-RRC signaling is an end-to-end signaling transmitted between the first UE and the second UE after the end-to-end connection between the first UE and the second UE is established and before the receiving or transmitting of a PC5-RRC reconfiguration message is completed.
the PC5-RRC reconfiguration message is a PC5-RRC signaling used for configuring a first mapping relationship between a first PC5 RLC channel and a second PC5 RLC channel after the end-to-end connection between the first UE and the second UE is established;
the first PC5 RLC channel comprises a PC5 RLC channel between the relay UE and the first UE, and the second PC5 RLC channel comprises a PC5 RLC channel between the relay UE and the second UE; and
the first mapping relationship includes one-to-one mapping, many-to-one mapping, or many-to-many mapping.

In a possible implementation, the specific indication information includes any one of the following:
indication information carried in a MAC subheader corresponding to a MAC subPDU carrying the SL-SRB;
indication information carried in a MAC subPDU carrying the SL-SRB;
indication information carried in a sidelink shared channel (SL-SCH) subheader corresponding to a MAC PDU carrying the SL-SRB; or
indication information carried in SCI transmitted through a sidelink interface between the relay UE and the first UE, or through a sidelink interface between the relay UE and the second UE.

In a possible implementation, the specific indication information includes at least any one of the following:
information used to indicate that data corresponding to the SL-SRB needs to be forwarded;
information used to indicate that data corresponding to the SL-SRB is data corresponding to the end-to-end SL-SRB;
information used to indicate that the data corresponding to the SL-SRB needs to be processed by an adaptation layer.

In a possible implementation, in the case that the first PC5 RLC channel is a dedicated PC5 RLC channel for the end-to-end SL-SRB, the obtaining unit 1202 is further used for:
determining the dedicated PC5 RLC channel used when the SL-SRB is transmitted at a sidelink interface based on preconfiguration information; or
determining the dedicated PC5 RLC channel used when the SL-SRB is transmitted at a sidelink interface based on a protocol agreement; or
determining by itself and broadcasting the dedicated PC5 RLC channel used when the SL-SRB is transmitted at a sidelink interface;
wherein a number of the dedicated PC5 RLC channels includes one or more.

In a possible implementation, the forwarding unit 1203 is further used for:
performing adaptation layer processing on the data corresponding to the SL-SRB.

In a possible implementation, the forwarding unit 1203 is specifically used for:
after receiving the data corresponding to the SL-SRB from a RLC layer of a sidelink interface between the relay UE and the first UE, submitting the data corresponding to the SL-SRB to an adaptation layer, and after performing at least one of the following processing operations in the adaptation layer, submitting the data corresponding to the SL-SRB to a RLC layer of a sidelink interface between the relay UE and the second UE:
removing an original adaptation layer header for the data corresponding to the SL-SRB, and then adding a new adaptation layer header, wherein the new adaptation layer header at least comprises: identifier information of the SL-SRB, and identifier information of the second UE; and
determining a second mapping relationship between a first PC5 RLC channel and a second PC5 RLC channel, and in the adaptation layer, performing mapping between the first PC5 RLC channel and the second PC5 RLC channel based on the second mapping relationship for the SL-SRB;
wherein the second mapping relationship includes one-to-one mapping, many-to-one mapping, or many-to-many mapping.

In a possible implementation, the forwarding unit 1203 is further used for:
determining a second mapping relationship between the first PC5 RLC channel and the second PC5 RLC channel, and in a RLC layer, performing mapping between the first PC5 RLC channel and the second PC5 RLC channel based on the second mapping relationship for the SL-SRB;
wherein the second mapping relationship includes one-to-one mapping, many-to-one mapping, or many-to-many mapping.

In a possible implementation, the forwarding unit 1203 determines the second mapping relationship by any of the following ways.
determining the second mapping relationship based on preconfiguration information;
determining the second mapping relationship based on a protocol agreement;
determining the second mapping relationship based on a notification of the first UE, and notifying the second UE of the second mapping relationship;
determining the second mapping relationship based on a notification of the second UE, and notifying the first UE of the second mapping relationship; or
determining by itself the second mapping relationship, and notifying the first UE and/or the second UE of the second mapping relationship through a sidelink interface.

In a possible implementation, in the case that the SL-SRB transmitted from the first UE is received through the first PC5 RLC channel, the first target L2 destination used by the first UE is a target L2 destination of the relay UE; and
in the case that the SL-SRB is forwarded to the second UE through the second PC5 RLC channel, the second target L2 destination used by the relay UE is a target L2 destination of the second UE.

In a possible implementation, the forwarding unit 1203 obtains the target L2 destination of the second UE by any of the following ways.
receiving, by a MAC layer of the relay UE, indication information transmitted from a higher layer, wherein the indication information carries the target L2 destination of the second UE; or
receiving the target L2 destination of the second UE transmitted from the first UE through a sidelink interface.

In a possible implementation, the forwarding unit 1203 is specifically used for: receiving, by the relay UE, the target L2 destination of the second UE transmitted from the first UE through the sidelink including any one of the following:
receiving a MAC PDU transmitted from the first UE through a sidelink interface, and obtaining the target L2 destination of the second UE from a SL-SCH subheader of the MAC PDU;
receiving a MAC PDU transmitted from the first UE through a sidelink interface, and obtaining the target L2 destination of the second UE from a MAC sub-PDU of the MAC PDU;
receiving a PC5-RRC signaling or a MAC CE through a sidelink interface, and obtaining the target L2 destination of the second UE from the PC5-RRC signaling or the MAC CE;
receiving SCI through a sidelink interface, and obtaining the target target L2 destination of the second UE from the SCI.

Based on the same technical concept, the present disclosure further provides a data transmission device for a UE-to-UE relay scenario. The data transmission device may be the first UE in the above embodiment.

FIG. 13 exemplarily shows a schematic diagram of another data transmission device according to some embodiments of the present disclosure, and the data transmission device may include: a determining unit 1301 and a transmitting unit 1302, wherein:
a determining unit 1301, used for determining a SL-SRB to be transmitted by a first UE; and
a transmitting unit 1302, used for transmitting the SL-SRB to a relay UE through a first PC5 RLC channel;
wherein the SL-SRB is associated with specific indication information, the specific indication information is used for indicating that the SL-SRB is forwarded to a second UE through a second PC5 RLC channel in the case that the SL-SRB is an end-to-end SL-SRB, or in the case that the first PC5 RLC channel is a dedicated PC5 RLC channel for an end-to-end SL-SRB, the dedicated PC5 RLC channel for the end-to-end SL-SRB is used for indicating that the SL-SRB is forwarded to a second UE through a second PC5 RLC channel in the case that the SL-SRB is an end-to-end SL-SRB;
wherein the first UE is any of two terminals that need to establish an end-to-end connection through the relay UE, the second UE is an end-to-end target communication counterpart of the first UE, and the relay UE is a terminal that supports a U2U relay function.

In a possible implementation, the SL-SRB may be used for carrying a PC5-signaling (PC5-S) and/or a PC5-RRC signaling.

In a possible implementation, the PC5-RRC signaling is an end-to-end signaling transmitted between the first UE and the second UE after the end-to-end connection between the first UE and the second UE is established and before the receiving or transmitting of a PC5-RRC reconfiguration message is completed.
the PC5-RRC reconfiguration message is a PC5-RRC signaling used for configuring a first mapping relationship between a first PC5 RLC channel and a second PC5 RLC channel after the end-to-end connection between the first UE and the second UE is established;
the first PC5 RLC channel comprises a PC5 RLC channel between the relay UE and the first UE, and the second PC5 RLC channel comprises a PC5 RLC channel between the relay UE and the second UE; and
the first mapping relationship includes one-to-one mapping, many-to-one mapping, or many-to-many mapping.

In a possible implementation, the specific indication information includes any one of the following:
indication information carried in a MAC subheader corresponding to a MAC subPDU carrying the SL-SRB;
indication information carried in a MAC subPDU carrying the SL-SRB;
indication information carried in a SL-SCH subheader corresponding to a MAC PDU carrying the SL-SRB; or
indication information carried in SCI transmitted through a sidelink interface between the relay UE and the first UE, or through a sidelink interface between the relay UE and the second UE.

In a possible implementation, the specific indication information includes at least any one of the following:
information used to indicate that data corresponding to the SL-SRB needs to be forwarded;
information used to indicate that data corresponding to the SL-SRB is data corresponding to the end-to-end SL-SRB;
information used to indicate that the data corresponding to the SL-SRB needs to be processed by an adaptation layer.

In a possible implementation, in the case that the first PC5 RLC channel is a dedicated PC5 RLC channel for the end-to-end SL-SRB, the transmitting unit 1302 is further used for:
determining the dedicated PC5 RLC channel used when the SL-SRB is transmitted at a sidelink interface based on preconfiguration information; or
determining the dedicated PC5 RLC channel used when the SL-SRB is transmitted at a sidelink interface based on a protocol agreement; or
determining by itself and broadcasting the dedicated PC5 RLC channel used when the SL-SRB is transmitted at a sidelink.

In some embodiments, a number of the dedicated PC5 RLC channels includes one or more.

In a possible implementation, the transmitting unit 1302 is further used for:
transmitting the data corresponding to the SL-SRB from a packet data convergence protocol (PDCP) layer to an adaptation layer, and after performing at least one of the following processing operations in the adaptation layer, transmitting the data corresponding to the SL-SRB from the adaptation layer to a RLC layer:
adding an adaptation layer header to the data corresponding to the SL-SRB, wherein the adaptation layer header at least comprises: identifier information of the SL-SRB, and identifier information of the second UE; and
determining a third mapping relationship between a SL-SRB and a PC5 RLC channel, and in the adaptation layer, performing mapping between the SL-SRB and the PC5 RLC channel based on the third mapping relationship for the SL-SRB;
wherein the third mapping relationship includes one-to-one mapping, many-to-one mapping, or many-to-many mapping.

In a possible implementation, the transmitting unit 1302 is specifically used for:
determining the third mapping relationship by any of the following:
determining the third mapping relationship based on preconfiguration information;
determining the third mapping relationship based on a protocol agreement;
determining the third mapping relationship by itself, and notifying the relay UE of the third mapping relationship, wherein the relay UE notifies the second UE;
receiving the third mapping relationship forwarded from the relay UE, wherein the third mapping relationship is determined by the second UE itself; or
receiving the third mapping relationship determined by the relay UE itself and notified by the relay UE through a sidelink interface.

In a possible implementation, the transmitting unit 1302 is further used for:
receiving the SL-SRB from a higher layer and determining that the SL-SRB is an end-to-end SL-SRB through at least one of the following:
determining that the SL-SRB is an end-to-end SL-SRB in the case that a PC5-S and/or PC5-RRC signaling carries first indication information, wherein the first indication information is used to indicate that the PC5-S or PC5-RRC signaling is an end-to-end signaling between the first UE and the second UE;
determining that the SL-SRB is an end-to-end SL-SRB in the case that a target L2 destination indicated by a PC5-S and/or PC5-RRC signaling issued by a higher layer is an end-to-end target L2 destination; or
determining that the SL-SRB is an end-to-end SL-SRB in the case that a PC5-S and/or PC5-RRC signaling issued by a higher layer carries two target layer 2 (L2) destinations, one target L2 destination is an end-to-end target L2 destination, and the other target L2 destination is a target L2 destination used when performing data transmission between the first UE and the relay UE.

In a possible implementation, in the case that the SL-SRB is transmitted to the relay UE through a first PC5 RLC channel, the first target L2 destination used for performing data transmission through the first PC5 RLC channel is a target L2 destination of the relay UE.

In a possible implementation, the transmitting unit 1302 is specifically used for transmitting the target L2 destination of the second UE to the relay UE through a sidelink interface by any of the following ways:
transmitting a MAC PDU to the relay UE through a sidelink interface, wherein a SL-SCH subheader of the MAC PDU carries the target L2 destination of the second UE;
transmitting a MAC PDU to the relay UE through a sidelink interface, wherein a MAC sub-PDU subheader of the MAC PDU carries the target L2 destination of the second UE;
transmitting a separate PC5-RRC signaling or a MAC CE to the relay UE through a sidelink interface, wherein the separate PC5-RRC signaling or the MAC CE carries the target L2 destination of the second UE; or
transmitting SCI to the relay UE through a sidelink interface, wherein the SCI comprises the target L2 destination of the second UE.

Based on the same technical concept, the embodiments of the present disclosure further provides a data transmission apparatus, and FIG. 14 exemplarily shows a structural schematic diagram of a data transmission apparatus according to some embodiments of the present disclosure. As shown in FIG. 14, the data transmission apparatus may include: a processor 1401, a memory 1402, a transceiver 1403 and a bus interface 1404.

The processor 1401 is responsible for managing the bus architecture and general processing, and the memory 1402 may store data used by the processor 1401 when performing operations. The transceiver 1403 is used for receiving and transmitting data under control of the processor 1401.

A bus architecture may include any number of interconnected buses and bridges, which are linked together through various circuits of one or more processors represented by processor 1401 and one or more memories represented by the memory 1402. The bus architecture may also link together various other circuits, such as peripherals, voltage regulators, and power management circuits, which are well known in the art, and therefore will not be further described in the present disclosure. The bus interface provides an interface. The processor 1401 is responsible for managing the bus architecture and general processing, and the memory 1402 may store data used by the processor 1401 when performing operations.

The flows disclosed in the embodiments of the present disclosure may be applied to the processor 1401 or implemented by the processor 1401. In the implementation process, each step of the above signal processing flow may be completed by an integrated logic circuit of hardware in the processor 1401 or an instruction in the form of software. The processor 1401 may be a general-purpose processor, a digital signal processor, an application-specific integrated circuit, a field programmable gate array or other programmable logic device, a discrete gate or transistor logic device, a discrete hardware component, and may implement or perform the methods, steps and logic block diagrams disclosed in the embodiments of present disclosure. A general-purpose processor may be a microprocessor or any conventional processor and the like. The steps of the method disclosed in conjunction with the embodiments of the present disclosure may be directly embodied as executed by a hardware processor, or executed by a combination of hardware and software modules in the processor. The software modules may be located in random access memory, flash memory, read-only memory, programmable read-only memory or electrically erasable programmable memory, registers and other storage media mature in the art. The storage medium is located in the memory 1402, and the processor 1401 reads the information in the memory 1402, and completes the steps of the above signal processing flows in combination with its hardware.

Specifically, the processor 1401 is used for reading a computer instruction in the memory 1402 and performing the data transmission method in the UE-to-UE relay scenario in any of the above embodiments.

In some embodiments, the processor 1404 is used for reading and executing the computer instruction stored in the memory to perform the following procedures:
receiving a SL-SRB transmitted from a first UE through a first PC5 RLC channel; and
forwarding the SL-SRB to a second UE through a second PC5 RLC channel in the case that specific indication information associated with the SL-SRB indicates that the SL-SRB is an end-to-end SL-SRB or in the case that the first PC5 RLC channel is a dedicated PC5 RLC channel for an end-to-end SL-SRB;
wherein the first UE is any of two terminals that need to establish an end-to-end connection through the relay UE, the second UE is an end-to-end target communication counterpart of the first UE, and the relay UE is a terminal that supports a U2U relay function.

Alternatively, the SL-SRB is used for carrying a PC5-S and/or PC5-RRC signaling.

Alternatively, the PC5-RRC signaling is an end-to-end signaling transmitted between the first UE and the second UE after the end-to-end connection between the first UE and the second UE is established and before the receiving or transmitting of a PC5-RRC reconfiguration message is completed;
the PC5-RRC reconfiguration message is a PC5-RRC signaling used for configuring a first mapping relationship between a first PC5 RLC channel and a second PC5 RLC channel after the end-to-end connection between the first UE and the second UE is established;
the first PC5 RLC channel comprises a PC5 RLC channel between the relay UE and the first UE, and the second PC5 RLC channel comprises a PC5 RLC channel between the relay UE and the second UE; and
the first mapping relationship includes one-to-one mapping, many-to-one mapping, or many-to-many mapping.

Alternatively, the specific indication information includes any one of the following:
indication information carried in a MAC subheader corresponding to a MAC subPDU carrying the SL-SRB;
indication information carried in a MAC subPDU carrying the SL-SRB;
indication information carried in a SL-SCH subheader corresponding to a MAC PDU carrying the SL-SRB; or
indication information carried in SCI transmitted through a sidelink interface between the relay UE and the first UE, or through a sidelink interface between the relay UE and the second UE.

Alternatively, the indication information includes at least one of the following:
information used to indicate that data corresponding to the SL-SRB needs to be forwarded;
information used to indicate that data corresponding to the SL-SRB is data corresponding to the end-to-end SL-SRB;
information used to indicate that the data corresponding to the SL-SRB needs to be processed by an adaptation layer.

Alternatively, in the case that the first PC5 RLC channel is the dedicated PC5 RLC channel for the end-to-end SL-SRB, the processor 1401 is further used for:
determining the dedicated PC5 RLC channel used when the SL-SRB is transmitted at a sidelink interface based on preconfiguration information; or
determining the dedicated PC5 RLC channel used when the SL-SRB is transmitted at a sidelink interface based on a protocol agreement; or
determining by itself and broadcasting the dedicated PC5 RLC channel used when the SL-SRB is transmitted at a sidelink interface;
wherein a number of the dedicated PC5 RLC channels includes one or more.

Alternatively, the processor 1401 is further used for:
performing adaptation layer processing on the data corresponding to the SL-SRB.

Alternatively, the processor 1401 is used for:
after receiving the data corresponding to the SL-SRB from a RLC layer of a sidelink interface between the relay UE and the first UE, submitting the data corresponding to the SL-SRB to an adaptation layer, and after performing at least one of the following processing operations in the adaptation layer, submitting the data corresponding to the SL-SRB to a RLC layer of a sidelink interface between the relay UE and the second UE:
removing an original adaptation layer header for the data corresponding to the SL-SRB, and then adding a new adaptation layer header, wherein the new adaptation layer header at least comprises: identifier information of the SL-SRB, and identifier information of the second UE; and
determining a second mapping relationship between a first PC5 RLC channel and a second PC5 RLC channel, and in the adaptation layer, performing mapping between the first PC5 RLC channel and the second PC5 RLC channel based on the second mapping relationship for the SL-SRB;
wherein the second mapping relationship includes one-to-one mapping, many-to-one mapping, or many-to-many mapping.

Alternatively, the processor 1401 is further used for:
determining a second mapping relationship between the first PC5 RLC channel and the second PC5 RLC channel, and in a RLC layer, performing mapping between the first PC5 RLC channel and the second PC5 RLC channel based on the second mapping relationship for the SL-SRB;
wherein the second mapping relationship includes one-to-one mapping, many-to-one mapping, or many-to-many mapping.

Alternatively, the processor 1401 is specifically used for determining, by the relay UE, the second mapping relationship by any of the following:
determining the second mapping relationship based on preconfiguration information;
determining the second mapping relationship based on a protocol agreement;
determining the second mapping relationship based on a notification of the first UE, and notifying the second UE of the second mapping relationship;
determining the second mapping relationship based on a notification of the second UE, and notifying the first UE of the second mapping relationship; or
determining by itself the second mapping relationship, and notifying the first UE and/or the second UE of the second mapping relationship through a sidelink interface.

Alternatively, in the case that the SL-SRB transmitted from the first UE is received through the first PC5 RLC channel, the first target layer 2 (L2) destination used by the first UE is a target L2 destination of the relay UE; and
in the case that the SL-SRB is forwarded to the second UE through the second PC5 RLC channel, the second target L2 destination used by the relay UE is a target L2 destination of the second UE.

Alternatively, the processor 1401 is used for obtaining the target L2 destination of the second UE by any of the following:
receiving, by a MAC layer of the relay UE, indication information transmitted from a higher layer, wherein the indication information carries the target L2 destination of the second UE; or
receiving the target L2 destination of the second UE transmitted from the first UE through a sidelink interface.

Alternatively, the processor 1401 is used for:
receiving the target L2 destination of the second UE transmitted from the first UE through the sidelink comprising any one of the following:
receiving a MAC PDU transmitted from the first UE through a sidelink interface, and obtaining the target L2 destination of the second UE from a SL-SCH subheader of the MAC PDU;
receiving a MAC PDU transmitted from the first UE through a sidelink interface, and obtaining the target L2 destination of the second UE from a MAC sub-PDU of the MAC PDU;
receiving a PC5-RRC signaling or a MAC CE through a sidelink interface, and obtaining the target L2 destination of the second UE from the PC5-RRC signaling or the MAC CE;
receiving SCI through a sidelink interface, and obtaining the target target L2 destination of the second UE from the SCI.

In addition, the processor 1404 is further used for reading and executing the computer instruction stored in the memory to perform the following procedures:
determining a sidelink-signaling radio bearer (SL-SRB) to be transmitted from a first user equipment (UE); and
transmitting the SL-SRB to a relay UE through a first sidelink interface (PC5) radio link control (RLC) channel;
wherein the SL-SRB is associated with specific indication information, the specific indication information is used for indicating that the SL-SRB is forwarded to a second UE through a second PC5 RLC channel in the case that the SL-SRB is an end-to-end SL-SRB, or in the case that the first PC5 RLC channel is a dedicated PC5 RLC channel for an end-to-end SL-SRB, the dedicated PC5 RLC channel for the end-to-end SL-SRB is used for indicating that the SL-SRB is forwarded to a second UE through a second PC5 RLC channel in the case that the SL-SRB is an end-to-end SL-SRB;
wherein the first UE is any of two terminals that need to establish an end-to-end connection through the relay UE, the second UE is an end-to-end target communication counterpart of the first UE, and the relay UE is a terminal that supports a U2U relay function.

Alternatively, the SL-SRB is used for carrying a PC5-S and/or PC5-RRC signaling.

Alternatively, the PC5-RRC signaling is an end-to-end signaling transmitted between the first UE and the second UE after the end-to-end connection between the first UE and the second UE is established and before the receiving or transmitting of a PC5-RRC reconfiguration message is completed;
the PC5-RRC reconfiguration message is a PC5-RRC signaling used for configuring a first mapping relationship between a first PC5 RLC channel and a second PC5 RLC channel after the end-to-end connection between the first UE and the second UE is established;
the first PC5 RLC channel comprises a PC5 RLC channel between the relay UE and the first UE, and the second PC5 RLC channel comprises a PC5 RLC channel between the relay UE and the second UE; and
the first mapping relationship includes one-to-one mapping, many-to-one mapping, or many-to-many mapping.

Alternatively, the specific indication information includes any one of the following:
indication information carried in a MAC subheader corresponding to a MAC subPDU carrying the SL-SRB;
indication information carried in a MAC subPDU carrying the SL-SRB;
indication information carried in a SL-SCH subheader corresponding to a MAC PDU carrying the SL-SRB; or
indication information carried in SCI transmitted through a sidelink interface between the relay UE and the first UE, or through a sidelink interface between the relay UE and the second UE.

Alternatively, the indication information includes at least one of the following:
information used to indicate that data corresponding to the SL-SRB needs to be forwarded;
information used to indicate that data corresponding to the SL-SRB is data corresponding to the end-to-end SL-SRB;
information used to indicate that the data corresponding to the SL-SRB needs to be processed by an adaptation layer.

Alternatively, in the case that the first PC5 RLC channel is the dedicated PC5 RLC channel for the end-to-end SL-SRB, the processor 1401 is further used for:
determining the dedicated PC5 RLC channel used when the SL-SRB is transmitted at a sidelink interface based on preconfiguration information; or
determining the dedicated PC5 RLC channel used when the SL-SRB is transmitted at a sidelink interface based on a protocol agreement; or
determining by itself and broadcasting the dedicated PC5 RLC channel used when the SL-SRB is transmitted at a sidelink interface;
wherein a number of the dedicated PC5 RLC channels includes one or more.

Alternatively, the processor 1401 is further used for:
transmitting the data corresponding to the SL-SRB from a packet data convergence protocol (PDCP) layer to an adaptation layer, and after performing at least one of the following processing operations in the adaptation layer, transmitting the data corresponding to the SL-SRB from the adaptation layer to a RLC layer:
adding an adaptation layer header to the data corresponding to the SL-SRB, wherein the adaptation layer header at least comprises: identifier information of the SL-SRB, and identifier information of the second UE; and
determining a third mapping relationship between a SL-SRB and a PC5 RLC channel, and in the adaptation layer, performing mapping between the SL-SRB and the PC5 RLC channel based on the third mapping relationship for the SL-SRB;
wherein the third mapping relationship includes one-to-one mapping, many-to-one mapping, or many-to-many mapping.

Alternatively, the processor 1401 is used for:
determining the third mapping relationship by any of the following:
determining the third mapping relationship based on preconfiguration information;
determining the third mapping relationship based on a protocol agreement;
determining the third mapping relationship by itself, and notifying the relay UE of the third mapping relationship, wherein the relay UE notifies the second UE;
receiving the third mapping relationship forwarded from the relay UE, wherein the third mapping relationship is determined by the second UE itself; or
receiving the third mapping relationship determined by the relay UE itself and notified by the relay UE through a sidelink interface.

Alternatively, the processor 1401 is further used for:
receiving the SL-SRB from a higher layer and determining that the SL-SRB is an end-to-end SL-SRB through at least one of the following:
determining that the SL-SRB is an end-to-end SL-SRB in the case that a PC5-S and/or PC5-RRC signaling carries first indication information, wherein the first indication information is used to indicate that the PC5-S or PC5-RRC signaling is an end-to-end signaling between the first UE and the second UE;
determining that the SL-SRB is an end-to-end SL-SRB in the case that a target L2 destination indicated by a PC5-S and/or PC5-RRC signaling issued by a higher layer is an end-to-end target L2 destination; or
determining that the SL-SRB is an end-to-end SL-SRB in the case that a PC5-S and/or a PC5- RRC signaling issued by a higher layer carries two target L2 destinations, one target L2 destination is an end-to-end target L2 destination, and the other target L2 destination is a target L2 destination used when performing data transmission between the first UE and the relay UE.

Alternatively, the processor 1401 is specifically used for:
determining that the first target L2 destination used by the first UE for data transmission is performed through the first PC5 RLC channel is a target L2 destination of the relay UE.

Alternatively, the processor 1401 is specifically used for:
transmitting the target L2 destination of the second UE to the relay UE through a sidelink interface by any of the following:
transmitting a MAC PDU to the relay UE through a sidelink interface, wherein a SL-SCH subheader of the MAC PDU carries the target L2 destination of the second UE;
transmitting a MAC PDU to the relay UE through a sidelink interface, wherein a MAC sub-PDU subheader of the MAC PDU carries the target L2 destination of the second UE;
transmitting a separate PC5-RRC signaling or a MAC CE to the relay UE through a sidelink interface, wherein the separate PC5-RRC signaling or the MAC CE carries the target L2 destination of the second UE; or
transmitting SCI to the relay UE through a sidelink interface, wherein the SCI comprises the target L2 destination of the second UE.

It should be noted here that the above-mentioned data transmission apparatus according to the embodiments of the present disclosure can implement all the method steps implemented by the above-mentioned method embodiments, and can achieve the same effect. The same parts and beneficial effects as the same method embodiments will not be repeated here.
some embodiments of the present disclosure further provides a computer-readable storage medium storing a computer-executable instruction, the computer-executable instruction causes a computer to perform the data transmission method for the UE-to-UE relay scenario in any of above embodiments.
the embodiments of the present disclosure further provides a computer program product, wherein the computer program product, when called by a computer, causes the computer to perform the data transmission method for the UE-to-UE relay scenario in any of above embodiments.

It should be appreciated by those skilled in the art, embodiments of the present disclosure may be provided as a method, a system, or a computer program product. Therefore, the present disclosure may take forms of an entirely hardware embodiment, an entirely software embodiment, or some embodiments combining software with hardware. Furthermore, the present disclosure may take a form of a computer program product embodied on one or more computer-usable storage media having computer-usable program code embodied therein, including but not limited to disk storage, optical storage, and the like.

The present disclosure is described with reference to flow charts and/or block diagrams of methods, apparatus (systems), and computer program products according to the present disclosure. It should be understood that each flow and/or block in flow charts and/or block diagrams, and a combination of each flow and/or block in flow charts and/or block diagrams may be implemented by a computer program. These computer program instructions may be provided to processors of a general-purpose computer, a dedicated purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These computer program instructions may also be stored in a computer-readable memory capable of directing a computer or other programmable data processing apparatus to operate in a particular manner, and the instructions stored in the computer-readable memory may result in a manufacture including instruction means, the instruction means may perform the functions specified in one or more flows of the flowchart and/or one or more blocks of the block diagram.

These computer program instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

Apparently, those skilled in the art may make various modifications and variations to the present disclosure without departing from the scope of the present disclosure. In this case, if these modifications and variations of the present disclosure fall within the scope of the claims of the present disclosure and their equivalents, the present disclosure is also intended to include these modifications and variations.

## Claims

1. A data transmission method for a user equipment (UE)-to-UE relay scenario, **characterized by** comprising:
receiving, by a relay UE, a sidelink-signaling radio bearer (SL-SRB) transmitted from a first UE through a first sidelink interface (PC5) radio link control (RLC) channel; and
forwarding, by the relay UE, the SL-SRB to a second UE through a second PC5 RLC channel in the case that specific indication information associated with the SL-SRB indicates that the SL-SRB is an end-to-end SL-SRB or in the case that the first PC5 RLC channel is a dedicated PC5 RLC channel for an end-to-end SL-SRB;
wherein the first UE is any of two terminals that need to establish an end-to-end connection through the relay UE, the second UE is an end-to-end target communication counterpart of the first UE, and the relay UE is a terminal that supports a UE-to-UE relay (U2U relay) function.

2. The method according to claim 1, **characterized in that** the SL-SRB is used for carrying a PC5-signaling (PC5-S) and/or a PC5-radio resource control (RRC) signaling.

3. The method according to claim 2, **characterized in that** the PC5-RRC signaling is an end-to-end signaling transmitted between the first UE and the second UE after the end-to-end connection between the first UE and the second UE is established and before the receiving or transmitting of a PC5-RRC reconfiguration message is completed;
the PC5-RRC reconfiguration message is a PC5-RRC signaling used for configuring a first mapping relationship between a first PC5 RLC channel and a second PC5 RLC channel after the end-to-end connection between the first UE and the second UE is established;
the first PC5 RLC channel comprises a PC5 RLC channel between the relay UE and the first UE, and the second PC5 RLC channel comprises a PC5 RLC channel between the relay UE and the second UE; and
the first mapping relationship is one-to-one mapping, many-to-one mapping, or many-to-many mapping.

4. The method according to claim 1, **characterized in that** the specific indication information comprises any one of the following:
indication information carried in a media access control (MAC) subheader corresponding to a MAC sub-protocol data unit (subPDU) carrying the SL-SRB;
indication information carried in a media access control (MAC) sub-protocol data unit (subPDU) carrying the SL-SRB;
indication information carried in a sidelink shared channel (SL-SCH) subheader corresponding to a media access control (MAC) protocol data unit (PDU) carrying the SL-SRB; or
indication information carried in sidelink control information (SCI) transmitted through a sidelink interface between the relay UE and the first UE, or through a sidelink interface between the relay UE and the second UE.

5. The method according to claim 4, **characterized in that** the indication information comprises at least one of the following:
information used to indicate that data corresponding to the SL-SRB needs to be forwarded;
information used to indicate that data corresponding to the SL-SRB is data corresponding to the end-to-end SL-SRB;
information used to indicate that the data corresponding to the SL-SRB needs to be processed by an adaptation layer.

6. The method according to claim 1, **characterized in that** in the case that the first PC5 RLC channel is the dedicated PC5 RLC channel for the end-to-end SL-SRB, the method further comprises:
determining, by the relay UE, the dedicated PC5 RLC channel used when the SL-SRB is transmitted at a sidelink interface based on preconfiguration information; or
determining, by the relay UE, the dedicated PC5 RLC channel used when the SL-SRB is transmitted at a sidelink interface based on a protocol agreement; or
determining, by the relay UE itself, and broadcasting the dedicated PC5 RLC channel used when the SL-SRB is transmitted at a sidelink interface;
wherein a number of the dedicated PC5 RLC channels includes one or more.

7. The method according to claim 1, **characterized in that** before forwarding, by the relay UE, the SL-SRB to the second UE through the second PC5 RLC channel, the method further comprises:
performing, by the relay UE, adaptation layer processing on the data corresponding to the SL-SRB.

8. The method according to claim 7, **characterized in that** performing, by the relay UE, adaptation layer processing on the data corresponding to the SL-SRB comprises:
after the relay UE receives the data corresponding to the SL-SRB from a RLC layer of a sidelink interface between the relay UE and the first UE, submitting, by the relay UE, the data corresponding to the SL-SRB to an adaptation layer, and after performing at least one of the following processing operations in the adaptation layer, submitting the data corresponding to the SL-SRB to a RLC layer of a sidelink interface between the relay UE and the second UE:
removing, by the relay UE, an original adaptation layer header for the data corresponding to the SL-SRB, and then adding a new adaptation layer header, wherein the new adaptation layer header at least comprises: identifier information of the SL-SRB, and identifier information of the second UE; and
determining, by the relay UE, a second mapping relationship between a first PC5 RLC channel and a second PC5 RLC channel, and in the adaptation layer, performing mapping between the first PC5 RLC channel and the second PC5 RLC channel based on the second mapping relationship for the SL-SRB;
wherein the second mapping relationship is one-to-one mapping, many-to-one mapping, or many-to-many mapping.

9. The method according to claim 1, **characterized in that** before forwarding, by the relay UE, the SL-SRB to the second UE through the second PC5 RLC channel, the method further comprises:
determining, by the relay UE, a second mapping relationship between the first PC5 RLC channel and the second PC5 RLC channel, and in a radio link control (RLC) layer, performing mapping between the first PC5 RLC channel and the second PC5 RLC channel based on the second mapping relationship for the SL-SRB;
wherein the second mapping relationship is one-to-one mapping, many-to-one mapping, or many-to-many mapping.

10. The method according to claim 8 or 9, **characterized in that** determining, by the relay UE, the second mapping relationship is any of the following:
determining the second mapping relationship based on preconfiguration information;
determining the second mapping relationship based on a protocol agreement;
determining the second mapping relationship based on a notification of the first UE, and notifying the second UE of the second mapping relationship;
determining the second mapping relationship based on a notification of the second UE, and notifying the first UE of the second mapping relationship; or
determining, by the relay UE itself, the second mapping relationship, and notifying the first UE and/or the second UE of the second mapping relationship through a sidelink interface.

11. The method according to claim 1, **characterized in that** in the case that the relay UE receives the SL-SRB transmitted from the first UE through the first PC5 RLC channel, the first target layer 2 (L2) destination used by the first UE is a target L2 destination of the relay UE; and
in the case that the relay UE forwards the SL-SRB to the second UE through the second PC5 RLC channel, the second target L2 destination used by the relay UE is a target L2 destination of the second UE.

12. The method according to claim **11, characterized in that** the target L2 destination of the second UE is obtained by any of the following:
receiving, by a media access control (MAC) layer of the relay UE, indication information transmitted from a higher layer, wherein the indication information carries the target L2 destination of the second UE; or
receiving, by the relay UE, the target L2 destination of the second UE transmitted from the first UE through a sidelink.

13. The method according to claim 12, **characterized in that** receiving, by the relay UE, the target L2 destination of the second UE transmitted from the first UE through the sidelink comprises any one of the following:
receiving, by the relay UE, a media access control (MAC) protocol data unit (PDU) transmitted from the first UE through a sidelink interface, and obtaining the target L2 destination of the second UE from a sidelink shared channel (SL-SCH) subheader of the MAC PDU;
receiving, by the relay UE, a media access control (MAC) protocol data unit (PDU) transmitted from the first UE through a sidelink interface, and obtaining the target L2 destination of the second UE from a MAC sub-PDU of the MAC PDU;
receiving, by the relay UE, a PC5-radio resource control (RRC) signaling or a media access control layer (MAC) control element (CE) through a sidelink interface, and obtaining the target L2 destination of the second UE from the PC5-RRC signaling or the MAC CE; or
receiving, by the relay UE, sidelink control information (SCI) indication through a sidelink interface, and obtaining the target target L2 destination of the second UE from the SCI.

14. A data transmission method for a user equipment (UE)-to-UE relay scenario, **characterized by** comprising:
determining, by a first UE, a sidelink-signaling radio bearer (SL-SRB) to be transmitted; and
transmitting, by the first UE, the SL-SRB to a relay UE through a first sidelink interface (PC5) radio link control (RLC) channel;
wherein the SL-SRB is associated with specific indication information, the specific indication information is used to indicate that the SL-SRB is forwarded to a second UE through a second PC5 RLC channel in the case that the SL-SRB is an end-to-end SL-SRB, or in the case that the first PC5 RLC channel is a dedicated PC5 RLC channel for an end-to-end SL-SRB, the dedicated PC5 RLC channel for the end-to-end SL-SRB is used to indicate that the SL-SRB is forwarded to a second UE through a second PC5 RLC channel in the case that the SL-SRB is an end-to-end SL-SRB;
wherein the first UE is any of two terminals that need to establish an end-to-end connection through the relay UE, the second UE is an end-to-end target communication counterpart of the first UE, and the relay UE is a terminal that supports a UE-to-UE relay (U2U relay) function.

15. The method according to claim 14, **characterized in that** the SL-SRB is used for carrying a PC5-signaling (PC5-S) and/or a PC5-radio resource control (RRC) signaling.

16. The method according to claim 15, **characterized in that** the PC5-RRC signaling is an end-to-end signaling transmitted between the first UE and the second UE after the end-to-end connection between the first UE and the second UE is established and before the receiving or transmitting of a PC5-RRC reconfiguration message is completed;
the PC5-RRC reconfiguration message is a PC5-RRC signaling used for configuring a first mapping relationship between a first PC5 RLC channel and a second PC5 RLC channel after the end-to-end connection between the first UE and the second UE is established;
the first PC5 RLC channel comprises a PC5 RLC channel between the relay UE and the first UE, and the second PC5 RLC channel comprises a PC5 RLC channel between the relay UE and the second UE; and
the first mapping relationship is one-to-one mapping, many-to-one mapping, or many-to-many mapping.

17. The method according to claim 14, **characterized in that** the specific indication information comprises any one of the following:
indication information carried in a media access control (MAC) subheader corresponding to a MAC sub-protocol data unit (subPDU) carrying the SL-SRB;
indication information carried in a media access control (MAC) sub-protocol data unit (subPDU) carrying the SL-SRB;
indication information carried in a sidelink shared channel (SL-SCH) subheader corresponding to a media access control (MAC) protocol data unit (PDU) carrying the SL-SRB; or
indication information carried in sidelink control information (SCI) transmitted through a sidelink interface between the relay UE and the first UE, or through a sidelink interface between the relay UE and the second UE.

18. The method according to claim 17, **characterized in that** the indication information comprises at least one of the following:
information used to indicate that data corresponding to the SL-SRB needs to be forwarded;
information used to indicate that data corresponding to the SL-SRB is data corresponding to the end-to-end SL-SRB;
information used to indicate that the data corresponding to the SL-SRB needs to be processed by an adaptation layer.

19. The method according to claim 14, **characterized in that** in the case that the first PC5 RLC channel is the dedicated PC5 RLC channel for the end-to-end SL-SRB, the method further comprises:
determining, by the relay UE, the dedicated PC5 RLC channel used when the SL-SRB is transmitted at a sidelink interface based on preconfiguration information; or
determining, by the relay UE, the dedicated PC5 RLC channel used when the SL-SRB is transmitted at a sidelink interface based on a protocol agreement; or
determining, by the relay UE itself, and broadcasting the dedicated PC5 RLC channel used when the SL-SRB is transmitted at a sidelink interface;
wherein a number of the dedicated PC5 RLC channels includes one or more.

20. The method according to claim 19, **characterized in that** before transmitting, by the first UE, the SL-SRB to the relay UE through the first PC5 RLC channel, the method further comprises:
transmitting, by the first UE, the data corresponding to the SL-SRB from a packet data convergence protocol (PDCP) layer to an adaptation layer, and after performing at least one of the following processing operations in the adaptation layer, transmitting the data corresponding to the SL-SRB from the adaptation layer to a radio link control (RLC) layer:
adding, by the first UE, an adaptation layer header to the data corresponding to the SL-SRB, wherein the adaptation layer header at least comprises: identifier information of the SL-SRB, and identifier information of the second UE; and
determining, by the first UE, a third mapping relationship between a SL-SRB and a PC5 RLC channel, and in the adaptation layer, performing mapping between the SL-SRB and the PC5 RLC channel based on the third mapping relationship for the SL-SRB;
wherein the third mapping relationship comprises one-to-one mapping, many-to-one mapping, or many-to-many mapping.

21. The method according to claim 20, **characterized in that** determining, by the first UE, the third mapping relationship comprises any of the following:
determining the third mapping relationship based on preconfiguration information;
determining the third mapping relationship based on a protocol agreement;
determining the third mapping relationship by the first UE itself, and notifying the relay UE of the third mapping relationship, wherein the relay UE notifies the second UE;
receiving the third mapping relationship forwarded from the relay UE, wherein the third mapping relationship is determined by the second UE itself; or
receiving the third mapping relationship determined by the relay UE itself and notified by the relay UE through a sidelink interface.

22. The method according to claim 14, **characterized in that** before transmitting, by the first UE, the SL-SRB to the relay UE through the first PC5 RLC channel, the method further comprises:
receiving, by the first UE, the SL-SRB from a higher layer and determining that the SL-SRB is an end-to-end SL-SRB through at least one of the following:
determining that the SL-SRB is an end-to-end SL-SRB in the case that a PC5-signaling (PC5-S) and/or a PC5-radio resource control (RRC) signaling carries first indication information, wherein the first indication information is used to indicate that the PC5-S or PC5-RRC signaling is an end-to-end signaling between the first UE and the second UE;
determining that the SL-SRB is an end-to-end SL-SRB in the case that a target layer 2 (L2) destination indicated by a PC5-signaling (PC5-S) and/or a PC5-radio resource control (RRC) signaling issued by a higher layer is an end-to-end target L2 destination; or
determining that the SL-SRB is an end-to-end SL-SRB in the case that a PC5-signaling (PC5-S) and/or a PC5-radio resource control (RRC) signaling issued by a higher layer carries two target layer 2 (L2) destinations, one target L2 destination is an end-to-end target L2 destination, and the other target L2 destination is a target L2 destination used when performing data transmission between the first UE and the relay UE.

23. The method according to claim 14, **characterized in that** in the case that the first UE transmits the SL-SRB to a relay UE through a first PC5 RLC channel, the first target layer 2 (L2) destination used by the first UE for performing data transmission through the first PC5 RLC channel is a target L2 destination of the relay UE.

24. The method according to claim 23, **characterized in that** transmitting, by the first UE, the target L2 destination of the second UE to the relay UE through a sidelink interface comprises any of the following:
transmitting, by the first UE, a media access control (MAC) protocol data unit (PDU) to the relay UE through a sidelink interface, wherein a sidelink shared channel (SL-SCH) subheader of the MAC PDU carries the target L2 destination of the second UE;
transmitting, by the first UE, a media access control (MAC) protocol data unit (PDU) to the relay UE through a sidelink interface, wherein a MAC sub-PDU subheader of the MAC PDU carries the target L2 destination of the second UE;
transmitting, by the first UE, a separate PC5-radio resource control (RRC) signaling or a media access control layer (MAC) control element (CE) to the relay UE through a sidelink interface, wherein the separate PC5-RRC signaling or the MAC CE carries the target L2 destination of the second UE; or
transmitting, by the first UE, sidelink control information (SCI) indication to the relay UE through a sidelink interface, wherein the SCI comprises the target L2 destination of the second UE.

25. A data transmission apparatus, **characterized by** comprising: a processor, a memory and a transceiver;
the transceiver is used for receiving and transmitting data under control of the processor;
the memory is used for storing a computer instruction; and
the processor is used for reading and executing the computer instruction stored in the memory to perform the following procedures:
receiving a sidelink-signaling radio bearer (SL-SRB) transmitted from a first user equipment (UE) through a first sidelink interface (PC5) radio link control (RLC) channel;
forwarding the SL-SRB to a second UE through a second PC5 RLC channel in the case that specific indication information associated with the SL-SRB indicates that the SL-SRB is an end-to-end SL-SRB or in the case that the first PC5 RLC channel is a dedicated PC5 RLC channel for an end-to-end SL-SRB;
wherein the first UE is any of two terminals that need to establish an end-to-end connection through the relay UE, the second UE is an end-to-end target communication counterpart of the first UE, and the relay UE is a terminal that supports a UE-to-UE relay (U2U relay) function.

26. The apparatus according to claim 1, **characterized in that** the SL-SRB is used for carrying a PC5-signaling (PC5-S) and/or a PC5-radio resource control (RRC) signaling.

27. The apparatus according to claim 26, **characterized in that** the PC5-RRC signaling is an end-to-end signaling transmitted between the first UE and the second UE after the end-to-end connection between the first UE and the second UE is established and before the receiving or transmitting of a PC5-RRC reconfiguration message is completed;
the PC5-RRC reconfiguration message is a PC5-RRC signaling used for configuring a first mapping relationship between a first PC5 RLC channel and a second PC5 RLC channel after the end-to-end connection between the first UE and the second UE is established;
the first PC5 RLC channel comprises a PC5 RLC channel between the relay UE and the first UE, and the second PC5 RLC channel comprises a PC5 RLC channel between the relay UE and the second UE; and
the first mapping relationship is one-to-one mapping, many-to-one mapping, or many-to-many mapping.

28. The apparatus according to claim 25, **characterized in that** the specific indication information comprises any one of the following:
indication information carried in a media access control (MAC) subheader corresponding to a MAC sub-protocol data unit (subPDU) carrying the SL-SRB;
indication information carried in a media access control (MAC) sub-protocol data unit (subPDU) carrying the SL-SRB;
indication information carried in a sidelink shared channel (SL-SCH) subheader corresponding to a media access control (MAC) protocol data unit (PDU) carrying the SL-SRB; or
indication information carried in sidelink control information (SCI) transmitted through a sidelink interface between the relay UE and the first UE, or through a sidelink interface between the relay UE and the second UE.

29. The apparatus according to claim 28, **characterized in that** the indication information comprises any one of the following:
information used to indicate that data corresponding to the SL-SRB needs to be forwarded;
information used to indicate that data corresponding to the SL-SRB is data corresponding to the end-to-end SL-SRB;
information used to indicate that the data corresponding to the SL-SRB needs to be processed by an adaptation layer.

30. The apparatus according to claim 25, **characterized in that** in the case that the first PC5 RLC channel is the dedicated PC5 RLC channel for the end-to-end SL-SRB, the processor is further used for:
determining the dedicated PC5 RLC channel used when the SL-SRB is transmitted at a sidelink interface based on preconfiguration information; or
determining the dedicated PC5 RLC channel used when the SL-SRB is transmitted at a sidelink interface based on a protocol agreement; or
determining by itself and broadcasting the dedicated PC5 RLC channel used when the SL-SRB is transmitted at a sidelink interface;
wherein a number of the dedicated PC5 RLC channels includes one or more.

31. The apparatus according to claim 25, **characterized in that** the processor is further used for:
performing adaptation layer processing on the data corresponding to the SL-SRB.

32. The apparatus according to claim 31, **characterized in that** the processor is used for:
after receiving the data corresponding to the SL-SRB from a RLC layer of a sidelink interface between the relay UE and the first UE, submitting the data corresponding to the SL-SRB to an adaptation layer, and after performing at least one of the following processing operations in the adaptation layer, submitting the data corresponding to the SL-SRB to a RLC layer of a sidelink interface between the relay UE and the second UE:
removing an original adaptation layer header for the data corresponding to the SL-SRB, and then adding a new adaptation layer header, wherein the new adaptation layer header at least comprises: identifier information of the SL-SRB, and identifier information of the second UE; and
determining a second mapping relationship between a first PC5 RLC channel and a second PC5 RLC channel, and in the adaptation layer, performing mapping between the first PC5 RLC channel and the second PC5 RLC channel based on the second mapping relationship for the SL-SRB;
wherein the second mapping relationship is one-to-one mapping, many-to-one mapping, or many-to-many mapping.

33. The apparatus according to claim 25, **characterized in that** the processor is further used for:
determining a second mapping relationship between the first PC5 RLC channel and the second PC5 RLC channel, and in a radio link control (RLC) layer, performing mapping between the first PC5 RLC channel and the second PC5 RLC channel based on the second mapping relationship for the SL-SRB;
wherein the second mapping relationship is one-to-one mapping, many-to-one mapping, or many-to-many mapping.

34. The apparatus according to claim 32 or 33, **characterized in that** the processor is used for: determining the second mapping relationship by any of the following:
determining the second mapping relationship based on preconfiguration information;
determining the second mapping relationship based on a protocol agreement;
determining the second mapping relationship based on a notification of the first UE, and notifying the second UE of the second mapping relationship;
determining the second mapping relationship based on a notification of the second UE, and notifying the first UE of the second mapping relationship; or
determining by itself the second mapping relationship, and notifying the first UE and/or the second UE of the second mapping relationship through a sidelink interface.

35. The apparatus according to claim 25, **characterized in that** in the case that the SL-SRB transmitted from the first UE is received through the first PC5 RLC channel, the first target layer 2 (L2) destination used by the first UE is a target L2 destination of the relay UE; and
in the case that the SL-SRB is forwarded to the second UE through the second PC5 RLC channel, the second target L2 destination used by the relay UE is a target L2 destination of the second UE.

36. The apparatus according to claim 35, **characterized in that** the processor is used for obtaining the target L2 destination of the second UE by any of the following:
receiving, by a media access control (MAC) layer of the relay UE, indication information transmitted from a higher layer, wherein the indication information carries the target L2 destination of the second UE; or
receiving the target L2 destination of the second UE transmitted from the first UE through a sidelink interface.

37. The apparatus according to claim 36, **characterized in that** the processor is used for:
receiving the target L2 destination of the second UE transmitted from the first UE through the sidelink comprising any one of the following:
receiving a media access control (MAC) protocol data unit (PDU) transmitted from the first UE through a sidelink interface, and obtaining the target L2 destination of the second UE from a sidelink shared channel (SL-SCH) subheader of the MAC PDU;
receiving a media access control (MAC) protocol data unit (PDU) transmitted from the first UE through a sidelink interface, and obtaining the target L2 destination of the second UE from a MAC sub-PDU of the MAC PDU;
receiving a PC5-radio resource control (RRC) signaling or a media access control layer (MAC) control element (CE) through a sidelink interface, and obtaining the target L2 destination of the second UE from the PC5-RRC signaling or the MAC CE; or
receiving sidelink control information (SCI) indication through a sidelink interface, and obtaining the target target L2 destination of the second UE from the SCI.

38. A data transmission apparatus, **characterized by** comprising: a processor, a memory and a transceiver;
the transceiver is used for receiving and transmitting data under control of the processor;
the memory is used for storing a computer instruction; and
the processor is used for reading and executing the computer instruction stored in the memory to perform the following procedures:
determining a sidelink-signaling radio bearer (SL-SRB) to be transmitted from a first user equipment (UE); and
transmitting the SL-SRB to a relay UE through a first sidelink interface (PC5) radio link control (RLC) channel;
wherein the SL-SRB is associated with specific indication information, the specific indication information is used to indicate that the SL-SRB is forwarded to a second UE through a second PC5 RLC channel in the case that the SL-SRB is an end-to-end SL-SRB, or in the case that the first PC5 RLC channel is a dedicated PC5 RLC channel for an end-to-end SL-SRB, the dedicated PC5 RLC channel for the end-to-end SL-SRB is used to indicate that the SL-SRB is forwarded to a second UE through a second PC5 RLC channel in the case that the SL-SRB is an end-to-end SL-SRB;
wherein the first UE is any of two terminals that need to establish an end-to-end connection through the relay UE, the second UE is an end-to-end target communication counterpart of the first UE, and the relay UE is a terminal that supports a UE-to-UE relay (U2U relay) function.

39. The apparatus according to claim 38, **characterized in that** the SL-SRB is used for carrying a PC5-signaling (PC5-S) and/or a PC5-radio resource control (RRC) signaling.

40. The apparatus according to claim 39, **characterized in that** the PC5-RRC signaling is an end-to-end signaling transmitted between the first UE and the second UE after the end-to-end connection between the first UE and the second UE is established and before the receiving or transmitting of a PC5-RRC reconfiguration message is completed;
the PC5-RRC reconfiguration message is a PC5-RRC signaling used for configuring a first mapping relationship between a first PC5 RLC channel and a second PC5 RLC channel after the end-to-end connection between the first UE and the second UE is established;
the first PC5 RLC channel comprises a PC5 RLC channel between the relay UE and the first UE, and the second PC5 RLC channel comprises a PC5 RLC channel between the relay UE and the second UE; and
the first mapping relationship is one-to-one mapping, many-to-one mapping, or many-to-many mapping.

41. The apparatus according to claim 39, **characterized in that** the specific indication information comprises any one of the following:
indication information carried in a media access control (MAC) subheader corresponding to a MAC sub-protocol data unit (subPDU) carrying the SL-SRB;
indication information carried in a media access control (MAC) sub-protocol data unit (subPDU) carrying the SL-SRB;
indication information carried in a sidelink shared channel (SL-SCH) subheader corresponding to a media access control (MAC) protocol data unit (PDU) carrying the SL-SRB; or
indication information carried in sidelink control information (SCI) transmitted through a sidelink interface between the relay UE and the first UE, or through a sidelink interface between the relay UE and the second UE.

42. The apparatus according to claim 41, **characterized in that** the indication information comprises any one of the following:
information used to indicate that data corresponding to the SL-SRB needs to be forwarded;
information used to indicate that data corresponding to the SL-SRB is data corresponding to the end-to-end SL-SRB;
information used to indicate that the data corresponding to the SL-SRB needs to be processed by an adaptation layer.

43. The apparatus according to claim 38, **characterized in that** in the case that the first PC5 RLC channel is the dedicated PC5 RLC channel for the end-to-end SL-SRB, the processor is further used for:
determining the dedicated PC5 RLC channel used when the SL-SRB is transmitted at a sidelink interface based on preconfiguration information; or
determining the dedicated PC5 RLC channel used when the SL-SRB is transmitted at a sidelink interface based on a protocol agreement; or
determining by itself and broadcasting the dedicated PC5 RLC channel used when the SL-SRB is transmitted at a sidelink interface;
wherein a number of the dedicated PC5 RLC channels includes one or more.

44. The apparatus according to claim 43, **characterized in that** the processor is further used for:
transmitting the data corresponding to the SL-SRB from a packet data convergence protocol (PDCP) layer to an adaptation layer, and after performing at least one of the following processing operations in the adaptation layer, transmitting the data corresponding to the SL-SRB from the adaptation layer to a radio link control (RLC) layer:
adding an adaptation layer header to the data corresponding to the SL-SRB, wherein the adaptation layer header at least comprises: identifier information of the SL-SRB, and identifier information of the second UE; and
determining a third mapping relationship between a SL-SRB and a PC5 RLC channel, and in the adaptation layer, performing mapping between the SL-SRB and the PC5 RLC channel based on the third mapping relationship for the SL-SRB;
wherein the third mapping relationship comprises one-to-one mapping, many-to-one mapping, or many-to-many mapping.

45. The apparatus according to claim 44, **characterized in that** the processor is used for:
determining the third mapping relationship by any of the following:
determining the third mapping relationship based on preconfiguration information;
determining the third mapping relationship based on a protocol agreement;
determining the third mapping relationship by itself, and notifying the relay UE of the third mapping relationship, wherein the relay UE notifies the second UE;
receiving the third mapping relationship forwarded from the relay UE, wherein the third mapping relationship is determined by the second UE itself; or
receiving the third mapping relationship determined by the relay UE itself and notified by the relay UE through a sidelink interface.

46. The apparatus according to claim 38, **characterized in that** the processor is further used for:
receiving the SL-SRB from a higher layer and determining that the SL-SRB is an end-to-end SL-SRB through at least one of the following:
determining that the SL-SRB is an end-to-end SL-SRB in the case that a PC5-signaling (PC5-S) and/or a PC5-radio resource control (RRC) signaling carries first indication information, wherein the first indication information is used to indicate that the PC5-S or PC5-RRC signaling is an end-to-end signaling between the first UE and the second UE;
determining that the SL-SRB is an end-to-end SL-SRB in the case that a target layer 2 (L2) destination indicated by a PC5-signaling (PC5-S) and/or a PC5-radio resource control (RRC) signaling issued by a higher layer is an end-to-end target L2 destination; or
determining that the SL-SRB is an end-to-end SL-SRB in the case that a PC5-signaling (PC5-S) and/or a PC5-radio resource control (RRC) signaling issued by a higher layer carries two target layer 2 (L2) destinations, one target L2 destination is an end-to-end target L2 destination, and the other target L2 destination is a target L2 destination used when performing data transmission between the first UE and the relay UE.

47. The apparatus according to claim 38, **characterized in that** the processor is used for:
determining that the first target layer 2 (L2) destination used by the first UE for performing data transmission through the first PC5 RLC channel is a target L2 destination of the relay UE.

48. The apparatus according to claim 47, **characterized in that** the processor is used for:
transmitting the target L2 destination of the second UE to the relay UE through a sidelink interface by any of the following:
transmitting a media access control (MAC) protocol data unit (PDU) to the relay UE through a sidelink interface, wherein a sidelink shared channel (SL-SCH) subheader of the MAC PDU carries the target L2 destination of the second UE;
transmitting a media access control (MAC) protocol data unit (PDU) to the relay UE through a sidelink interface, wherein a MAC sub-PDU subheader of the MAC PDU carries the target L2 destination of the second UE;
transmitting a separate PC5-radio resource control (RRC) signaling or a media access control layer (MAC) control element (CE) to the relay UE through a sidelink interface, wherein the separate PC5-RRC signaling or the MAC CE carries the target L2 destination of the second UE; or
transmitting sidelink control information (SCI) indication to the relay UE through a sidelink interface, wherein the SCI comprises the target L2 destination of the second UE.

49. A data transmission device for a user equipment (UE)-to-UE relay scenario, **characterized by** comprising:
a receiving unit, used for receiving a sidelink-signaling radio bearer (SL-SRB) transmitted from a first UE through a first sidelink interface (PC5) radio link control (RLC) channel; and
an obtaining unit, used for obtaining specific indication information associated with the SL-SRB; and
a forwarding unit, used for forwarding the SL-SRB to a second UE through a second PC5 RLC channel in the case that the specific indication information associated with the SL-SRB indicates that the SL-SRB is an end-to-end SL-SRB or in the case that the first PC5 RLC channel is a dedicated PC5 RLC channel for an end-to-end SL-SRB;
wherein the first UE is any of two terminals that need to establish an end-to-end connection through the relay UE, the second UE is an end-to-end target communication counterpart of the first UE, and the relay UE is a terminal that supports a UE-to-UE relay (U2U relay) function.

50. The device according to claim 49, **characterized in that** the SL-SRB is used for carrying a PC5-signaling (PC5-S) and/or a PC5-radio resource control (RRC) signaling.

51. The device according to claim 50, **characterized in that** the PC5-RRC signaling is an end-to-end signaling transmitted between the first UE and the second UE after the end-to-end connection between the first UE and the second UE is established and before the receiving or transmitting of a PC5-RRC reconfiguration message is completed;
the PC5-RRC reconfiguration message is a PC5-RRC signaling used for configuring a first mapping relationship between a first PC5 RLC channel and a second PC5 RLC channel after the end-to-end connection between the first UE and the second UE is established;
the first PC5 RLC channel comprises a PC5 RLC channel between the relay UE and the first UE, and the second PC5 RLC channel comprises a PC5 RLC channel between the relay UE and the second UE; and
the first mapping relationship is one-to-one mapping, many-to-one mapping, or many-to-many mapping.

52. The device according to claim 49, **characterized in that** the specific indication information comprises any one of the following:
indication information carried in a media access control (MAC) subheader corresponding to a MAC sub-protocol data unit (subPDU) carrying the SL-SRB;
indication information carried in a media access control (MAC) sub-protocol data unit (subPDU) carrying the SL-SRB;
indication information carried in a sidelink shared channel (SL-SCH) subheader corresponding to a media access control (MAC) protocol data unit (PDU) carrying the SL-SRB; or
indication information carried in sidelink control information (SCI) transmitted through a sidelink interface between the relay UE and the first UE, or through a sidelink interface between the relay UE and the second UE.

53. The device according to claim 52, **characterized in that** the indication information comprises any one of the following:
information used to indicate that data corresponding to the SL-SRB needs to be forwarded;
information used to indicate that data corresponding to the SL-SRB is data corresponding to the end-to-end SL-SRB;
information used to indicate that the data corresponding to the SL-SRB needs to be processed by an adaptation layer.

54. The device according to claim 49, **characterized in that** in the case that the first PC5 RLC channel is the dedicated PC5 RLC channel for the end-to-end SL-SRB, the obtaining unit is further used for:
determining the dedicated PC5 RLC channel used when the SL-SRB is transmitted at a sidelink interface based on preconfiguration information; or
determining the dedicated PC5 RLC channel used when the SL-SRB is transmitted at a sidelink interface based on a protocol agreement; or
determining by itself and broadcasting the dedicated PC5 RLC channel used when the SL-SRB is transmitted at a sidelink interface;
wherein a number of the dedicated PC5 RLC channels includes one or more.

55. The device according to claim 49, **characterized in that** the forwarding unit is further used for:
performing adaptation layer processing on the data corresponding to the SL-SRB.

56. The device according to claim 49, **characterized in that** the forwarding unit is used for:
after receiving the data corresponding to the SL-SRB from a RLC layer of a sidelink interface between the relay UE and the first UE, submitting the data corresponding to the SL-SRB to an adaptation layer, and after performing at least one of the following processing operations in the adaptation layer, submitting the data corresponding to the SL-SRB to a RLC layer of a sidelink interface between the relay UE and the second UE:
removing an original adaptation layer header for the data corresponding to the SL-SRB, and then adding a new adaptation layer header, wherein the new adaptation layer header at least comprises: identifier information of the SL-SRB, and identifier information of the second UE; and
determining a second mapping relationship between a first PC5 RLC channel and a second PC5 RLC channel, and in the adaptation layer, performing mapping between the first PC5 RLC channel and the second PC5 RLC channel based on the second mapping relationship for the SL-SRB;
wherein the second mapping relationship is one-to-one mapping, many-to-one mapping, or many-to-many mapping.

57. The device according to claim 49, **characterized in that** the forwarding unit is further used for:
determining a second mapping relationship between the first PC5 RLC channel and the second PC5 RLC channel, and in a radio link control (RLC) layer, performing mapping between the first PC5 RLC channel and the second PC5 RLC channel based on the second mapping relationship for the SL-SRB;
wherein the second mapping relationship is one-to-one mapping, many-to-one mapping, or many-to-many mapping.

58. The device according to claim 56 or 57, **characterized in that** the forwarding unit is used for:
determining the second mapping relationship by any of the following:
determining the second mapping relationship based on preconfiguration information;
determining the second mapping relationship based on a protocol agreement;
determining the second mapping relationship based on a notification of the first UE, and notifying the second UE of the second mapping relationship;
determining the second mapping relationship based on a notification of the second UE, and notifying the first UE of the second mapping relationship; or
determining by itself the second mapping relationship, and notifying the first UE and/or the second UE of the second mapping relationship through a sidelink interface.

59. The device according to claim 49, **characterized in that** in the case that the SL-SRB transmitted from the first UE is received through the first PC5 RLC channel, the first target layer 2 (L2) destination used by the first UE is a target L2 destination of the relay UE; and
in the case that the SL-SRB is forwarded to the second UE through the second PC5 RLC channel, the second target L2 destination used by the relay UE is a target L2 destination of the second UE.

60. The device according to claim 59, **characterized in that** the forwarding unit is used for:
obtaining the target L2 destination of the second UE by any of the following:
receiving, by a media access control (MAC) layer of the relay UE, indication information transmitted from a higher layer, wherein the indication information carries the target L2 destination of the second UE; or
receiving the target L2 destination of the second UE transmitted from the first UE through a sidelink interface.

61. The device according to claim 60, **characterized in that** the forwarding unit is used for:
receiving the target L2 destination of the second UE transmitted from the first UE through the sidelink comprising any one of the following:
receiving a media access control (MAC) protocol data unit (PDU) transmitted from the first UE through a sidelink interface, and obtaining the target L2 destination of the second UE from a sidelink shared channel (SL-SCH) subheader of the MAC PDU;
receiving a media access control (MAC) protocol data unit (PDU) transmitted from the first UE through a sidelink interface, and obtaining the target L2 destination of the second UE from a MAC sub-PDU of the MAC PDU;
receiving a PC5-radio resource control (RRC) signaling or a media access control layer (MAC) control element (CE) through a sidelink interface, and obtaining the target L2 destination of the second UE from the PC5-RRC signaling or the MAC CE;
receiving sidelink control information (SCI) indication through a sidelink interface, and obtaining the target target L2 destination of the second UE from the SCI.

62. A data transmission device for a user equipment (UE)-to-UE relay scenario, **characterized by** comprising:
a determining unit, used for determining a sidelink-signaling radio bearer (SL-SRB) to be transmitted by a first UE; and
a transmitting unit, used for transmitting the SL-SRB to a relay UE through a first sidelink interface (PC5) radio link control (RLC) channel;
wherein the SL-SRB is associated with specific indication information, the specific indication information is used for indicating that the SL-SRB is forwarded to a second UE through a second PC5 RLC channel in the case that the SL-SRB is an end-to-end SL-SRB, or in the case that the first PC5 RLC channel is a dedicated PC5 RLC channel for an end-to-end SL-SRB, the dedicated PC5 RLC channel for the end-to-end SL-SRB is used for indicating that the SL-SRB is forwarded to a second UE through a second PC5 RLC channel in the case that the SL-SRB is an end-to-end SL-SRB;
wherein the first UE is any of two terminals that need to establish an end-to-end connection through the relay UE, the second UE is an end-to-end target communication counterpart of the first UE, and the relay UE is a terminal that supports a UE-to-UE relay (U2U relay) function.

63. The device according to claim 62, **characterized in that** the SL-SRB is used for carrying a PC5-signaling (PC5-S) and/or a PC5-radio resource control (RRC) signaling.

64. The device according to claim 63, **characterized in that** the PC5-RRC signaling is an end-to-end signaling transmitted between the first UE and the second UE after the end-to-end connection between the first UE and the second UE is established and before the receiving or transmitting of a PC5-RRC reconfiguration message is completed;
the PC5-RRC reconfiguration message is a PC5-RRC signaling used for configuring a first mapping relationship between a first PC5 RLC channel and a second PC5 RLC channel after the end-to-end connection between the first UE and the second UE is established;
the first PC5 RLC channel comprises a PC5 RLC channel between the relay UE and the first UE, and the second PC5 RLC channel comprises a PC5 RLC channel between the relay UE and the second UE; and
the first mapping relationship is one-to-one mapping, many-to-one mapping, or many-to-many mapping.

65. The device according to claim 62, **characterized in that** the specific indication information comprises any one of the following:
indication information carried in a media access control (MAC) subheader corresponding to a MAC sub-protocol data unit (subPDU) carrying the SL-SRB;
indication information carried in a media access control (MAC) sub-protocol data unit (subPDU) carrying the SL-SRB;
indication information carried in a sidelink shared channel (SL-SCH) subheader corresponding to a media access control (MAC) protocol data unit (PDU) carrying the SL-SRB; or
indication information carried in sidelink control information (SCI) transmitted through a sidelink interface between the relay UE and the first UE, or through a sidelink interface between the relay UE and the second UE.

66. The device according to claim 65, **characterized in that** the indication information comprises any one of the following:
information used to indicate that data corresponding to the SL-SRB needs to be forwarded;
information used to indicate that data corresponding to the SL-SRB is data corresponding to the end-to-end SL-SRB;
information used to indicate that the data corresponding to the SL-SRB needs to be processed by an adaptation layer.

67. The device according to claim 62, **characterized in that** in the case that the first PC5 RLC channel is the dedicated PC5 RLC channel for the end-to-end SL-SRB, the transmitting unit is further used for:
determining the dedicated PC5 RLC channel used when the SL-SRB is transmitted at a sidelink interface based on preconfiguration information; or
determining the dedicated PC5 RLC channel used when the SL-SRB is transmitted at a sidelink interface based on a protocol agreement; or
determining by itself and broadcasting the dedicated PC5 RLC channel used when the SL-SRB is transmitted at a sidelink interface;
wherein a number of the dedicated PC5 RLC channels includes one or more.

68. The device according to claim 67, **characterized in that** the transmitting unit is further used for:
transmitting the data corresponding to the SL-SRB from a packet data convergence protocol (PDCP) layer to an adaptation layer, and after performing at least one of the following processing operations in the adaptation layer, transmitting the data corresponding to the SL-SRB from the adaptation layer to a radio link control (RLC) layer:
adding an adaptation layer header to the data corresponding to the SL-SRB, wherein the adaptation layer header at least comprises: identifier information of the SL-SRB, and identifier information of the second UE; and
determining a third mapping relationship between a SL-SRB and a PC5 RLC channel, and in the adaptation layer, performing mapping between the SL-SRB and the PC5 RLC channel based on the third mapping relationship for the SL-SRB;
wherein the third mapping relationship comprises one-to-one mapping, many-to-one mapping, or many-to-many mapping.

69. The device according to claim 68, **characterized in that** the transmitting unit is used for:
determining the third mapping relationship by any of the following:
determining the third mapping relationship based on preconfiguration information;
determining the third mapping relationship based on a protocol agreement;
determining the third mapping relationship by itself, and notifying the relay UE of the third mapping relationship, wherein the relay UE notifies the second UE;
receiving the third mapping relationship forwarded from the relay UE, wherein the third mapping relationship is determined by the second UE itself; or
receiving the third mapping relationship determined by the relay UE itself and notified by the relay UE through a sidelink interface.

70. The device according to claim 62, **characterized in that** the transmitting unit is further used for:
receiving the SL-SRB from a higher layer and determining that the SL-SRB is an end-to-end SL-SRB through at least one of the following:
determining that the SL-SRB is an end-to-end SL-SRB in the case that a PC5-signaling (PC5-S) and/or a PC5-radio resource control (RRC) signaling carries first indication information, wherein the first indication information is used to indicate that the PC5-S or PC5-RRC signaling is an end-to-end signaling between the first UE and the second UE;
determining that the SL-SRB is an end-to-end SL-SRB in the case that a target layer 2 (L2) destination indicated by a PC5-signaling (PC5-S) and/or a PC5-radio resource control (RRC) signaling issued by a higher layer is an end-to-end target L2 destination; or
determining that the SL-SRB is an end-to-end SL-SRB in the case that a PC5-signaling (PC5-S) and/or a PC5-radio resource control (RRC) signaling issued by a higher layer carries two target layer 2 (L2) destinations, one target L2 destination is an end-to-end target L2 destination, and the other target L2 destination is a target L2 destination used when performing data transmission between the first UE and the relay UE.

71. The device according to claim 62, **characterized in that** in the case that the SL-SRB is transmitted to a relay UE through a first PC5 RLC channel, the first target layer 2 (L2) destination used for performing data transmission through the first PC5 RLC channel is a target L2 destination of the relay UE.

72. The device according to claim 71, **characterized in that** the transmitting unit is used for:
transmitting the target L2 destination of the second UE to the relay UE through a sidelink interface by any of the following:
transmitting a media access control (MAC) protocol data unit (PDU) to the relay UE through a sidelink interface, wherein a sidelink shared channel (SL-SCH) subheader of the MAC PDU carries the target L2 destination of the second UE;
transmitting a media access control (MAC) protocol data unit (PDU) to the relay UE through a sidelink interface, wherein a MAC sub-PDU subheader of the MAC PDU carries the target L2 destination of the second UE;
transmitting a separate PC5-radio resource control (RRC) signaling or a media access control layer (MAC) control element (CE) to the relay UE through a sidelink interface, wherein the separate PC5-RRC signaling or the MAC CE carries the target L2 destination of the second UE; or
transmitting sidelink control information (SCI) indication through a sidelink interface, wherein the SCI comprises the target L2 destination of the second UE.

73. A computer-readable storage medium, **characterized in that** the computer-readable storage medium stores a computer-executable instruction, the computer-executable instruction is used to cause a computer to perform a method according to any of claims 1 to 24.

74. A computer program product, **characterized in that** the computer program product, when called by a computer, causes the computer to perform a method according to any of claims 1 to 24.
